(19) Europäisches Patentamt European Patent Office Office européen des brevets

(11) **EP 3 627 967 B1**

(12) **EUROPEAN PATENT SPECIFICATION**

(45) Date of publication and mention of the grant of the patent:
**16.07.2025 Bulletin 2025/29**

(21) Application number: **18802012.7**

(22) Date of filing: **10.05.2018**

(51) International Patent Classification (IPC):
*H05B 6/48* (2006.01)     *A23L 5/10* (2016.01)
*A47J 37/12* (2006.01)     *F24C 7/02* (2006.01)
*A23L 5/30* (2016.01)     *H05B 6/46* (2006.01)
*H05B 6/62* (2006.01)

(52) Cooperative Patent Classification (CPC):
**H05B 6/62; A23L 5/13; A23L 5/15; A23L 5/32; A47J 37/12; F24C 7/02; H05B 6/46**

(86) International application number:
**PCT/JP2018/018149**

(87) International publication number:
**WO 2018/212068 (22.11.2018 Gazette 2018/47)**

(54) **COMPONENT CONTROL DEVICE, COMPONENT CONTROL METHOD, TRANSPORT METHOD, COOKING METHOD, AND PROGRAM**

KOMPONENTENSTEUERUNGSVORRICHTUNG, KOMPONENTENSTEUERUNGSVERFAHREN, TRANSPORTVERFAHREN, KOCHVERFAHREN UND PROGRAMM

DISPOSITIF DE COMMANDE DE COMPOSANT, PROCÉDÉ DE COMMANDE DE COMPOSANT, PROCÉDÉ DE TRANSPORT, PROCÉDÉ DE CUISSON ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2017 JP 2017100354**
**28.06.2017 JP 2017126102**
**08.08.2017 JP 2017153591**

(43) Date of publication of application:
**25.03.2020 Bulletin 2020/13**

(73) Proprietor: **Evertron Holdings Pte. Ltd.**
**369977 Singapore (SG)**

(72) Inventor: **TANAKA, Hisao**
**Tokyo 105-0022 (JP)**

(74) Representative: **Hoffmann Eitle**
**Patent- und Rechtsanwälte PartmbB**
**Arabellastraße 30**
**81925 München (DE)**

(56) References cited:
WO-A1-2010/073572     WO-A1-2010/073572
WO-A1-2012/144129     WO-A1-2012/144129
WO-A1-2013/161508     JP-A- 2001 086 967
JP-A- 2001 086 967     JP-A- 2003 142 248
JP-A- 2003 142 248     JP-A- 2006 109 816
JP-A- 2006 109 816     JP-A- 2012 223 119
JP-A- 2012 223 119     JP-A- 2016 129 672
JP-A- 2016 129 672     JP-A- H03 258 218
JP-A- H03 258 218     US-A- 4 333 521
US-A1- 2002 047 009

## Description

Field

The present invention relates to ingredient control devices, ingredient control methods, transportation methods, cooking methods, and programs, and particularly relates to an ingredient control device, an ingredient control method, a transportation method, a cooking method, and a program that can put an object in a good condition. Background

There is known a fryer by means of which food is cooked in a space where electromagnetic waves in a predetermined frequency range generate, so that the eating quality of the cooked food can be made very high (see Patent Literature 1: JP-A-2016-129672). The entire contents of Patent Literature 1 are incorporated herein by reference. According to Patent Literature 1, it is described that when food is cooked in a space where electromagnetic waves in the predetermined frequency range generate, good effects, including prevention of food oil oxidation and degradation and improvement of the eating quality of cooked food, can be obtained.

Citation List

Patent Literature

Literature 1: JP-A-2016-129672

Summary

Technical Problem

However, at the time when the fryer and the cooking method both according to Patent Literature 1 were invented, even the inventor did not quite understand reasons why the above good effects were obtained, and therefore the above technique could not be applied to all kinds of food and had difficulty being applied to things other than food.

The present invention is made to solve the problem above and an object of the present invention is to provide an ingredient control device, an ingredient control method, a transportation method, a cooking method, and a program that can put an object in a good condition. Solution to Problem

To attain the above objective, an ingredient control device (100, 0100, 0400, 10, 4001, 4010) according to a first aspect of the present invention is defined in claim 1.

In the ingredient control device (100, 0100, 0400, 10, 4001, 4010), the vibration generating portion (102, 0101, 0102, 0401, 0402, 3, 4) may include an electrode configured to generate electromagnetic waves, and a water activity of the object may be controlled by generating electromagnetic waves by the electrodes.

In the ingredient control device (100, 0100, 0400, 10, 4001, 4010), electromagnetic waves may be generated by the electrode to increase interfacial polarization between a water phase and another phase of the object and thus decrease an interfacial tension between the water phase and the other phase and bind water in the object into a pearl-chain structure.

The ingredient control device (0100, 0400), wherein the vibration generating portion (102, 0101, 0102, 0401, 0402, 3, 4) may include a pair of vibration generating portions, the ingredient control device (0100, 0400) may further include a first circuit portion (0105, 0405) configured to apply alternating current of a first frequency to a first vibration generating portion (0101, 0401) of the pair of vibration generating portions, and a second circuit portion (0106, 0406) configured to apply alternating current of a second frequency to a second vibration generating portion (0102, 0402) of the pair of vibration generating portions.

The ingredient control device (0400) may further include a frequency controller (0413, 0414) configured to control the first frequency and the second frequency to different frequencies.

In the ingredient control device (0400), the first frequency and the second frequency may be at least 10 kilohertz to at most 150 kilohertz.

The ingredient control device (0400) may further include a phase controller (0415, 0416) configured to control a phase of the alternating current of the first frequency and the alternating current of the second frequency.

The ingredient control device (0100, 0400) may further include a frying tank (1541), and a heating portion (1542) configured to heat the frying tank, in which the vibration generating portions (1501, 1502) may generate electromagnetic waves, and the pair of vibration generating portions may be disposed to form an electromagnetic field in the frying tank.

The ingredient control device (0100, 0400) may further include a food soaking tank (1643) capable of storing edible liquid for soaking food (1661) to allow the edible liquid (1662) to soak into the food and/or to extract an ingredient from the food into the edible liquid, in which the vibration generating portions (1601, 1602) may generate electromagnetic waves, and the pair of vibration generating portions (1601, 1602) may be disposed to form an electromagnetic field in the food soaking tank.

The ingredient control device (0100, 0400) may further include a high-temperature food cooking portion (1744) configured to heat food (1761a, 1761b, 1761c) as the object at high temperature, in which the vibration generating portions (1701, 1702) may generate electromagnetic waves, and the pair of vibration generating portions may be disposed to form an electromagnetic field in the high-temperature food cooking portion.

The ingredient control device (0100, 0400) may further include a room-temperature food cooking portion (1845) in which food (1861) as the object is placed at room temperature, in which the vibration generating portions (1801, 1802) may generate electromagnetic waves, and the pair of vibration generating portions may be disposed to form an electromagnetic field in the room-temperature food cooking portion.

The ingredient control device (0100, 0400) may further include a refrigerated food cooking portion (1946) configured to refrigerate food (1961) as the object, in which the vibration generating portions (1901, 1902) may generate electromagnetic waves, and the pair of vibration generating portions may be disposed to form an electromagnetic field in the refrigerated food cooking portion.

The ingredient control device (0100, 0400) may further include a low-temperature refrigerated food cooking portion (2048) configured to store food (2061) as the object by low-temperature refrigeration, in which the vibration generating portions (2001, 2002) may generate electromagnetic waves, and the pair of vibration generating portions may be disposed to form an electromagnetic field in the low-temperature refrigerated food cooking portion.

The ingredient control device (0100, 0400) may further include a food defrost cooking portion (2149) for defrosting frozen, wherein the vibration generating portions (2101, 2102) may generate electromagnetic waves, and the pair of vibration generating portions may be disposed to form an electromagnetic field in the food defrost cooking portion.

The ingredient control device (0100, 0400) may further include a vapor supply portion (2250) configured to supply water vapor and/or water spray.

The ingredient control device (0100, 0400) may further include a frozen food storing portion (2351) configured to store food as the object by freezing, in which the vibration generating portions (2301, 2302) may generate electromagnetic waves, and the pair of vibration generating portions may be disposed to form an electromagnetic field in the frozen food storing portion.

The ingredient control device (10, 4001, 4010) , wherein the vibration generating portion (102, 0101, 0102, 0401,0402,3,4) may include a pair of vibration generating portions, the ingredient control device (0100,0400) may further include a power source (10) configured to generate alternating current, in which a first vibration generating portion (3) of the pair of vibration generating portions may be coupled to one electrode of the power source, and a second vibration generating portion (4) of the pair of vibration generating portions may be coupled to another electrode of the power source.

In the ingredient control device (10, 4001, 4010), the vibration generating portions (3, 4) may be sheet-like members.

The ingredient control device (10) may further include a temperature controller (6) configured to control ambient temperature.

The ingredient control device (10) may further include a container (11) in which the object is disposed, in which the vibration generating portions (3, 4) may be electrodes configured to generate electromagnetic waves, the container may have a part serving as one electrode of a pair of the electrodes and another part serving as another electrode of the pair of the electrodes, and an insulating member (7) may be installed between the pair of the electrodes to separate the pair of the electrodes from each other.

To attain the above objective, an ingredient control method using an ingredient control device (100, 0100, 0400, 10, 4001, 4010) is defined in claim 21.

In the ingredient control method, the vibration generating portion (102, 0101, 0102, 0401, 0402, 3, 4) may include an electrode configured to generate electromagnetic waves, and a water activity of the object may be controlled by generating electromagnetic waves by the electrode.

In the ingredient control method, electromagnetic waves may be generated by the electrode to increase interfacial polarization between a water phase and another phase of the object to decrease an interfacial tension between the water phase and the other phase and bind water in the object into a pearl-chain structure.

In the ingredient control method, a DC electric field may be applied as an offset electric field to an AC electric field to increase interfacial polarization between a water phase and another phase of the object to decrease an interfacial tension between the water phase and the other phase and bind water in the object into a pearl-chain structure.

In the ingredient control method, the DC electric field of approximately +100 V may be applied as an offset electric field on the water phase side relative to the other phase in the AC electric field to increase interfacial polarization between the water phase and the other phase of the object and thus decrease the interfacial tension between the water phase and the other phase and bind water in the object into a pearl-chain structure.

In the ingredient control method, the electromagnetic waves may be low-frequency waves.

In the ingredient control method, the electromagnetic waves may have a frequency of approximately 10 kHz to approximately 500 kHz.

In the ingredient control method, the water in the object may be divided into bound water and free water, and the free water in the object may be bound in a pearl-chain structure.

In the ingredient control method, wherein the vibration generating portion (102,0101,01021,0401,0402,3,4) may include a pair of vibration generating portions, the vibration generating portions may generate electromagnetic waves, one (0101, 0401) of the pair of vibration generating portions may apply an electromagnetic field of a first frequency to the object, and the other (0102, 0402) of the pair of vibration generating portions may apply an electromagnetic field of a second frequency different from the first frequency to the object.

To attain the above objective, a transportation method using an ingredient control device (10) including a pair of vibration generating portions (3, 4) configured to generate vibrations according to a third aspect of the present invention includes installing an object between the vibration generating portions, and transporting the object while generating vibrations between the vibration generating portions to control an ingredient in the object.

To attain the above objective, a transportation method using an ingredient control device (10) is defined in claim 30 and in claim 31.

To attain the above objective, a cooking method using an ingredient control device (4001, 4010) is defined in claim 32.

In the cooking method, after the ingredient is washed with water, the ingredient may be baked.

In the cooking method, after the ingredient is washed with water, the ingredient may be boiled.

In the cooking method, after the ingredient is washed with water, the ingredient may be steamed.

In the cooking method, the vibration generating portions (3, 4) may generate electromagnetic waves.

In the cooking method, the vibration generating portion (3, 4) may include electrodes configured to generate electromagnetic waves, the oil reservoir may have a part serving as one electrode of a pair of the electrodes and another part serving as the other electrode of a pair of the electrodes, and an insulating member (12) may be installed between the pair of the electrodes to separate the pair of the electrodes from each other.

To attain the above objective, a program for a computer of an ingredient control device (0100, 0400)is defined in claim 38.

Advantageous Effects of Invention

The ingredient control device, the ingredient control method, the transportation method, the cooking method, and the program according to the present invention can put an object in a good condition.

Brief Description of Drawings

These and other aspects, features and advantages of which embodiments of the invention are capable of will be apparent and elucidated from the following description of embodiments of the present invention, reference being made to the accompanying drawings, in which

FIG. 1 is a side view schematically showing a fryer according to an embodiment.

FIG. 2 shows an example of a processing flow in a water control method using the fryer according to the above embodiment.

FIG. 3A is a graph showing measurement results of interfacial tension when an electric field was applied to additive-free fresh food oil with phosphate-buffered saline as a water phase and FIG. 3B is a graph showing measurement results of interfacial tension when an electric field was applied to additive-free fresh food oil with saline as a water phase.

FIG. 4A is a graph showing measurement results of interfacial tension when an electric field was applied to oleic acid-added food oil with phosphate-buffered saline as a water phase and FIG. 4B is a graph showing measurement results of interfacial tension when an electric field was applied to sodium oleate-added food oil with phosphate-buffered saline as a water phase.

FIG. 5 is a graph showing measurement results of interfacial tension when only a DC electric field was applied to sodium oleate-added food oil with phosphate-buffered saline as a water phase.

FIG. 6 is a graph showing measurement results of interfacial tension when only an AC electric field was applied to sodium oleate-added food oil with phosphate-buffered saline as a water phase.

FIG. 7 is a graph showing measurement results of interfacial tension when a DC electric field of +100 V was applied, in an AC electric field, to sodium oleate-added food oil with phosphate-buffered saline as a water phase.

FIG. 8 is a graph showing measurement results of interfacial tension when a DC electric field of -100 V was applied, in an AC electric field, to sodium oleate-added food oil with phosphate-buffered saline as a water phase.

FIG. 9 is a graph showing measurement results of interfacial tension when an electric field was applied to sodium oleate-added food oil with saline as a water phase.

FIG. 10 is a graph showing measurement results of interfacial tension when only an AC electric field was applied to sodium oleate-added food oil with saline as a water phase.

FIG. 11 is a graph showing measurement results of interfacial tension when a DC electric field of +100 V was applied, in an AC electric field, to sodium oleate-added food oil with saline as a water phase.

FIG. 12 is a graph showing measurement results of interfacial tension when a DC electric field of -100 V was applied, in an AC electric field, to sodium oleate-added food oil with saline as a water phase.

FIG. 13 is a graph showing measurement results of interfacial tension when an electric field was applied to additive-free used food oil with phosphate-buffered saline as a water phase.

FIG. 14 is a graph showing measurement results of interfacial tension when an electric field was applied to additive-free used food oil with saline as a water phase.

FIG. 15 is a table showing observation results of W/O emulsions.

FIG. 16 is a schematic view showing the formation of pearl chains.

FIG. 17A is a table showing observation results of water microdroplets of phosphate-buffered saline to which various AC electric fields were applied in additive-free fresh food oil and FIG. 17B is a table showing observation results of water microdroplets of saline under the same conditions.

FIG. 18A is a table showing observation results of water microdroplets of phosphate-buffered saline to which various AC electric fields were applied in sodium oleate-added food oil and FIG. 18B is a table showing observation results of water microdroplets of saline under the same conditions.

FIG. 19 is a diagram showing an example of the functional blocks of a food composition control device in a second embodiment.

FIG. 20 is a circuit diagram showing an example of a pair of antenna function portions.

FIG. 21 is a circuit diagram showing an example of one antenna function portion.

FIG. 22 is a diagram showing an example of the functional blocks of the food composition control device in the second embodiment.

FIG. 23 is a circuit diagram showing an example of the food composition control device in the second embodiment and a diagram showing an example of waveforms of electromagnetic fields.

FIG. 24 is a circuit diagram showing an example of the food composition control device in the second embodiment and a diagram showing an example of waveforms of electromagnetic fields.

FIG. 25 is a circuit diagram showing an example of the food composition control device in the second embodiment and a diagram showing an example of waveforms of electromagnetic fields.

FIG. 26 is a circuit diagram showing an example of the food composition control device in the second embodiment and a diagram showing an example of waveforms of electromagnetic fields.

FIG. 27 is a circuit diagram showing an example of the food composition control device in the second embodiment and a diagram showing an example of waveforms of electromagnetic fields.

FIG. 28A is a schematic diagram showing an example of the arrangement of antennas of a pair of antenna function portions.

FIG. 28B is an image diagram showing an example of the timing of stopping and outputting alternating current output in the food composition control device in the second embodiment.

FIG. 29A is a schematic diagram showing an example of the arrangement of antennas of a pair of antenna function portions.

FIG. 29B is a schematic diagram showing an example of the arrangement of antennas of a pair of antenna function portions.

FIG. 29C is a schematic diagram showing an example of the arrangement of antennas of a pair of antenna function portions.

FIG. 30 is a diagram showing a long-chain fatty acid salt.

FIG. 31 is a schematic diagram showing an example of the configuration of the food composition control device in the second embodiment.

FIG. 32 is a flowchart showing an example of the process flow in the food composition control device in the second embodiment.

FIG. 33A is a conceptual diagram showing an overview of a food composition control device in a third embodiment.

FIG. 33B shows the result of an evaluation test in the third embodiment.

FIG. 33C shows the result of an evaluation test in the third embodiment.

FIG. 34A is a conceptual diagram showing an overview of a food composition control device in a fourth embodiment.

FIG. 34B shows the result of an evaluation test in the fourth embodiment.

FIG. 34C shows the result of an evaluation test in the fourth embodiment.

FIG. 34D shows the result of an evaluation test in the fourth embodiment.

FIG. 34E shows the result of an evaluation test in the fourth embodiment.

FIG. 34F shows the result of an evaluation test in the fourth embodiment.

FIG. 35A is a conceptual diagram showing an overview of a food composition control device in a fifth embodiment.

FIG. 35B shows the result of an evaluation test in the fifth embodiment.

FIG. 35C shows the result of an evaluation test in the fifth embodiment.

FIG. 35D shows the result of an evaluation test in the fifth embodiment.

FIG. 36A is a conceptual diagram showing an overview of a food composition control device in a sixth embodiment.

FIG. 36B shows the result of an evaluation test in the sixth embodiment.

FIG. 36C shows the result of an evaluation test in the sixth embodiment.

FIG. 37A is a conceptual diagram showing an overview of a food composition control device in a seventh embodiment.

FIG. 37B shows the result of an evaluation test in the seventh embodiment.

FIG. 37C shows the result of an evaluation test in the seventh embodiment.

FIG. 38A is a conceptual diagram showing an overview of a food composition control device in an eighth embodiment.

FIG. 38B shows the result of an evaluation test in the eighth embodiment.

FIG. 39A is a conceptual diagram showing an overview of a food composition control device in a ninth embodiment.

FIG. 39B shows the result of an evaluation test in the ninth embodiment.

FIG. 40A is a conceptual diagram showing an overview of a food composition control device in a tenth embodiment.

FIG. 40B shows the result of an evaluation test in the tenth embodiment.

FIG. 41A is a conceptual diagram showing an overview of a food composition control device in an eleventh embodiment.

FIG. 41B shows the result of an evaluation test in the eleventh embodiment.

FIG. 42 is a diagram showing a molecular arrangement adjusting unit and a molecular arrangement adjusting device according to a twelfth embodiment.

FIG. 43 is a diagram showing the arrangement of water molecules of an object in a normal state and the arrangement of water molecules of an object in an electric field produced between a first electrode and a second electrode.

FIG. 44 is a diagram showing an example including a temperature controller in the molecular arrangement adjusting unit in the twelfth embodiment.

FIG. 45 is a diagram showing the molecular arrangement adjusting device in another embodiment.

FIG. 46 is a diagram showing a fryer in a thirteenth embodiment.

FIG. 47 is a diagram showing an ingredient cooking method in the thirteenth embodiment.

FIG. 48 is a diagram showing a fryer in another embodiment.

Description of Embodiments

Hereinafter, the present invention will be described with reference to the drawings. The present invention is not at all limited by the descriptions of the specification and drawings and various modifications and variations thereof can be appropriately made without changing the gist of the invention.

Embodiments of the present invention will be described below. It should be noted that the present invention is not limited by those embodiments and can be carried out in various modes without departing from the invention. The correspondence between the embodiments and claims is as follows. The first embodiment mainly relates to claims 1 and 2 and claims 20 to 26, the second embodiment mainly relates to claims 1 to 6, claim 27, and claim 36, the third embodiment mainly relates to claim 5 and claim 7, the fourth embodiment mainly relates to claim 5 and claim 8, the fifth embodiment mainly relates to claim 5 and claim 9, the sixth embodiment mainly relates to claim 5 and claim 10, the seventh embodiment mainly relates to claim 5 and claim 11, the eighth embodiment mainly relates to claim 5 and claim 12, the ninth embodiment mainly relates to claim 5 and claim 13, the tenth embodiment mainly relates to claim 5 and claim 14, the eleventh embodiment mainly relates to claim 12 and claim 15, the twelfth embodiment mainly relates to claims 16 to 19 and claim 29 and claim 30, and the thirteenth embodiment mainly relates to claims 31 to 35.

<<First Embodiment>>

A fryer according to this embodiment is formed of, for example, an electric field-applicable fryer by means of which food can be cooked in a space where electromagnetic waves in a predetermined frequency range generate, and controls water contained in the food.

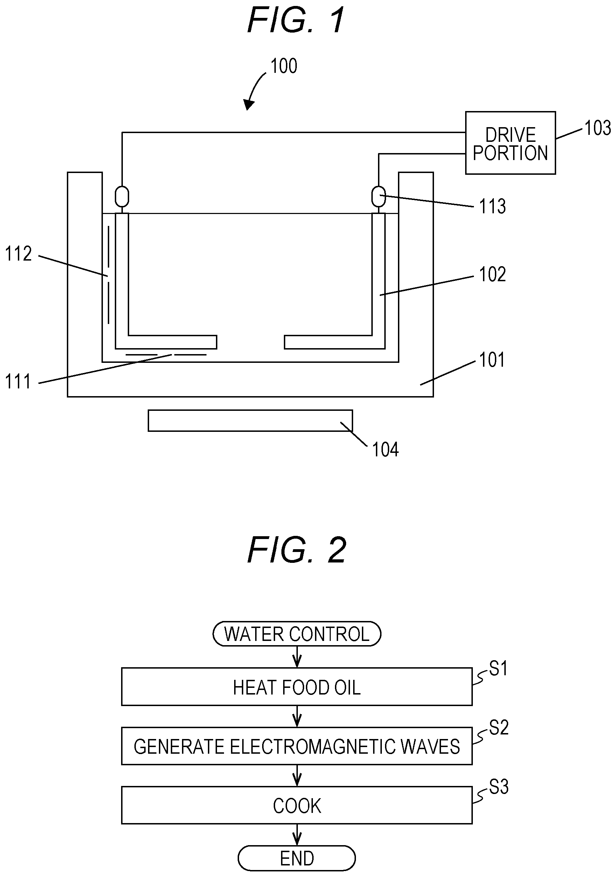

FIG. 1 is a side view schematically showing a fryer 100 according to an embodiment. The fryer 100 essentially includes an oil reservoir 101, a pair of opposed plate antennas 102, a drive portion 103, and a heating portion 104.

The oil reservoir 101 is provided for the purpose of storing food oil therein and cooking food therein. In other words, food is fried by putting the food into the heated food oil in the oil reservoir 101. The oil reservoir 101 is where food is to be Putin and the internal surface of the oil reservoir 101 thus comes into contact with hot oil. Therefore, the oil reservoir 101 is preferably made of a material harmless to humans and less degradable even after a long period of use at high temperatures, for example, stainless steel. The volume and shape of the oil reservoir 101 are arbitrarily selected depending on where the fryer 100 is to be placed, how much food is to be cooked at once by the fryer 100, and/or other requirements.

The pair of opposed plate antennas 102 are placed oppositely and upright in the oil reservoir 101. While electromagnetic waves in a predetermined frequency range are generated between the opposed plate antennas 102, food is cooked in the space where the electromagnetic waves generate. The surfaces of the opposed plate antennas 102 are preferably coated with an insulating material. Through the use of this structure, for example, it can be prevented that an AC voltage supplied to the opposed plate antennas 102 is transmitted to the oil reservoir 101 to shock the user of the fryer 100 and cause failures or the like of devices around the fryer 100.

For example, the opposed plate antennas 102 may each have an approximately L-shaped cross-section, may be each composed of a base portion 111 approximately parallel to the bottom surface of the oil reservoir 101 and a vertical portion 112 approximately perpendicular to the bottom surface of the oil reservoir 101, and may be placed upright with the ends of the base portions 111 facing each other. As seen from the above description of "approximately L-shaped", instead of the configuration where the base portion 111 and the vertical portion 112 are joined at a right angle to form the plate antenna 102 in an L-shape, for example, the plate antenna 102 may be configured so that the cross section of the joint between the base portion 111 and the vertical portion 112 has a round, R-shape.

Furthermore, the base portion 111 and/or the vertical portion 112 of the plate antenna 102 may have multiple holes. The shape of the holes is arbitrary, for example, circular, triangle, rectangle, pentagonal or hexagonal. The size and arrangement of the holes are also arbitrary.

The drive portion 103 is provided for the purpose of driving the opposed plate antennas 102 to generate electromagnetic waves (radio waves) having a frequency of approximately 10 kHz to approximately 500 kHz between the opposed plate antennas 102. The electromagnetic waves formed between the opposed plate antennas 102 are preferably low-frequency waves having a frequency of 30 kHz to 300 kHz and more preferably 50 kHz to 100 kHz. To form electromagnetic waves in a predetermined frequency range between the opposed plate antennas 102, for example, it is conceivable to connect to the opposed plate antennas 102 an oscillator for generating electromagnetic waves of a predetermined frequency. In this case, the drive portion 103 may be electrically connected through terminals 113 to the opposed plate antennas 102.

The heating portion 104 is provided for the purpose of heating food oil stored in the oil reservoir 101 to 120°C to 200°C to cook food. Various methods can be used as the heating method and examples include: a heating method in which a heating coil is housed in a metal pipe and an electric current is passed through the heating coil to generate heat; and a heating method of combusting a gas to generate heat. Although in this embodiment the heating portion 104 is provided outside of the oil reservoir 101, the heating portion 104 may be provided in the oil reservoir 101 or integrally formed with the oil reservoir 101.

FIG. 2 shows an example of a processing flow in a water control method (ingredient control method) using the fryer according to this embodiment. In the cooking method shown in FIG. 2, first, the heating portion 104 of the fryer 100 heats food oil in the oil reservoir 101 to a temperature range of 120°C to 200°C (step S1). Next, the drive portion 103 of the fryer 100 drives the opposed plate antennas 102 to generate electromagnetic waves having a frequency of 50 kHz to 100 kHz in the food oil being heated by the heating portion 104 (step S2). Then, when food to be cooked is put in the food oil, the fryer 100 cooks the food while controlling water contained in the food in the space where electromagnetic waves in the predetermined frequency range generate (step S3). When the cooking is finished, the food is picked up from the food oil.

Example 1

Generally, when food is cooked, water contained in the food turns into water vapor in food oil, so that bumping occurs. In the water control method according to this embodiment, the interfacial tension at the oil-water interface can be decreased by generating electromagnetic waves in the predetermined frequency range. Thus, the water contained in the food is likely to be desorbed from the food and dispersed in the form of water droplets in the food oil. Therefore, even if the water turns into vapor and gasifies in the heated food oil, only minor bumping occurs. By controlling water contained in food in this manner to reduce bumping, good effects, including prevention of oil penetration into the food, can be obtained. Coupled with this, the cooked food has very good eating quality.

To verify the reduction of bumping by the water control method according to this embodiment, an AC electric field in a frequency range of 50 kHz to 100 kHz and/or a DC electric field was applied to measure the interfacial tension at the oil-water interface at room temperature (20°C to 25°C) (Example 1). In this case, the interfacial tension is defined as work (energy) necessary to extend the oil-water interface by 1 $m^2$ and measured by the sessile drop method. In the sessile drop method, the magnitude of the interfacial tension corresponds to the volume (weight) of a water droplet falling from a capillary tube.

In this example, harvest oil was used as the food oil. Furthermore, because the pH of food (such as fish, meat, and vegetables) to be cooked is within a range of 5 to 7, phosphate-buffered saline with a pH of 7.2 to 7.4 and saline with a pH of 5.4 to 5.6 were used as model aqueous solutions for water contained in food.

Measurement of Interfacial Tension in Fresh Food Oil

First, measurement was made of the interfacial tension when an AC electric field of 200 Vpp at 50 kHz was applied to additive-free fresh food oil with phosphate-buffered saline of pH 7.2 to 7.4 as a water phase, and the interfacial tension when a DC electric field of $\pm 100$ V was further applied as an offset electric field on the water phase side relative to the oil phase in the above AC electric field.

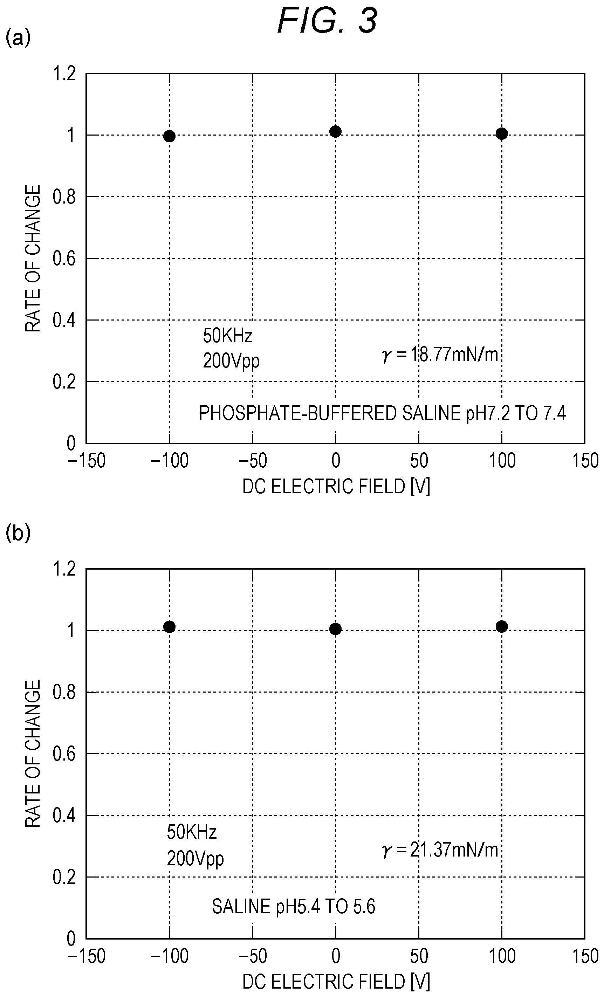

FIG. 3A is a graph showing measurement results of interfacial tension when an electric field was applied to additive-free fresh food oil with phosphate-buffered saline as a water phase. The abscissa axis of the graph in FIG. 3A represents the DC electric field [V] applied as an offset electric field, while the ordinate axis represents the rate of change of the interfacial tension due to the application of the electric field.

As shown in FIG. 3A, in the case where phosphate-buffered saline was used as a water phase and fresh food oil was free from additive, there was substantially no change in interfacial tension found due to the application of the electric field.

Next, because a thermolysate or hydrolysate of the food oil may have been produced, $10^{-3}$ M (= mol/l) oleic acid or an oleic compound, such as $10^{-3}$ M sodium oleate, which are model substances of the thermolysate or hydrolysate, was added to the fresh food oil and measurement was made of the interfacial tension when an AC electric field of 200 Vpp at 50 kHz was applied to the additive-contained food oil with the water phase and the interfacial tension when a DC electric field of $\pm 100$ V was further applied as an offset electric field in the above AC electric field.

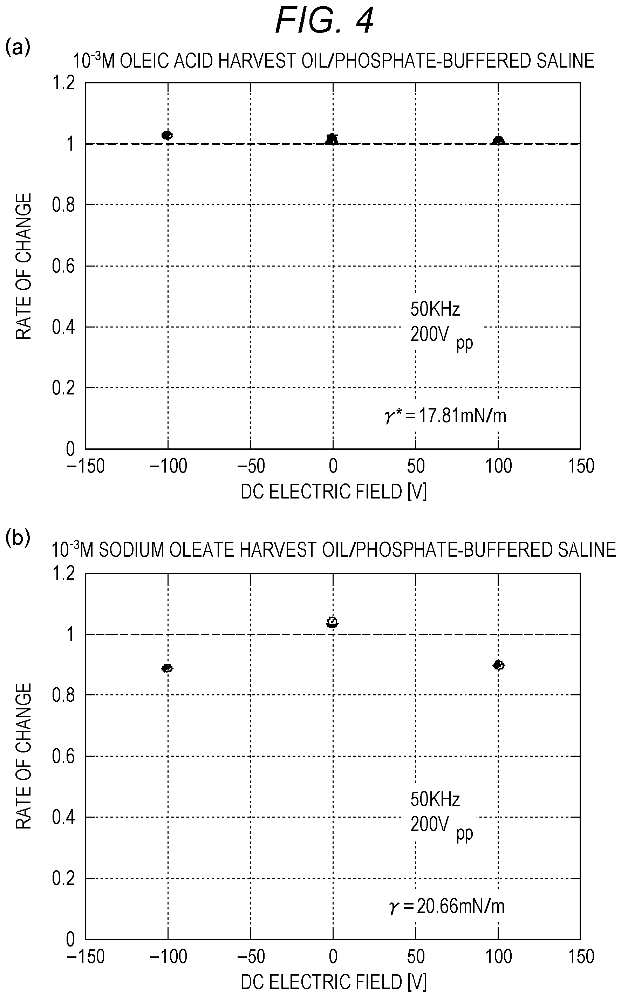

FIG. 4A is a graph showing measurement results of interfacial tension when an electric field was applied to oleic acid-added food oil with phosphate-buffered saline as a water phase and FIG. 4B is a graph showing measurement results of interfacial tension when an electric field was applied to sodium oleate-added food oil with phosphate-buffered saline as a water phase. Like the graph shown in FIG. 3A, the abscissa axes of the graphs in FIGS. 4A and 4B represent the DC electric field [V] applied as an offset electric field, while the ordinate axes represent the rate of change of the interfacial tension due to the application of the electric field.

As shown in FIG. 4A, even in the case where $10^{-3}$ M oleic acid was added to fresh food oil, there was substantially no change in interfacial tension found due to the application of the electric field. On the other hand, as shown in FIG. 4B, in the case where $10^{-3}$ M sodium oleate was added to fresh food oil, there was substantially no change found in interfacial tension when only an AC electric field was applied, but a decrease in interfacial tension was confirmed when a DC electric field of $\pm 100$ V was further applied as an offset electric field in the AC electric field.

As shown in FIG. 3A, in the case where phosphate-buffered saline was used as a water phase and $10^{-3}$ M sodium oleate was added to fresh food oil, measurement was made of interfacial tensions when various electric fields were applied.

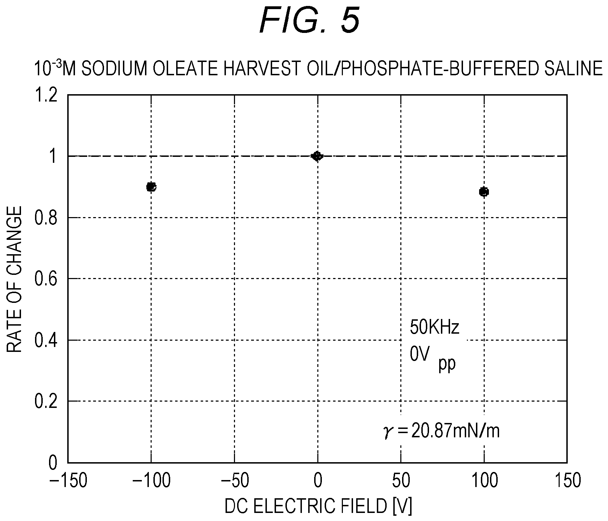

FIG. 5 is a graph showing measurement results of interfacial tension when only a DC electric field was applied to sodium oleate-added food oil with phosphate-buffered saline as a water phase. Like the graphs shown in FIGS. 3B, 4A, and 4B, the abscissa axis of the graph in FIG. 5 represents the DC electric field [V] applied as an offset electric field, while the ordinate axis represents the rate of change of the interfacial tension due to the application of the electric field.

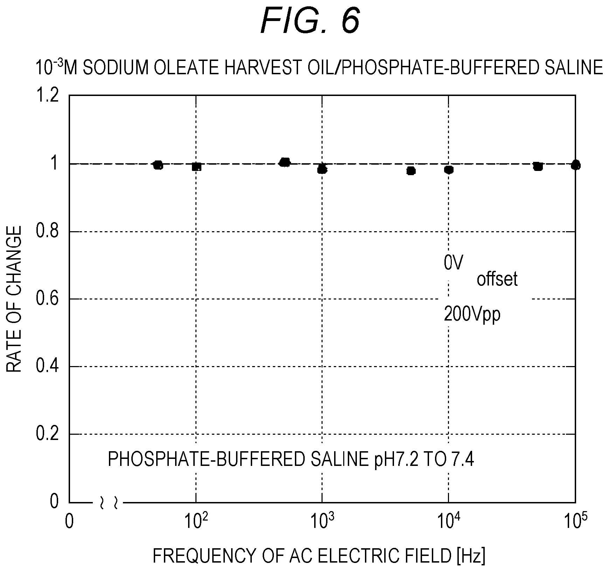

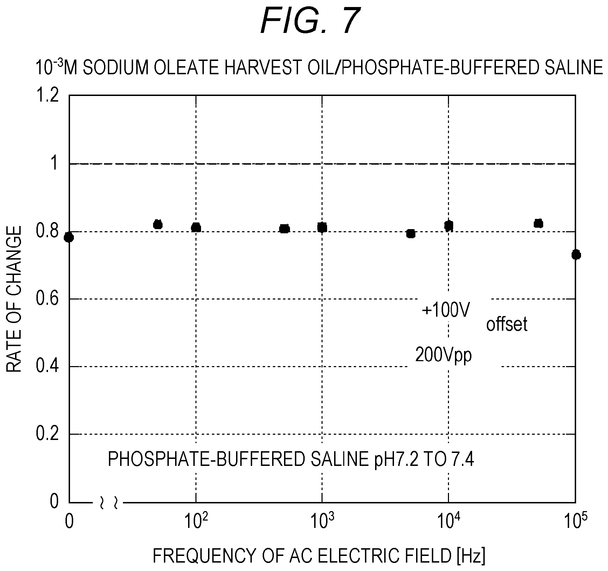

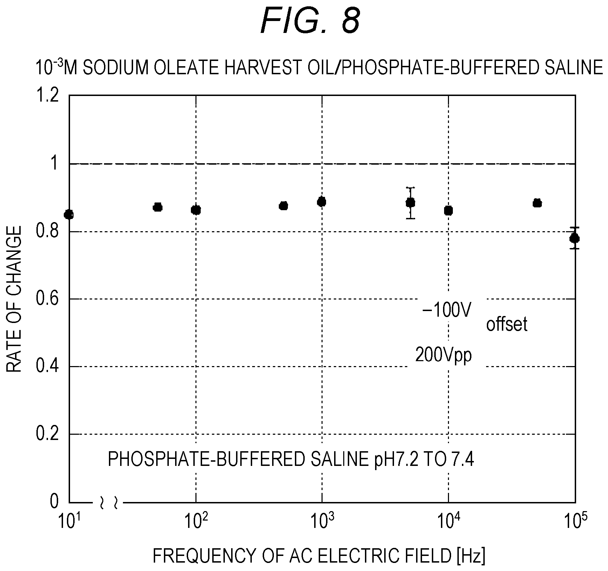

FIG. 6 is a graph showing measurement results of interfacial tension when only an AC electric field was applied to sodium oleate-added food oil with phosphate-buffered saline as a water phase. FIG. 7 is a graph showing measurement results of interfacial tension when a DC electric field of +100 V was applied, in an AC electric field, to sodium oleate-added food oil with phosphate-buffered saline as a water phase. FIG. 8 is a graph showing measurement results of interfacial tension when a DC electric field of -100 V was applied, in an AC electric field, to sodium oleate-added food oil with phosphate-buffered saline as a water phase. The abscissa axes of the graphs shown in FIGS. 6 to 8 represent the frequency [Hz] of the AC electric field, while the ordinate axes represent the rate of change of the interfacial tension due to the application of the electric field.

As shown in FIG. 5, also when only a DC electric field of $\pm 100$ V was applied as an offset electric field without the application of an AC electric field, a decrease in interfacial tension was confirmed, like when a DC electric field of $\pm 100$ V was further applied as an offset electric field in the AC electric field. On the other hand, as shown in FIG. 6, when only an AC electric field was applied and no DC electric field was applied as an offset electric field, there was substantially no change in interfacial tension found even when the frequency of the AC electric field was varied.

However, as shown in FIG. 7, when a DC electric field of +100 V was applied as an offset electric field in the AC electric field of 200 Vpp at 50 Hz to 100 kHz, a decrease of about 20% in interfacial tension was confirmed regardless of the frequency of the AC electric field. Furthermore, as shown in FIG. 8, when a DC electric field of -100 V was applied as an offset electric field in the AC electric field of 200 Vpp at 50 Hz to 100 kHz, a decrease of a little over 10% in interfacial tension was confirmed regardless of the frequency of the AC electric field.

Next, measurement was made of the interfacial tension when an AC electric field of 200 Vpp at 50 kHz was applied to additive-free fresh food oil with saline of pH5.4 to 5.6 as a water phase, and the interfacial tension when a DC electric field of $\pm 100$V was further applied as an offset electric field in the above AC electric field.

FIG. 3B is a graph showing measurement results of interfacial tension when an electric field was applied to additive-free fresh food oil with saline as a water phase. Like the graphs shown in FIGS. 3A, 4A, 4B, and 5, the abscissa axis of the graph in FIG. 3B represents the DC electric field [V] applied as an offset electric field, while the ordinate axis represents the rate of change of the interfacial tension due to the application of the electric field.

As shown in FIG. 3B, also in the case where saline was used as a water phase, like the case where phosphate-buffered saline was used as a water phase, there was substantially no change in interfacial tension found due to the application of the electric field when fresh food oil was free from additive.

Next, measurement was made of the interfacial tension when an AC electric field of 200 Vpp at 50 kHz was applied to saline as a water phase and $10^{-3}$ M sodium oleate-added fresh food oil, and the interfacial tension when a DC electric field of $\pm 100$V was further applied as an offset electric field in the above AC electric field.

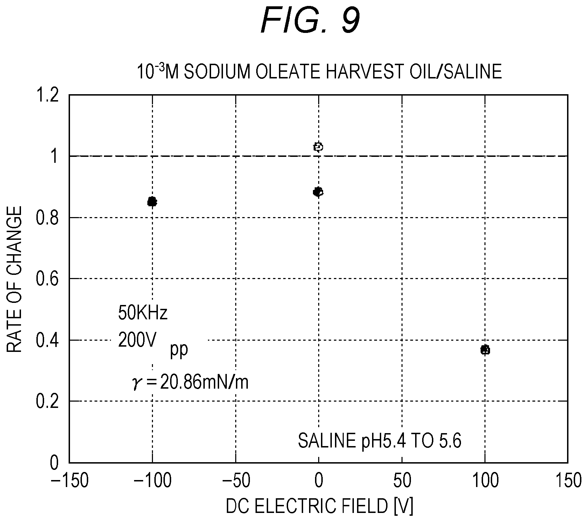

FIG. 9 is a graph showing measurement results of interfacial tension when an electric field was applied to sodium oleate-added food oil with saline as a water phase. Like the graphs shown in FIGS. 3A, 4A, 4B, 5, and 3B, the abscissa axis of the graph in FIG. 9 represents the DC electric field [V] applied as an offset electric field, while the ordinate axis represents the rate of change of the interfacial tension due to the application of the electric field.

As shown in FIG. 4B, in the case where phosphate-buffered saline was used as a water phase, even if $10^{-3}$ M sodium oleate was added to fresh food oil, there was substantially no change in interfacial tension found when only an AC electric field was applied. On the other hand, as shown in FIG. 9, in the case where saline was used as a water phase, it was confirmed that the interfacial tension was decreased a little over 10% by the addition of $10^{-3}$ M sodium oleate to fresh food oil even when only an AC electric field was applied.

When a DC electric field of +100 V was further applied as an offset electric field in the AC electric field, a decrease of over 60% in interfacial tension was confirmed. Furthermore, when a DC electric field of -100 V was further applied as an offset electric field in the AC electric field, a decrease of about 15% in interfacial tension was confirmed.

Next, in the case where saline was used as a water phase and $10^{-3}$ M sodium oleate was added to fresh food oil, measurement was made of interfacial tensions when AC electric fields at various frequencies were applied.

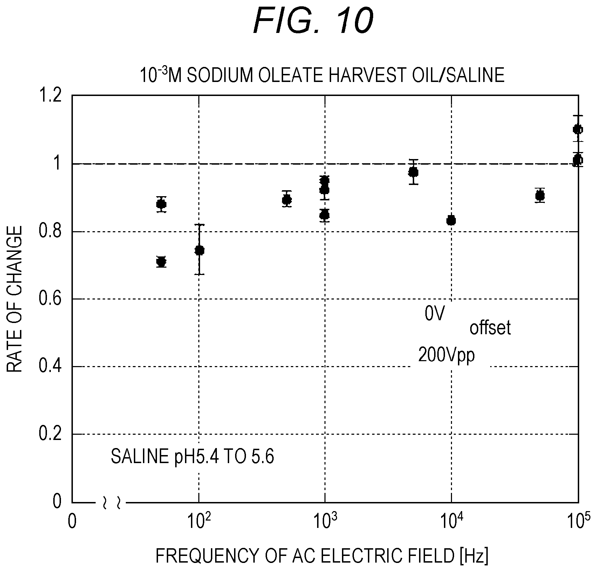

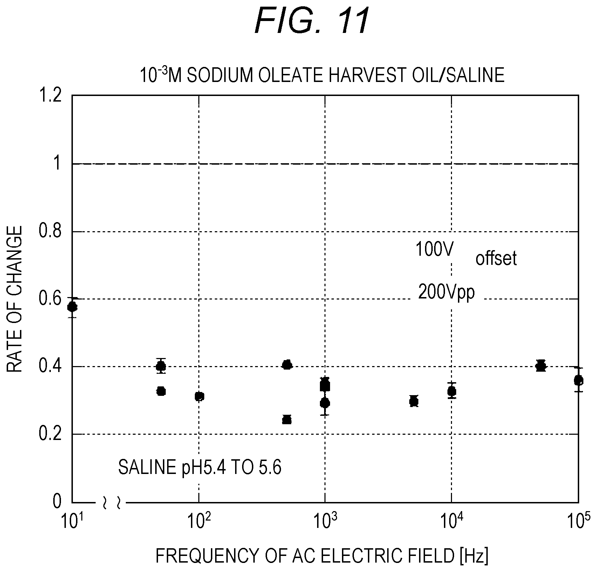

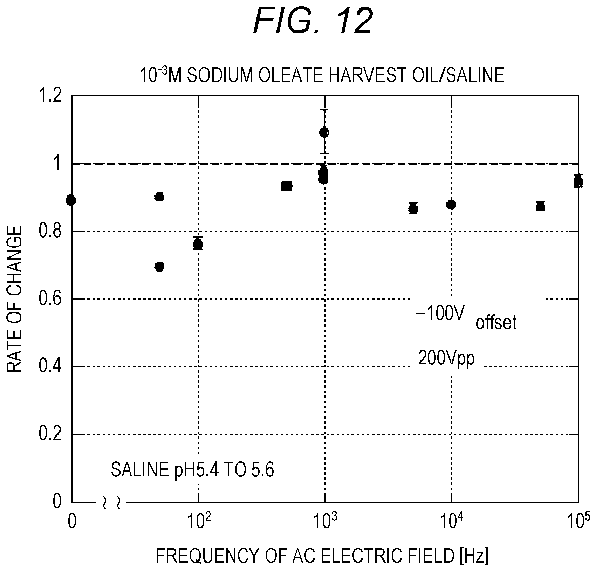

FIG. 10 is a graph showing measurement results of interfacial tension when only an AC electric field was applied to sodium oleate-added food oil with saline as a water phase. FIG. 11 is a graph showing measurement results of interfacial tension when a DC electric field of +100 V was applied, in an AC electric field, to sodium oleate-added food oil with saline as a water phase. FIG. 12 is a graph showing measurement results of interfacial tension when a DC electric field of -100 V was applied, in an AC electric field, to sodium oleate-added food oil with saline as a water phase. Like the graphs shown in FIGS. 6 to 8, the abscissa axes of the graphs in FIGS. 10 to 12 represent the frequency [Hz] of the AC electric field, while the ordinate axes represent the rate of change of the interfacial tension due to the application of the electric field.

As shown in FIG. 10, when only an AC electric field of 200 Vpp at 50 Hz to 100 kHz and 200 Vpp was applied and no DC electric field was applied as an offset electric field, the rate of decrease in interfacial tension tends to increase with decreasing frequency of the AC electric field although variations in interfacial tension value were found.

On the other hand, as shown in FIG. 11, when a DC electric field of +100 V was further applied as an offset electric field in the AC electric field, decreases of over 60% in interfacial tension were confirmed and the interfacial tension reached a minimum in the vicinity of 1 kHz. Furthermore, as shown in FIG. 12, when a DC electric field of -100 V was further applied as an offset electric field in the AC electric field, decreases of about 15% in interfacial tension were confirmed although variations in the rate of decrease in interfacial tension value were found, and the decrease in interfacial tension tends to be suppressed in the vicinity of 1 kHz.

The above measurement results of the interfacial tensions at the oil-water interfaces will be summarized as follows:

A as shown in FIG. 4A, even in the case where $10^{-3}$ M oleic acid was added to fresh food oil, there was substantially no change in interfacial tension found due to the application of the electric field;

B on the other hand, as shown in FIGS. 4B, 5 to 8, and 9 to 12, in the case where $10^{-3}$ M sodium oleate was added to fresh food oil, a decrease in interfacial tension was confirmed when an electric field was applied, and the rate of decrease in interfacial tension significantly depended on the pH of the water phase;

C as shown in FIGS. 4B and 5 to 8, in the case where phosphate-buffered saline of pH 7.2 to 7.4 was used as a water phase, there was no decrease in interfacial tension found when only an AC electric field was applied, while a decrease in interfacial tension was confirmed when a DC electric field was applied;

D on the other hand, as shown in FIGS. 9 to 12, in the case where saline of pH 5.4 to 5.6 was used as a water phase, a decrease in interfacial tension was confirmed even when only an AC electric field was applied and the rate of decrease in interfacial tension tends to increase with decreasing frequency of the AC electric field; and

E furthermore, as shown in FIG. 11, in the case where saline of pH 5.4 to 5.6 was used as a water phase, a decrease of over 60% in interfacial tension was confirmed when a DC electric field of +100 V was applied as an offset electric field in an AC electric field, while, as shown in FIG. 12, the decrease in interfacial tension was only about 15% when a DC electric field of -100 V was applied as an offset electric field in the AC electric field.

It can be seen from the above measurement results that the lower the pH of water contained in food, the higher the rate of decrease in interfacial tension at the oil-water interface and the more bumping can be reduced. Measurement of Interfacial Tension in Used Food Oil

Next, in the case where no additive was added to food oil used by the fryer 100, measurement was made of the interfacial tension when an AC electric field of 200 Vpp at 50 kHz was applied and the interfacial tension when a DC electric field of $\pm$100 V was further applied as an offset electric field on the water phase side relative to the oil phase in the above AC electric field.

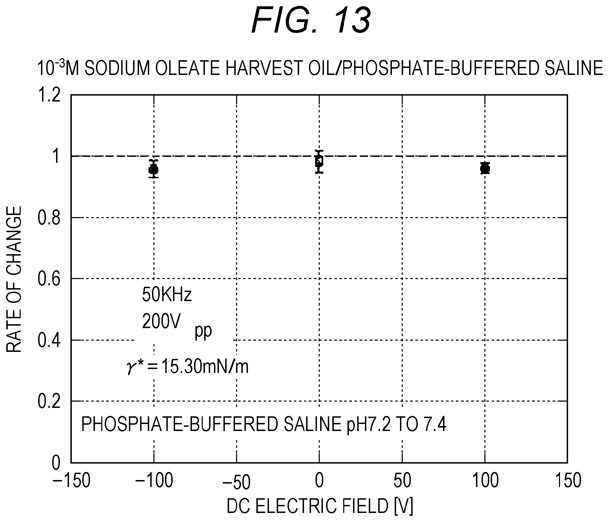

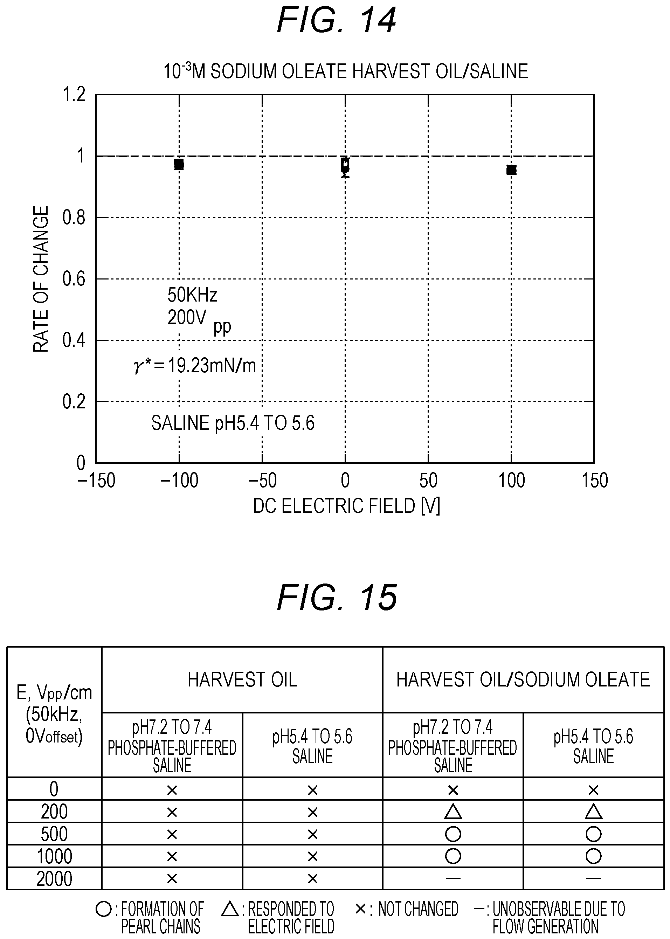

FIG. 13 is a graph showing measurement results of interfacial tension when an electric field was applied to additive-free used food oil with phosphate-buffered saline as a water phase. FIG. 14 is a graph showing measurement results of interfacial tension when an electric field was applied to additive-free used food oil with saline as a water phase. Like the graphs shown in FIGS. 3A, 3B, 4A, 4B, 5, and 9, the abscissa axes of the graphs in FIGS. 13 and 14 represent the DC electric field [V] applied as an offset electric field, while the ordinate axes represent the rate of change of the interfacial tension due to the application of the electric field.

As shown in FIGS. 3A and 3B, in the case where no additive was added to fresh food oil, there was substantially no change in interfacial tension found due to the application of the electric field. On the other hand, as shown in FIGS. 13 and 14, in the case where no additive was added to used food oil, it was confirmed that the interfacial tension was decreased slightly about 5% by the application of the electric field. Regarding the effect of the pH of the water phase, a similar tendency to the case where $10^{-3}$ M sodium oleate was added to fresh food oil was exhibited although the rate of decrease in interfacial tension was different from that in the above case.

Example 2

In Example 1 above, it was confirmed that the presence of sodium oleate (salt of higher fatty acid), which may be produced by thermolysis or hydrolysis of food oil, caused a decrease in interfacial tension when an electric field was applied. A decrease in interfacial tension is due to an increase of interfacial polarization caused by the application of an electric field.

Oil-side oleate ions and water-side sodium ions adsorbed at the oil-water interface act to extend the interface owing to electrostatic repulsive energy acting between adjacent ions of the same kind. When the concentrations of oleate ions and sodium ions at the oil-water interface are increased by the application of an electric field, the distance between adjacent ions decreases, so that electrostatic repulsive energy, i.e., an action to extend the interface, increases. As a result, the interfacial tension, which is defined as work necessary to extend the oil-water interface by 1 m$^2$, decreases.

When water contained in food turns into water vapor in food oil, the size of water desorbing from the food to turn into tiny water droplets (hereinafter, referred to as "water microdroplets") in the food oil is smaller than the size (capillary tube diameter to 5 mm) of water droplets falling from a capillary tube in the sessile drop method. When such water microdroplets in food oil develop sufficient interfacial polarization to decrease their interfacial tension, pearl chains of the water microdroplets are formed by the dipole-dipole attraction. On the other hand, when the interfacial polarization is weak, no pearl chains of the water microdroplets are formed.

To evaluate the interfacial polarization state of water microdroplets in food oil (a water-in-oil (W/O) emulsion) based on the above viewpoints, microscopic observation was made on water microdroplets of each of (1) a phosphate-buffered saline of pH 7.2 to 7.4 conditioned by additive-free fresh food oil, (2) a saline of pH 5.4 to 5.6 conditioned by additive-free fresh food oil, (3) a phosphate-buffered saline of pH7.2 to 7.4 conditioned by $10^{-3}$ M sodium oleate-added food oil, and (4) a saline of pH5.4 to 5.6 conditioned by $10^{-3}$ M sodium oleate-added food oil, by applying electric fields of various voltages from 200 to 2000 Vpp/cm at 50 kHz to the water microdroplets (Example 2).

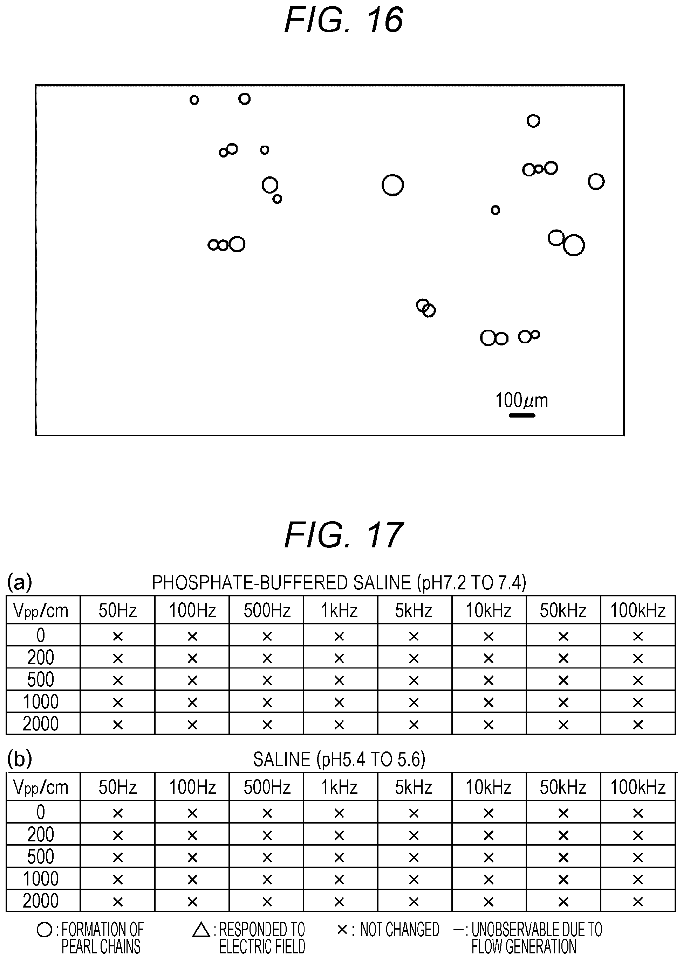

FIG. 15 is a table showing observation results of W/O emulsions. As shown in FIG. 15, in the $10^{-3}$ M sodium oleate-added food oil, the formation of such pearl chains as formed in FIG. 16 was confirmed, independent of the pH of the phosphate-buffered saline or saline contained in water microdroplets, about two minutes after the application of an AC electric field of 200 to 2000 Vpp/cm at 50 kHz. The size of formed pearl chains was approximately 200 $\mu$m and the diameter of each pearl was about 10 to about 100 $\mu$m. Once pearl chains were formed, they were held in that state for a week. On the other hand, in the additive-free fresh food oil, the formation of pearl chains was not confirmed about two minutes after the application of the AC electric field, but it was confirmed 40 minutes or more after the application of the AC electric field. This suggests that the $10^{-3}$ M sodium oleate-added food oil generated greater interfacial polarization at the water-oil interface than the additive-free fresh food oil. This results agree with the measurement results in Example 1 above.

Next, microscopic observation was made on water microdroplets of each of the above salines (1) to (4) two minutes after the application of various AC electric fields with various voltages of 200 to 2000 Vpp/cm at various frequencies of 50 Hz to 100 kHz to the water microdroplets.

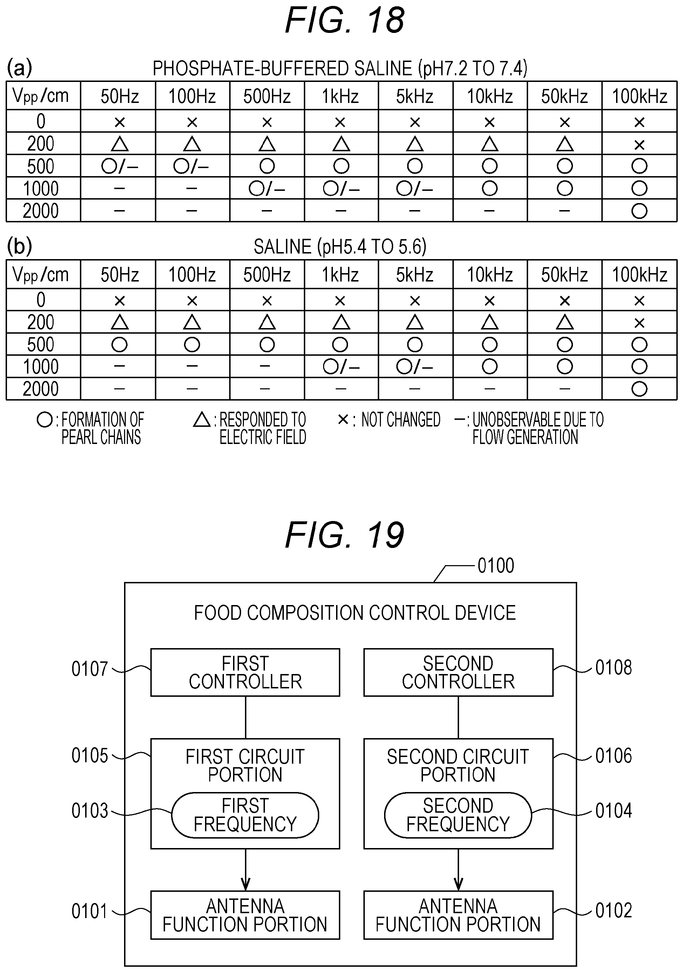

FIG. 17A is a table showing observation results of water microdroplets of phosphate-buffered saline to which various AC electric fields were applied in additive-free fresh food oil and FIG. 17B is a table showing observation results of water microdroplets of saline under the same conditions. FIG. 18A is a table showing observation results of water microdroplets of phosphate-buffered saline to which various AC electric fields were applied in $10^{-3}$ M sodium oleate-added food oil and FIG. 18B is a table showing observation results of water microdroplets of saline under the same conditions.

As shown in FIGS. 17A and 17B, in the fresh food oil, there was no formation of pearl chains of water microdroplets found at any of the frequencies. On the other hand, as shown in FIGS. 18A and 18B, in the $10^{-3}$ M sodium oleate-added food oil, the formation of pearl chains of water microdroplets was confirmed within a range of 500 to 2000 Vpp/cm at any of the frequencies. However, at low frequencies in the above frequency range, the formation of pearl chains could not be confirmed because of disturbance of fluid motion attributed to electroosmotic flow.

It can be seen from the above observation results that even water microdroplets with a diameter of 100 μm or less dispersed into food oil develop interfacial polarization at the water-oil interface by the application of an electric field and the interfacial polarization at the water-oil interface is increased by the addition of $10^{-3}$ M sodium oleate to the food oil to decrease the interfacial tension.

Food contains a large amount of polar ingredients, besides fatty acid salts, such as sodium oleate. Food also contains a large amount of polar organic polymers. For example, water contained in large amounts in food is one of polar molecules. In food of plant or animal origin, water is contained in an amount of about 70% and the cell membrane of the food is formed of a lipid bilayer membrane. Specifically, fruits and vegetables contain water constituting 80% or more of their weight and fishes and meats contain water constituting 70 to 80% of their weight. If 5% water in a vegetable or 3% water in fish or meat is lost, its freshness and quality cannot be maintained.

Although water, which is one of polar molecules, is contained in large amounts in food, it is broadly divided into "bound water" and "free water" according to its state of being. "Bound water" is water bound by hydrogen bonding to and hydrated with protein and carbohydrate in food and is stable because its molecular motion is constrained by the hydration. "Free water" is water that is freely movable and can therefore freeze at 0°C, vaporize near 100°C or dissolve substances. As food contains a larger amount of free water, the food can be said to be fresher, or juicier. However, its molecule has a polarity and is therefore easily bindable to other molecules. Microorganisms, such as putrefying bacteria, cannot be bound to bound water already bound to food ingredients and, therefore, bound water cannot be used for their growth. On the other hand, microorganisms can be bound to free water and, therefore, free water can be used for their growth. Free water bound to microorganisms causes rot.

In the water control method according to this embodiment, droplets of free water are turned into a stable state of a pearl-chain structure, like bound water, so that surplus water can be prevented from leaking from food into food oil, thus maintaining the juiciness of the food.

Furthermore, an enormous amount of energy (vaporization heat) is necessary when water breaks hydrogen bonding to change from a liquid to a gas. In the water control method according to this embodiment, water contained in food is held in a liquid phase by the formation of pearl chains and not vaporized in food oil. Thus, good effects can be obtained, including prevention of oil splash due to water in the food, decreased oil temperature during cooking, decreased food cooking time, and its attendant reduction of food oil oxidation.

As described previously, the fryer 100, which is the ingredient control device according to this embodiment, includes a pair of opposed plate antennas 102 which are the electrodes forming the vibration generating portion capable of generating vibrations. The fryer 100 controls water which is an ingredient of food as the object placed between the pair of opposed plate antennas 102, to be more specific, the water activity of the food, by generating electromagnetic waves (radio waves) at a frequency of approximately 10 kHz to approximately 500 kHz between the pair of opposed plate antennas 102.

In the water control method using the fryer 100 according to this embodiment, the fryer 100 applies a DC electric field of +100 V as an offset electric field on the water phase side relative to the oil phase, which is the other phase, in an AC electric field to irradiate food with electromagnetic waves at a frequency of 50 kHz. Thus, the interfacial polarization between the water phase and the oil phase can be increased to decrease the interfacial tension between the water phase and the oil phase by approximately 60% and bind water in a pearl-chain structure. Water contained in food is divided into bound water and free water. Free water in water contained in food becomes bound in a pearl-chain structure, so that the water activity representing the proportion of free water in food can be decreased.

When the interfacial tension between the water phase and the oil phase is decreased by approximately 60% in the above manner, water contained in the food is likely to be desorbed from the food and dispersed in the form of water droplets in the food oil. Therefore, even if the water in the food turns into vapor and gasifies in the food oil being heated, only minor bumping occurs. By controlling water contained in food in this manner to reduce bumping, good effects, including prevention of oil penetration into the food, can be obtained. Coupled with this, the cooked food has very good eating quality.

Furthermore, since droplets of free water are bound together in a pearl-chain structure and thus turned into a stable state, surplus water can be prevented from leaking from food into food oil, thus maintaining the juiciness of the food. Moreover, in the water control method according to this embodiment, water contained in food is held in a liquid phase by the formation of pearl chains and not vaporized in food oil. Thus, good effects can be obtained, including prevention of oil splash due to water in the food, decreased oil temperature during cooking, decreased food cooking time, and its attendant reduction of food oil oxidation.

As thus far described, the fryer 100 and the water control method both according to this embodiment can improve food containing water to a better state.

The present invention is not limited to the above embodiment and various modifications and applications can be made therein. A description will be given below of modifications of the above embodiment which are applicable to the present invention.

Although the description of the above embodiment was given by taking water as an example of the ingredient, the present invention is not limited to this and the ingredient may be anything controllable by vibrations, such as other kinds of liquids.

Although the description of the above embodiment was given by taking a fryer as an example of the ingredient control device, the present invention is not limited to this and the ingredient control device may be anything that can control an ingredient of an object, such as food. Examples of the ingredient control device include a freezer, a container, and a warehouse which can control the water activity of food. Specifically, by controlling the water activity of food using the ingredient control device according to the present invention, the taste, flavor, and nutrition of the food can be improved.

When water contained in meats, fishes, vegetables, and fruits serving as foods is bound in a pearl-chain structure using the ingredient control device according to the present invention, even normal freezers can keep the qualities of the meats, fishes, and so on for a long period of time (several times as long as usual) without rotting them. In fact, when a crimson sea-bream was irradiated with an electric field for an hour by the ingredient control device and then preserved in a freezer for two days, the freshness of the fish could be maintained two days longer than when a crimson sea-bream was irradiated with an electric field for only 15 minutes and then preserved in the freezer for two days and when a crimson sea-bream was preserved in the freezer for two days without being irradiated with an electric field.

Although the description of the above embodiment was given by taking food as an example of the object, the present invention is not limited to this and the object may be anything an ingredient of which can be controlled by vibrations, such as electromagnetic waves. Examples of the object include beverages, plants other than foods, such as plants for use in drugs, human bodies, animals, gunpowder, drugs, such as vaccines, and water itself.

Specifically, by controlling the water activities of beverages, plants, human bodies, animals, gunpowder or drugs, such as vaccines, using the ingredient control device according to the present invention, not only foods but also beverages, plants, human bodies, animals, gunpowder, drugs, and so on can become difficult to degrade or rot.

Furthermore, crops cultivated using water decreased in interfacial tension by the ingredient control device according to the present invention can germinate and grow very fast and uniformly, suppress the growth of algae and weeds, and provide very good eating qualities.

When using the ingredient control device according to the present invention free water in a living organism is changed from a state where it has already been bound to active oxygen, viruses, microorganisms including bacteria, or the like to a pearl-chain structure of water droplets, the free water is released from hydrogen bonds with active oxygen, viruses, microorganisms including bacteria, or the like and thus can exert a significant therapeutic effect. Although conventional drug research and development is carried out on the assumption of a state of free water where it has already been bound to active oxygen, viruses, microorganisms including bacteria, or the like, the present invention can undermine this assumption itself and thus improve the therapeutic effect. Furthermore, when the ingredient control device according to the present invention is contained in a cellular phone, a smartphone, a tablet computer, a personal computer, a chair, a bed or a pillow, free water bound to microorganisms including bacteria, active oxygen, viruses or the like is separated therefrom and droplets of the free water are bound together in a pearl-chain structure. Thus, the activity of microorganisms including bacteria, active oxygen, viruses or the like can be terminated, stopped or deactivated.

When in mixing cement with water the water to be mixed into the cement is turned into a pearl-chain structure using the ingredient control device according to the present invention, the strength of the resultant concrete can be increased. When water used in a refining process for iron or resin is turned into a pearl-chain structure using the ingredient control device according to the present invention, the strength of iron or resin can be increased, so that defects can be reduced. When in a production process of semiconductor device-related products, such as wafers for LSI (large-scale integration) devices and liquid crystal displays, cleaning water for substrates is turned into a pearl-chain structure using the ingredient control device according to the present invention, the cleaning effect can be increased. With the use of the water control method according to the present invention, the production technique for dilutional preparation of an etching liquid can be improved and the resolution of fine patterns to be printed in an exposure process can be increased. When water contained in ink or paint is turned into a pearl-chain structure using the ingredient control device according to the present invention, nozzle clogging can be reduced.

With the use of the ingredient control device according to the present invention, the effect of cleaning test devices for precise quantitative analysis can be increased and problems with the preparation of reagents and standards, blanks, solvents for two-phase extraction, and so on can be solved. Furthermore, the ingredient control device according to the present invention can be used for cell culture in the biotechnology field, such as genetic engineering, particularly for DNA (deoxyribonucleic acid) amplification. The ingredient control device according to the present invention can also be applied to water for drug injection during the production of injectables (exclusive of water for dilution or as a solvent during inoculation) and sealed purified water.

The ingredient control device according to the present invention can be applied to condensate demineralization of ultrahigh-pressure boilers in thermal power plants where supercritical water is totally evaporated and traditional boilers. Furthermore, although primary cooling water coming into contact as a coolant with the core of a light-water reactor of a nuclear power plant brings secondary radioactivity due to radio activation of impurities, particularly, nuclide having a large reaction cross-section, such as boron and cadmium, the ingredient control device according to the present invention can be used to prevent the secondary radioactivity. Moreover, also in solar power generation and hydrogen power generation, the efficiency of electric power generation can be increased by using the ingredient control device according to the present invention to eliminate impurities in solvents and thus make highly pure water.

The ingredient control device according to the present invention can also be applied to media for specialized particle detectors in particle physics. Furthermore, when, also in molecular structures of gasoline and heavy oil, free water is turned into a pearl-chain structure using the ingredient control device according to the present invention, the fuel combustion efficiency can be increased.

<<Second Embodiment>>

In the fryer 100 according to the first embodiment, when food is cooked in a space where electromagnetic waves in a predetermined frequency range are generated, good effects, including prevention of food oil oxidation and degradation and improvement of the eating quality of cooked food, can be obtained. However, the fryer 100 according to the first embodiment has limitation in adaptation to cooking methods other than frying and in application to improvement of the eating quality of food during storage and keeping freshness.

The inventor of the present invention has conducted further studies and found that improvement of the eating quality and keeping freshness for a long time can be achieved by forming an electromagnetic field suitable for each individual food by controlling the frequency and/or the phase of electromagnetic waves that are vibrations applied to a pair of antenna function portions which are vibration generating portions generating vibrations.

A food composition control device according to the second embodiment is adapted to a variety of cooking methods including frying and can improve the eating quality of food during storage and keep freshness for a long time by applying electromagnetic waves of a predetermined frequency to a pair of antenna function portions to form an electromagnetic field with a plurality of electromagnetic waves, and bringing food in contact with the electromagnetic field.

<Functional Configuration>

FIG. 19 is a diagram showing an example of the functional blocks of the food composition control device in the present embodiment. The functional blocks of the present device described below can be implemented as a combination of hardware and software. Specifically, when a computer is used, the hardware configuration includes a central processing unit (CPU), a main memory, a bus, or a secondary storage device (a storage medium such as hard disk, nonvolatile memory, compact disc (CD), and digital versatile disc (DVD), and a reading drive for those media), an input device for input of information, a printer, a display device, and other external peripheral devices. Examples of the hardware include a fryer or a heating portion that constitutes a fry reservoir and a heater, a food soaking tank, a hot plate, an oven, or a grill that may constitute a high-temperature food cooking portion, a refrigerator that may constitute a refrigerated food cooking portion or a low-temperature refrigerated food cooking portion, a microwave oven that may constitute a food defrost cooking portion, a steamer or a steam convection oven that may cooperate with each cooking portion and constitute a vapor supply portion, and a freezer that may constitute a frozen food storing portion, as well as a driver program for controlling such hardware, other application programs, and user interface applications. Other examples include an interface for external peripheral devices, a communication interface, a driver program for controlling such hardware, an application program, and a user interface application. Data input from an input device or other interfaces and held on a memory or a hard disk is processed or accumulated, and an instruction for controlling the hardware and the software is generated, through the operation processing by the CPU in accordance with a program loaded on the main memory. Alternatively, the functional blocks of the present device may be implemented by dedicated hardware.

The present invention can be embodied not only as a device but also as a method. Part of the invention may be configured as software. A software product used to cause a computer to execute such software and a recording medium having the product fixed thereon also fall in the technical scope of the present invention, as a matter of course (this is applicable throughout the present description).

As shown in FIG. 19, the "food composition control device" (0100) in the present embodiment includes a pair of antenna function portions (0101, 0102), a first circuit portion (0105), a first controller (0107), a second circuit portion (0106), and a second controller (0108). Alternating current of a first frequency (0103) is applied from the first circuit portion to one antenna function portion of a pair of antenna function portions, and alternating current of a second frequency (0104) is applied from the second circuit portion to the other antenna function portion. The configuration of the food composition control device in the present embodiment is described below.

(Antenna Function Portion)

"A pair of antenna function portions" (0101, 0102) can be disposed to face the placed food. A pair of antenna function portions refers to an antenna function portion configured with two antenna function portions

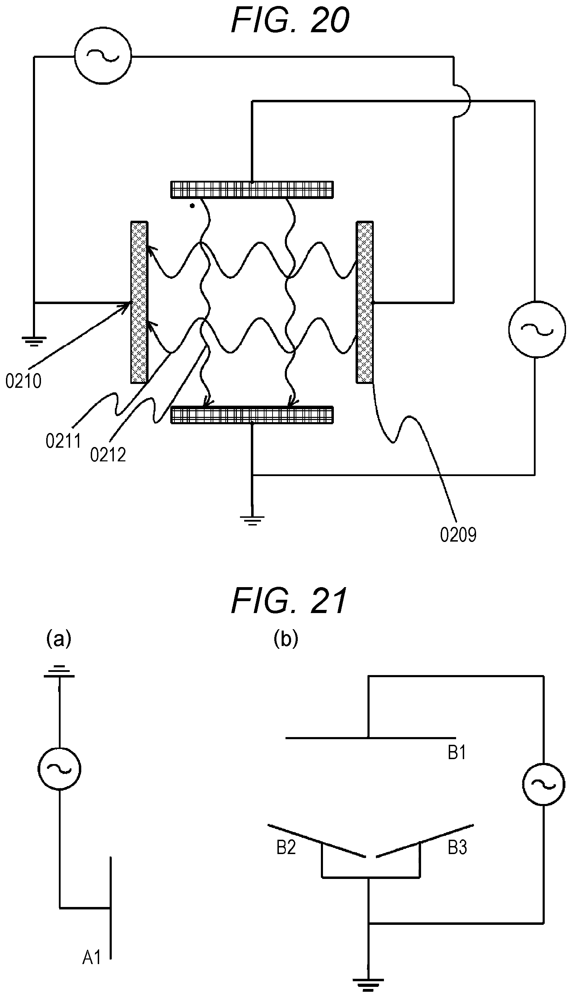

FIG. 20 is a circuit diagram showing an example of a pair of antenna function portions. A pair of antenna function portions in the food composition control device in the present embodiment is configured with two antenna function portions, and each antenna function portion may include a plurality of antennas. The antenna function portion at least includes an antenna (0209) and a feeding point (0210) and receives alternating current output by the circuit portion at the feeding point. The antenna has the function of emitting electromagnetic waves. The antenna in one antenna function portion (hatched in FIG. 20) of a pair of antenna function portions emits electromagnetic waves (0211) of a first frequency applied from the first circuit portion to generate an electromagnetic field. The other antenna function portion (shaded in FIG. 20) emits electromagnetic waves (0212) of a second frequency applied from the second circuit portion to generate an electromagnetic field. A pair of antenna function portions has the function of forming a predetermined electromagnetic field through interaction of an electromagnetic field generated by one antenna function portion and an electromagnetic field generated by the other antenna function portion. Food is placed in the electromagnetic field formed by a pair of antenna function portions whereby the food composition is controlled. The electromagnetic field formed by the antenna function portions is disposed so as to act on the entire food as a target to control the food composition. Specifically, it is preferable that the entire food is disposed in a region in which an electromagnetic field is formed.

FIG. 21 is a circuit diagram showing an example of one antenna function portion. One antenna function portion may be formed with one antenna as shown in FIG. 21A or may have three antennas as shown in FIG. 21B. As shown in FIG. 20, one antenna function portion may be formed with two antennas. Although not shown in the figures, it may be formed with four or more antennas, as a matter of course.

The shape of the antenna is not limited and may be a rod shape, a flat plate shape, an approximate L-shape, or a semispherical shape, for example. The material of the antenna is not limited, but preferably the surface of the antenna is coated with an insulating material. Two or more antennas included in one antenna function portion may be formed of different materials. For example, it is preferable that one of two antennas included in one antenna function portion is formed of stainless steel and the other is formed of aluminum. For example, it is preferable that one of two antennas included in one antenna function portion is formed of stainless steel and the other is formed of copper.

(Circuit Portion)

A description is given with reference to FIG. 19 again. The "first circuit portion" (0105) is configured to apply alternating current of a first frequency (0103) to one antenna function portion of a pair of antenna function portions. The "second circuit portion" (0106) is configured to apply alternating current of a second frequency (0104) to the other antenna function portion. It is preferable that the first frequency and the second frequency are basically different frequencies. However, the first frequency and the second frequency may be the same. The first frequency and the second frequency may be 10 kilohertz or higher and 150 kilohertz or lower.

(Controller)

The "first controller" (0107) is configured to control alternating current output from the first circuit portion, and the "second controller" (0108) is configured to control alternating current output from the second circuit portion.

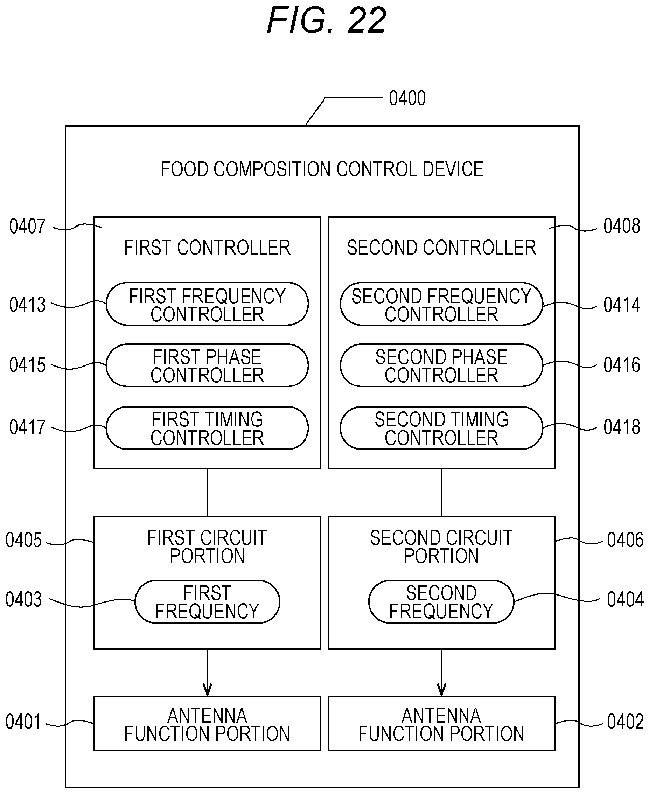

FIG. 22 is a diagram showing an example of the functional blocks of the food composition control device in the present embodiment. The first controller and the second controller may include a first frequency controller (013) and a second frequency controller (0414), respectively, which control the frequency of the output alternating current. It is preferable that the first frequency and the second frequency are controlled to different frequencies by the first controller and the second controller, respectively. However, the first frequency and the second frequency may be the same. The first controller and the second controller may include a first phase controller (0415) and a second phase controller (0416), respectively, which control the phase of output alternating current. The first controller and the second controller may further include a first timing controller (0417) and a second timing controller (0418), respectively, which control the timing of stopping and outputting alternating current output.

(Control of Frequency)

<Example of Electromagnetic Fields Formed with Electromagnetic Waves of Different Frequencies (50 kHz and 47 kHz) >

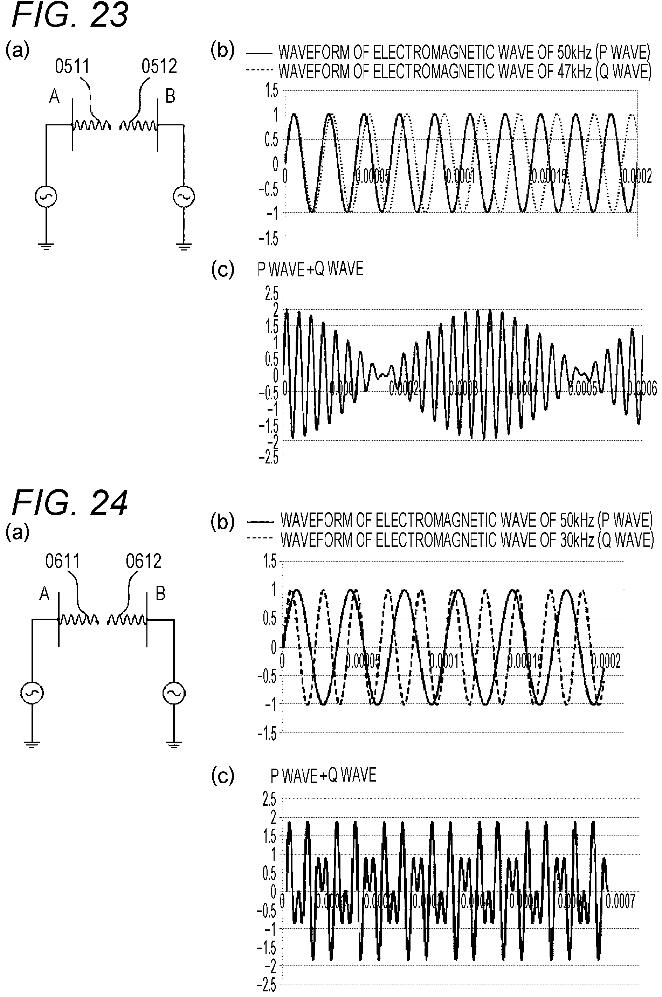

FIG. 23 is a circuit diagram showing an example of the food composition control device in the present embodiment and shows an example of waveforms of electromagnetic fields. The food composition control device shown in the circuit diagram in FIG. 23A has a pair of antenna function portions. One antenna function portion of a pair of antenna function portions has an antenna A and receives alternating current of 50 kHz as a first frequency from the first circuit portion. The other antenna function portion of a pair of antenna function portions has an antenna B and receives alternating current of 47 kHz as a second frequency from the second circuit portion. In FIG. 23B, the waveform (P wave) of electromagnetic wave (0511) of the first frequency emitted from the antenna A is shown by a solid line, and the waveform (Q wave) of electromagnetic wave (0512) of the second frequency emitted from the antenna B is shown by a dotted line. The electromagnetic field formed by a pair of antenna function portions is the waveform (P wave + Q wave) in FIG. 23C obtained by adding the solid line and the broken line in FIG. 23B.

In the fryer 100 according to the first embodiment, an electromagnetic field is formed of electromagnetic waves of a single frequency, and the waveform of electromagnetic waves is a simple waveform as shown by a solid line in FIG. 23B, for example, when the frequency applied to the antenna is 50 kHz. On the other hand, in the food composition control device in the present embodiment, the waveform can be formed in a complicated shape with repeating amplification and attenuation, as shown in FIG. 23C.

<Example of Electromagnetic Fields Formed with Electromagnetic Waves of Different Frequencies (50 kHz and 30 kHz) >

FIG. 24 is a circuit diagram showing an example of the food composition control device in the second embodiment and a diagram showing an example of waveforms of electromagnetic fields for explaining another example of the waveforms of electromagnetic field when a first frequency and a second frequency that are different are output. The food composition control device shown in the circuit diagram in FIG. 24A has a pair of antenna function portions. One antenna function portion of a pair of antenna function portions has an antenna A and receives alternating current of 50 kHz as a first frequency from the first circuit portion. The other antenna function portion of a pair of antenna function portions has an antenna B and receives alternating current of 30 kHz as a second frequency from the second circuit portion. In FIG. 24B, the waveform (P wave) of electromagnetic wave (0611) of the first frequency emitted from the antenna A is shown by a solid line, and the waveform (Q wave) of electromagnetic wave (0612) of the second frequency emitted from the antenna B is shown by a dotted line. Then, the electromagnetic field formed by a pair of antenna function portions is the waveform (P wave + Q wave) in FIG. 24C obtained by adding the solid line and the broken line in FIG. 24B. In FIG. 24C, compared with FIG. 23C, the waveform has regularity but the waveform is very characteristic.

As shown in FIG. 23 and FIG. 24, in the food composition control device in the present embodiment, the first frequency and the second frequency that are basically different are applied, whereby a wide variety of complicated waveforms can be formed. The circuit diagrams shown in FIG. 23 and FIG. 24 have the simplest configuration as an example of a pair of antenna function portions, and the number, direction, and shape of antennas may be changed and combined so that an even more complicated waveform can be formed into an electromagnetic field.

(Control of Phases)

<Description of Phase>

For example, the voltage of alternating current of an electromagnetic wave applied to the antenna function portion at a given time is expressed by Equation (1), where $V_0$ is the maximum value of intensity of wave, $\omega$ is angular frequency, and $\omega t + \alpha$ is the phase. The relation between angular frequency and frequency (f) is expressed by Equation 2.

$$\text{(Equation 1)}$$

$$V(t) = V_0 \cdot \sin(\omega t + \alpha)$$

$$\text{(Equation 2)}$$

$$\omega = 2\pi \cdot f$$

<Example of Electromagnetic Fields Formed with Electromagnetic Waves of Different Phases: Same frequency of 50 kHz>

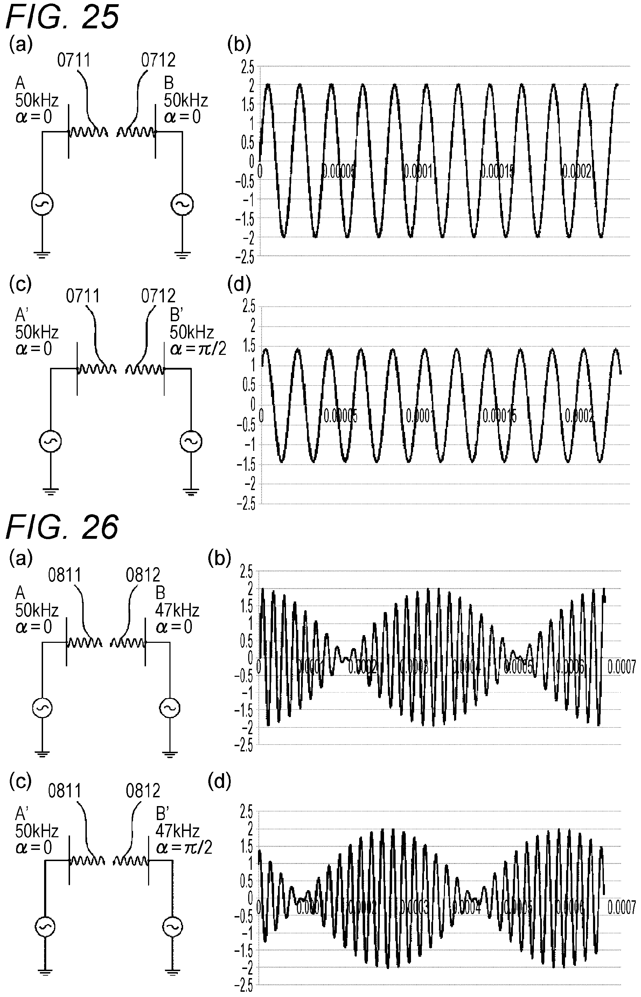

FIG. 25 is a circuit diagram showing an example of the food composition control device in the second embodiment and a diagram showing an example of waveforms of electromagnetic fields for explaining change in waveform of the electromagnetic field when different phases are applied to the first frequency and the second frequency. First of all, a case where the electromagnetic waves applied to a pair of antenna function portions have the same phase and frequency is described. In the food composition control device shown in the circuit diagram in FIG. 25A, the first frequency (0711) applied to the antenna function portion having an antenna A and the second frequency (0712) applied to the antenna function portion having an antenna B are 50 kHz, and the phase is $\alpha = 0$ for each. The waveform obtained by adding the waveform (P wave) of the electromagnetic wave of the first frequency emitted from the antenna A and the waveform (Q wave) of the electromagnetic wave of the second frequency emitted from the antenna B is shown in FIG. 25B.

Next, a case where the electromagnetic waves applied to a pair of antenna function portions have the same frequency and different phases is described. In the food composition control device shown in the circuit diagram in FIG. 25C, the first frequency (0711) applied to the antenna function portion having an antenna A' is 50 kHz, and the phase is $\alpha = 0$. The second frequency (0712) applied to the antenna function portion having an antenna B' is 50 kHz, and the phase is $\alpha = \pi/2$. The waveform obtained by adding the waveform (P wave) of the electromagnetic wave of the first frequency emitted from the antenna A' and the waveform (Q wave) of the electromagnetic wave of the second frequency emitted from the antenna B' is shown in FIG. 25D. Basically, the waveform is a sine wave and a fundamental waveform. When the waveforms in FIG. 25B and FIG. 25D are compared, the frequencies are the same but the maximum value and the minimum value of wave intensity are different. In this way, in the food composition control device in the present embodiment, for example, when the first frequency and the second frequency are the same, the phase is controlled whereby the maximum value and the minimum value of wave intensity can be controlled with the frequency kept constant. Controlling the maximum value and the minimum value of the waveform with the frequency kept constant is possible even by changing the voltage. However, in the food composition control device in the present embodiment, the phase of the first frequency and the second frequency are controlled without controlling the voltage.

<Example of Electromagnetic Fields Formed with Electromagnetic Waves of Different Phases: Different Frequencies (50 kHz and 47 kHz)>

FIG. 26 is a circuit diagram showing an example of the food composition control device in the second embodiment and a diagram showing an example of waveforms of electromagnetic fields for explaining change in waveform of the electromagnetic field when different frequencies and phases are applied to the first frequency and the second frequency. First, a case where the frequencies of electromagnetic waves applied to a pair of antenna function portions are different is described. In the food composition control device shown in the circuit diagram in FIG. 26A, the first frequency (0811) applied to the antenna function portion having an antenna A is 50 kHz, the second frequency (0812) applied to the antenna function portion having an antenna B is 47 kHz, and the phase is $\alpha = 0$ for each. The waveform obtained by adding the waveform (P wave) of the electromagnetic wave of the first frequency emitted from the antenna A and the waveform (Q wave) of the electromagnetic wave of the second frequency emitted from the antenna B is shown in FIG. 26B.

Next, a case where the frequencies and the phases of electromagnetic waves applied to a pair of antenna function portions are different is described. In the food composition control device shown in the circuit diagram in FIG. 26C, the first frequency (0811) applied to the antenna function portion having an antenna A is 50 kHz, and the phase is $\alpha = 0$. The second frequency (0812) applied to the antenna function portion having an antenna B is 47 kHz, and the phase is $\alpha = \pi/2$. The waveform obtained by adding the waveform (P wave) of the electromagnetic wave of the first frequency emitted from the antenna A and the waveform (Q wave) of the electromagnetic wave of the second frequency emitted from the antenna B is shown in FIG. 26D. When the waveforms in FIG. 26B and FIG. 26D are compared, there is almost no effect on the pattern of the waveform but the phase is changed. However, the change in phase presumably gives no change to food.

<Example of Electromagnetic Fields Formed with Electromagnetic Waves of Different Phases: Different Frequencies (50 kHz and 30 kHz)>

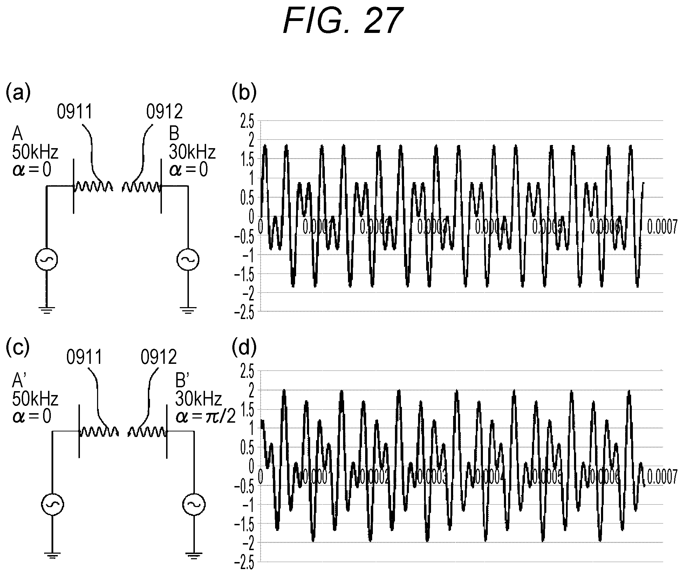

FIG. 27 is a circuit diagram showing an example of the food composition control device in the second embodiment and a diagram showing an example of waveforms of electromagnetic fields, which is another diagram for explaining change in waveform of the electromagnetic field when different frequencies and phases are applied to the first frequency and the second frequency. First, a case where the frequencies of electromagnetic waves applied to a pair of antenna function portions are different is described. In the food composition control device shown in the circuit diagram in FIG. 27A, the first frequency (0911) applied to the antenna function portion having an antenna A is 50 kHz, the second frequency (0912) applied to the antenna function portion having an antenna B is 30 kHz, and the phase is $\alpha = 0$ for each. The waveform obtained by adding the waveform (P wave) of the electromagnetic wave of the first frequency emitted from the antenna A and the waveform (Q wave) of the electromagnetic wave of the second frequency emitted from the antenna B is shown in FIG. 27B.

Next, a case where the frequencies and the phases of electromagnetic waves applied to a pair of antenna function portions are different is described. In the food composition control device shown in the circuit diagram in FIG. 27C, the first frequency (0911) applied to the antenna function portion having an antenna A is 50 kHz, and the phase is $\alpha = 0$. The second frequency (0912) applied to the antenna function portion having an antenna B is 30 kHz, and the phase is $\alpha = \pi/2$. The waveform obtained by adding the waveform (P wave) of the electromagnetic wave of the first frequency emitted from the antenna A and the waveform (Q wave) of the electromagnetic wave of the second frequency emitted from the antenna B is shown in FIG. 27D. When the waveforms in FIG. 27B and FIG. 27D are compared, they are similar in that the pattern of the waveform has regularity, but the pattern of the waveform is changed due to the changed phase.

Which frequency to select may be determined in accordance with the impedance when an electromagnetic field is formed for food. Presumably, as the energy consumption by vibrations of polymer organic substances included in food, alcohols with a relatively large molecular weight, and alcohol derivatives with a relatively large molecular weight is increased, the effect of controlling the food composition emerges to have a favorable effect on the food. It is therefore preferable to control the frequency and the phase such that the impedance has a relatively large value. However, since as many impedance peaks as the kinds of substances included in the food may appear, the impedance peaks may be found by changing the frequency, and radiation for a short time for each peak may be repeated. For this, the impedance characteristic may be first checked while the frequency is swept from the lower limit value to the upper limit, and an overall radiation plan may be made by scheduling based on the check result. It is also preferable that the search for impedance peaks and the radiation planning are performed automatically.

(Control of Timing of Stopping and Outputting Alternating Current Output)

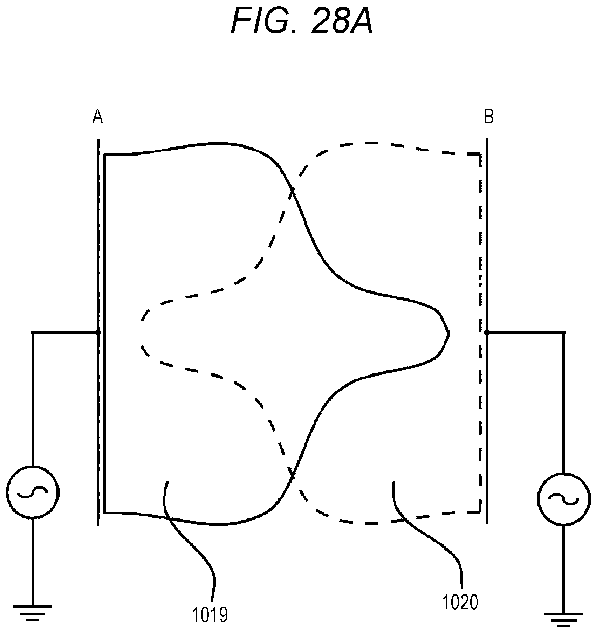

FIG. 28A is a circuit diagram showing an example of the food composition control device in the present embodiment and an image diagram of an electromagnetic field region formed for a certain period of time. The food composition control device shown in the circuit diagram in FIG. 28A has a pair of antenna function portions. One antenna function portion of a pair of antenna function portions has an antenna A and receives alternating current from the first circuit portion, in which the timing of stopping and outputting alternating current output is controlled by the first controller having the first timing controller configured to control the timing of stopping and outputting alternating current output. The other antenna function portion of a pair of antenna function portions has an antenna B and receives alternating current from the second circuit portion, in which the timing of stopping and outputting alternating current output is controlled by the second controller having the second timing controller configured to control the timing of stopping and outputting alternating current output. Since the first controller and the second controller have the first timing controller and the second timing controller, respectively, for example, alternating current can be applied alternately from the first circuit portion and the second circuit portion to a pair of antenna function portions, or applied intermittently, or applied for a fixed time of a day.

As an example, a case where the first circuit portion and the second circuit portion apply alternating current to the antenna function portion having an antenna A and the antenna function portion having an antenna B, respectively, alternately for 0.0001 second will be described with reference to FIG. 28A. A region (1019) of the electromagnetic field formed by the antenna function portion having the antenna A for 0.0001 second is shown by a solid line, and a region (1020) of the electromagnetic field formed by the antenna function portion having the antenna B for 0.0001 second is shown by a broken line. For example, if alternating current is output for 0.0001 second alternately from the first circuit portion and the second circuit portion to a pair of antenna function portions, the region in which an electromagnetic field is formed is switched between the solid-line range and the dotted-line range every 0.0001 second. Another example will be described with reference to FIG. 28A. When the first controller and the second controller perform control of outputting alternating current for 0.0001 second from the first circuit portion and the second circuit portion to a pair of antenna function portions and then stopping the output for 0.0001 second, a state in which an electromagnetic field is formed in both of the solid-line region and the broken-line region for 0.0001 second and thereafter a state in which an electromagnetic field is not formed for 0.0001 second are alternately repeated. These two examples have an effect on a food composition, different from when alternating current is continuously output from the first circuit portion and the second circuit portion to a pair of antenna function portions.

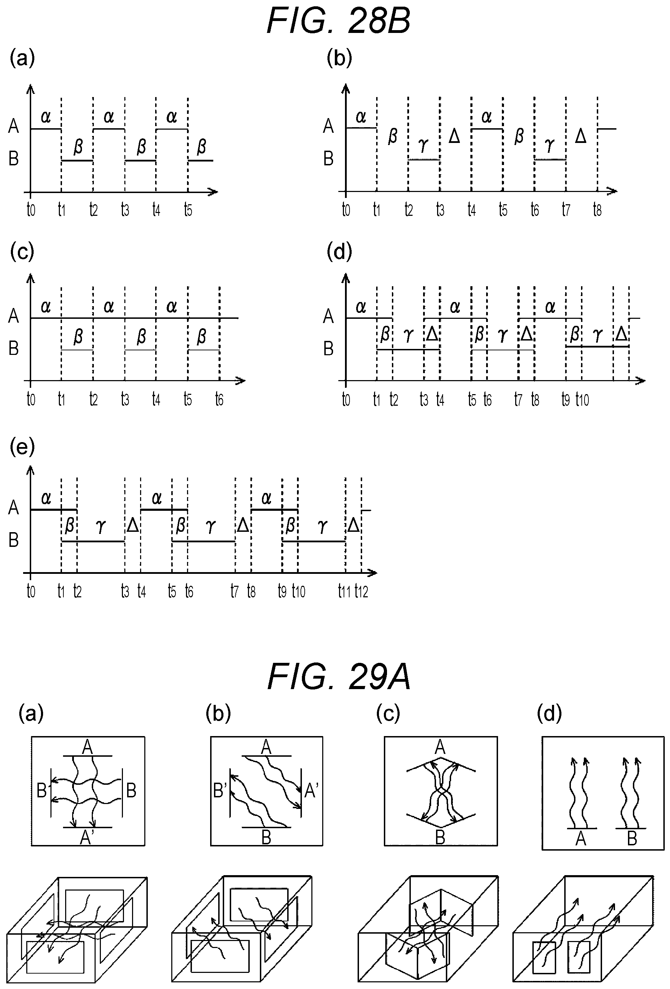

FIG. 28B is an image diagram showing an example of the timing of stopping and outputting alternating current output in the food composition control device in the present embodiment. One antenna function portion of a pair of antenna function portions has an antenna A and receives alternating current from the first circuit portion, in which the timing of stopping and outputting alternating current output is controlled by the first controller having the first timing controller configured to control the timing of stopping and outputting alternating current output. The other antenna function portion of a pair of antenna function portions has an antenna B and receives alternating current from the second circuit portion, in which the timing of stopping and outputting alternating current output is controlled by the second controller having the second timing controller configured to control the timing of stopping and outputting alternating current output. The abscissa axis indicates the time and shows the time when the antennas A and B form electromagnetic fields by solid lines.

In FIG. 28B(a), the antenna A forms an electromagnetic field for a certain time (t0 to t1) and thereafter stops forming an electromagnetic field for a certain time (t1 to t2). While the antenna A stops forming an electromagnetic field (t1 to t2), the antenna B forms an electromagnetic field for a certain time (t1 to t2). Subsequently, while the antenna B stops forming an electromagnetic field for a certain time (t2 to t3), the antenna A forms an electromagnetic field (t2 to t3). Similar control is subsequently repeated, and such an example is shown in FIG. 28B(a). By performing the control as shown in FIG. 28B(a), only the antenna A forms an electromagnetic field ($\alpha$) and thereafter only the antenna B forms an electromagnetic field ($\beta$); this control $\alpha$ to $\beta$ is repeated.

In FIG. 28B(b), the antenna A forms an electromagnetic field for a certain time (t0 to t1) and thereafter stops forming an electromagnetic field for a certain time (t1 to t4). The antenna B forms an electromagnetic field for a certain time (t2 to t3) and thereafter stops forming an electromagnetic field for a certain time (t3 to t6), and subsequently similar control is repeated. By performing the control as shown in FIG. 28B(b), only the antenna A forms an electromagnetic field ($\alpha$), followed by a time during which neither antenna forms an electromagnetic field ($\beta$), and then only the antenna B forms an electromagnetic field ($\gamma$), followed by a time during which neither antenna forms an electromagnetic field ($\Delta$); this control $\alpha$ to $\Delta$ is repeated.

In the example shown in FIG. 28B(c), the antenna A continuously forms an electromagnetic field, the antenna B forms an electromagnetic field for a certain time (t1 to t2) and thereafter stops forming an electromagnetic field for a certain time (t2 to t3), and subsequently similar control is repeated. By performing the control as shown in FIG. 28B(c), only the antenna A forms an electromagnetic field ($\alpha$) and thereafter both of the antennas A and B form an electromagnetic field ($\beta$); this control $\alpha$ to $\beta$ is repeated.

In FIG. 28B(d), the antenna A forms an electromagnetic field for a certain time (t0 to t2), thereafter stops forming an electromagnetic field for a certain time (t2 to t3), and forms an electromagnetic field again for a certain time (t3 to t6). The antenna B forms an electromagnetic field for a certain time (t1 to t4) and thereafter stops forming an electromagnetic field for a certain time (t4 to t5), and subsequently similar control is repeated. By performing the control as shown in FIG. 28B(d), only the antenna A forms an electromagnetic field ($\alpha$), followed by a time during which both antennas form an electromagnetic field ($\beta$), and then after a time during which neither antenna forms an electromagnetic field ($\gamma$), there is a time during which both antennas form an electromagnetic field ($\Delta$); this control $\alpha$ to $\Delta$ is repeated.

In FIG. 28B(e), the antenna A forms an electromagnetic field for a certain time (t0 to t2), thereafter stops forming an electromagnetic field for a certain time (t2 to t4), and forms an electromagnetic field again for a certain time (t4 to t6). The antenna B forms an electromagnetic field for a certain time (t1 to t3) and thereafter stops forming an electromagnetic field for a certain time (t3 to t5), and subsequently similar control is repeated. By performing the control as shown in FIG. 28B(e), only the antenna A forms an electromagnetic field ($\alpha$), followed by a time during which both antennas form an electromagnetic field ($\beta$), and then after a time during which only the antenna B forms an electromagnetic field ($\gamma$), there is a time during which neither antenna forms an electromagnetic field ($\Delta$); this control $\alpha$ to $\Delta$ is repeated.

It is needless to say that the method of controlling the timing of stopping and outputting alternating current output in the food composition control device in the present embodiment is not limited to these five examples shown in FIG. 28B. Controlling alternating current output in this manner can have an effect on the food composition, different from when the first circuit portion and the second circuit portion continuously output alternating current to a pair of antenna function portions.

It is needless to say that the control of the food composition control device in the present embodiment is not limited to the examples shown in FIG. 28A and FIG. 28B. In addition to the control of frequency or/and phase, the first controller and the second controller have the first timing controller and the second timing controller, respectively, to control the timing of stopping and outputting alternating current output, thereby enabling various control of electromagnetic fields formed by the food composition control device in the present embodiment.

(Effect of Arrangement of Antennas)

FIG. 29A is a schematic diagram showing an example of arrangement of the antennas of a pair of antenna function portions. In FIG. 29A(a) to FIG. 29A(d), the antennas of one antenna function portion of a pair of antenna function portions are A and A', and the antennas of the other antenna function portion are B and B', in which a plan view is shown on the upper side and a perspective view is shown in the lower side. FIG. 29A(a) and FIG. 29A(b) show an example in which four flat plate-shaped antennas are used to form electromagnetic fields. In FIG. 29A(a), the antennas A and A' and the antennas B and B' are arranged to face each other. On the other hand, in FIG. 29A(b), the normal axes of the antennas A and A' and the antennas B and B' are orthogonal to each other. In FIG. 29A(c), two antennas A and B are used, each having an L-shape, and A and B face each other. In FIG. 29A(a) to FIG. 29A(d), the directions of electromagnetic waves forming electromagnetic fields are shown. For example, although the arrangement of the antennas is the same in FIG. 29A(a) and FIG. 29A(b), the directions of electromagnetic waves are different and the formed electromagnetic fields are also different.

As shown in FIG. 29A(d), the arrangement of the antenna A and the antenna B is not limited to the position facing each other, and the antennas do not necessarily face each other. It is needless to say that the arrangement and shape of antennas is not limited to the examples in FIG. 28. In addition to the control of frequency and/or phase, the shape and arrangement of antennas allows electromagnetic waves forming electromagnetic fields to cross each other or to travel parallel to each other. In this way, the characteristics of electromagnetic waves forming electromagnetic fields can be controlled also by the arrangement of the antennas.

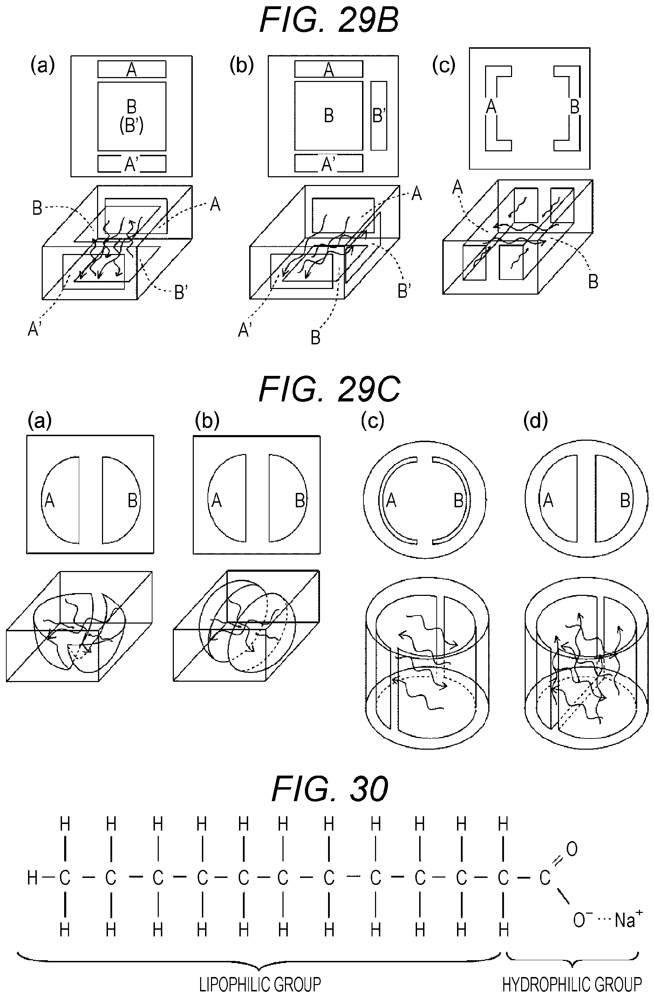

FIG. 29B is a schematic diagram showing an example of the arrangement of antennas of a pair of antenna function portions. The antennas of one antenna function portion of a pair of antenna function portions are A and A', and the antennas of the other antenna function portion are B and B', in which a plan view is shown on the upper side and a perspective view is shown on the lower side. In FIG. 29B(a), A and A' are disposed on the sides to face each other, and B and B' are disposed to face each other in the top-bottom direction. In FIG. 29B(a), the antennas of one antenna function portion of a pair of antenna function portions are disposed in proximity to the side surfaces, and the antennas of the other antenna function portion are disposed in proximity to the bottom surface. As shown in FIG. 29B(c), the antenna A of one antenna function portion of a pair of antenna function portions is in the shape of a letter C. The antenna B of the other antenna function portion is also in the shape of a letter C.

FIG. 29C is a schematic diagram showing an example of the arrangement of antennas of a pair of antenna function portions. In FIG. 29C(a) to FIG. 29C(d), the antenna of one antenna function portion of a pair of antenna function portions is A, and the antenna of the other antenna function portion is B, in which a plan view is shown on the upper side and a perspective view is shown on the lower side. The antennas A and B in FIG. 29C(a) have a shape formed by dividing an approximately spherical shape into four, and the antennas in FIG. 29C(b) have a shape formed by dividing an approximately spherical shape into two. In this manner, the antenna may have a spherical surface. The antennas in FIG. 29C(c) and FIG. 29C(d) have a shape formed by dividing a cylinder into two, in which FIG. 29C(c) shows an example in which a bottom surface is not provided, and FIG. 29C(d) shows an example in which a bottom surface is provided. It is needless to say that the arrangement and shape of the antennas A and B is not limited to the examples in FIGs. 29B and 29C. Similar to FIG. 29A, FIGs. 29B and 29C also indicate that the characteristics of electromagnetic waves forming electromagnetic fields can be controlled also by the arrangement of antennas.

(Mechanism by Which Electromagnetic Field Controls Food Composition)

<Frying in Dynamic Electromagnetic Field in Single Frequency>

The inventor of the present invention has successfully developed a fryer by means of which food is cooked in a space where electromagnetic waves in frequencies from 10 kilohertz to 150 kilohertz are generated between the opposed plate antennas, so that the eating quality of the cooked food can be made very high. A fryer 100 is provided by which food is cooked in dynamic electromagnetic fields formed with a single frequency in a fry reservoir (first embodiment).

In the fryer 100 according to the first embodiment, the mechanism by which the cooked food is crispy on the surface and juicy inside is as follows. Long-chain fatty acid salts such as sodium oleate that may be generated by heating and hydrolysis of food oil have a carboxyl chain functioning as hydrophilic group and a hydrocarbon chain moiety functioning as lipophilic group. In the first embodiment, the invention of a cooking method using food oil including long-chain fatty acid salts is further provided. Long-chain fatty acid salts play a role of blending an oil component in food oil with a water component present on a surface of food put into the food oil. In particular, when particulate water is present on a surface of food, the long-chain fatty acid salt aligns on the surface of water, and the electromagnetic waves applied at the electromagnetic waves-generating step allow the long-chain fatty acid salt to vibrate in proximity to the surface of water.

For example, in the case of sodium laurate shown in FIG. 30, electromagnetic waves act on and vibrate the hydrophilic group moiety in the food oil.

Then, the hydrophilic group in contact with the particulate water vibrates to gradually make water particles finer. Because of this phenomenon, even if particulate water is present on a surface of food immediately after the food is applied into hot food oil, the water is instantaneously formed into fine particles, and an oil splash phenomenon does not occur. In addition, the long-chain fatty acid salt aligns on the surface of the food, with the hydrophilic group on the food side and the lipophilic group on the food oil side, so that penetration of food oil into the food can be prevented to some extent. Because of this, oiliness of food due to penetration of oil or ejection of water from the inside of the food can be prevented to some extent. With these actions in combination, the cooked food has a crispy surface and is moist and juicy inside.

<Comparison Between First Embodiment and Second Embodiment>

The inventor of the present invention has found that improvement and enhancement of the eating quality and keeping freshness for a long time can be achieved by forming an electromagnetic field suitable for each individual food with the frequency and the phase of alternating current applied to each of a pair of antenna function portions. In the fryer 100 in the first embodiment, an electromagnetic field is formed with a single frequency, and a cooking method is also provided that includes the step of increasing/decreasing the frequency and the output of electromagnetic waves during the cooking process. However, as long as the frequency is single, the electromagnetic waves forming electromagnetic fields is unable to have a complicated waveform as in the present invention even by changing the frequency and the output during cooking.

Food contains a large amount of polar ingredients besides fatty acid salts such as sodium oleate. Food also contains a large amount of polar organic polymers. For example, water contained in large amounts in food is one of polar molecules. In the food composition control device of the present invention, an electromagnetic field suitable for each individual food is formed with the frequency and the phase of alternating current applied to each of a pair of antenna function portions, whereby the waveform of the electromagnetic waves forming electromagnetic fields is controlled to have a complicated shape, so that more polar substances in the food can be vibrated to exert a good effect on the food as shown by the third embodiment to the eleventh embodiment described later.

There are various cooking methods other than frying. Even when the cooking method is the same, the water content and the surface-active component contained vary with the food to be cooked, and electromagnetic fields for controlling the food composition suitable for each individual cooking method and food should vary. As described above, in the food composition control device in the present embodiment, the frequency, the phase, and the timing of stopping and outputting of alternating current output can be controlled, and an electromagnetic field suitable for each individual cooking method and food can be formed. Accordingly, the effect on food is higher than by the fryer 100 shown in the first embodiment.

In the food composition control device of the present invention, since the electromagnetic field formed by the food composition control device can mainly vibrate polar substances with a relatively high molecular weight, such as long-chain fatty acid salts and proteins, the vibration of such large molecules indirectly vibrates the surrounding free water. Food contains polymers having a variety of vibration frequencies, and applying electromagnetic waves with various frequency components can increase the kinds of substances that vibrate naturally. Free water can exist in food in three states: solid (ice), liquid, and gas (water vapor). In other words, free water is water that can undergo changes including vaporization, aggregation, sublimation, solidification, and melting. In the food composition control device of the present invention, vibration of large molecules and indirect vibration of free water in the food enable the food control such as improvement and enhancement of the eating quality or keeping freshness of food for a long time.

Carbohydrate such as protein and starch contained in large amounts in food forms hydrogen bonding with water and is easily hydrated. In the food composition control device of the present invention, protein, starch, etc. vibrate, therefore easily come into contact with water, and easily form hydrogen bonding, causing hydration. In the food composition control device of the present invention, the hydration phenomenon promoted in this manner is thought to be one of reasons why improvement and enhancement of the eating quality and keeping freshness of food for a long time are achieved by controlling the food composition.

In general, when food is frozen, it is important to quick-freeze the food and suppress growth of ice crystals in order to prevent degradation of the food. It is requested to reduce the time passing through the temperatures of around -1 to -5°C at which water in the food is frozen. This is because the growth of ice crystals destroys cell walls and cell membranes of vegetables and fish, and water or umami components (savory taste) elude from the destroyed part in defrosting, making the food texture and the eating quality worse. Molecules can move freely in a liquid state but scarcely move when solidified into a solid state. On the other hand, bound water having hydrogen bonding to the ingredients such as protein in the food is not frozen. In the food composition control device of the present invention, therefore, the ingredients in the food such as proteins presumably vibrate because of the electromagnetic field, even when the temperature of the food drops near the temperature at which water freezes. The free water in the food also keeps indirect vibration and is less likely to freeze, causing a state close to supercooling, because water molecules still move even when the temperature of the food drops near the temperature at which water freezes. When water partially starts freezing, the entire food is rapidly frozen by this stimulus, so that minute ice crystals are formed. Accordingly, the growth of ice crystals, which occurs when water in food gradually freezes, is less likely to occur, and degradation of the food due to freezing can be prevented

For example, when sherbet is made by freezing, the part where ice crystals are grown may contain much water and lack taste, while the sherbet may taste strong at some other parts. However, when food is frozen using the food composition control device of the present invention, unevenness of flavor does not occur in sherbet because of quick-freezing.

When cooked food such as gratin and noodles is frozen, water separates from sauce or noodles during defrosting, and the eating quality, the food texture, and the appearance may be different from those before defrosting. However, when food is frozen using the food composition control device of the present invention, growth of ice crystals is suppressed in sauce or noodles because of quick-freezing, so that drip loss during defrosting is suppressed and the eating quality can be kept as good as before freezing.

When food is defrosted, the temperature of the food rises, and ice in the food dissolves. When water dissolves, heat (heat of dissolution) is released and therefore the temperature of the food is less likely to rise around -1 to -5°C slightly lower than the dissolution temperature. Water partially dissolved solidifies again to cause growth of ice crystals, which may deteriorate the food. In the food composition control device of the present invention, even when ice partially dissolves into liquefied water, the liquefied water is indirectly vibrated by the effect of electromagnetic field and is not solidified again, and degradation of the food can be prevented.

One of typical phenomena of food degradation is oxidation. For example, wine is easily oxidized and once opened, its taste and aroma are reduced over time. Alcohol, when oxidized, changes into aldehyde or carboxylic acid, and the product of such oxidation is often a substance having high polarity and easily bound to water through hydrogen bonding. In the food composition control device of the present invention, since water indirectly vibrates as described above, the oxidation product easily comes into contact with water and is bound to water through hydrogen bonding and easily hydrated. Even when wine tastes worse after opening, its degraded eating quality or aroma is less likely to be perceived, possibly because the oxidation product is hydrated and the oxidation product wrapped in water touches the tongue or nose. Alternatively, in the food composition control device of the present invention, the oxidation product may be reduced by the electromagnetic field.

When the food composition control device of the present invention is used for wine before opening, hydration and reduction of the oxidation product makes the wine smooth and controls the taste and the aroma as if the wine is an aged wine. The food composition control device of the present invention can remove bitterness or undesirable flavor of whisky or Japanese sake and make the flavor mellow.

The food composition control device of the present invention can form an electromagnetic field under a condition with the regulated temperature and humidity as described later and can control the food composition while food is cooked or stored. Besides wine, a variety of foods thus can be aged. For example, it can be used for aging of fermented food such as meat, cheese, and taste and can reduce the time taken for aging.

One of the reasons of degradation of food is dryness. For example, it is a well-known fact that if vegetable or sashimi (raw fish) dries, both food texture and taste are reduced. Fried food often tastes greasy over time. One of the reasons for this is probably that moisture separates from the ingredient of fried food and moves to the batter. In the food composition control device of the present invention, as described above, the ingredients in food easily come into contact with water. This promotes hydration of water with a substance in the food that can cause a hydration phenomenon, such as ionic compounds or hydrogen bonding compounds, and can increase bound water. Then, water less evaporates from the food, and inevitably, dryness of the food is suppressed. The effect of promoting hydration of the ingredients in the food in the food composition control device of the present invention presumably increases the water retention ability of the ingredient of the fried food, so that water does not separate or move to the batter, and the fried food is less likely to become greasy.

On the other hand, some cooking methods require water or taste to penetrate into food. In the food composition control device of the present invention, before rice or sticky rice is cooked, water is allowed to penetrate into rice or sticky rice in a food soaking tank as described later to make rice fluffy. In cooking of cereals such as rice and sticky rice, starch contained much in cereals is hydrated into alpha starch (which requires heating). In the food composition control device of the present invention, hydration of starch and water seems to be promoted because the ingredients in food easily come into contact with water. This probably facilitates gelatinization in the subsequent rice cooking and makes rice fluffy.

Stewing the ingredients of beef-on-rice bowls is described, by taking onions as an example. This cooking method involves destroying cell walls and cell membranes of onions by heating and allowing umami components such as amino acids in the broth to soak into the softened onions. When the warmed state is kept after cooking, the cell walls and cell membranes are destroyed by heating, so that the crunchiness of onions is lost as the warm state is kept for a long time. If the beef is kept warm, the water content in meat is reduced, making the meat tough. In the food composition control device of the present invention, umami components such as amino acids vibrate and easily penetrate without destructing the cell walls and cell membranes of onions, so that seasoning soaks into the ingredients while keeping the food texture. Even when keeping warm continues in the food composition control device of the present invention, the surface-active component such as long-chain fatty acid salts contained in the food is affected by the electromagnetic field, similarly to the effect by the fryer 100 in the first embodiment, so that the lipophilic group is easily arranged on the outside of the food and oil having an affinity to the lipophilic group easily forms a film around the food such as onions and meat in the broth. The food in the broth is as if it is coated with oil, which retains water and umami in the food and keeps the food texture and the eating quality.

The food composition control device of the present invention can have a cooking portion as described later and preferably further includes a water vapor supply portion that supplies water vapor or/and water spray to the cooking portion. In the food composition control device of the present invention, water vapor or/and water spray is supplied to the cooking portion, whereby gaseous or/and fine water particles can be supplied to the food or the cooking portion having the food thereon. This configuration is effective in particular for the cooking methods that require water supply for controlling the food compositions.

<Electrocapillary at Interface between Food Oil and Physiological Saline Solution>

The inventor of the present invention has been continuously seeking for the reasons why electromagnetic fields have such excellent effects in controlling food compositions. Noting that the eating quality is improved when a dynamic electromagnetic field is formed in a frying tank, the research group including the inventor of the present invention has been conducting research on electrocapillary at the interface between food oil and physiological saline solution. Electrocapillary is a phenomenon in which when an electric field is applied to two phases that do not mix, the interfacial tension is changed. It has been found that in food oil that contains $10^{-3}$ mol/l of sodium oleate, the interfacial tension is reduced by 20% when an AC electric field of 50 kHz and 200 Vpp is applied (FIG. 7 in the first embodiment).

This suggests that applying an AC electric field exerts an effect on interfacial activity. Plant or animalderived food contains water in the amount of 70% or so, and the cell membranes are formed of lipid bilayer membranes. It is estimated that the food composition can be controlled by applying an AC electric field to exert an effect on the interfacial activity of water in cells and cell membranes. For example, milk forms an o/W emulsion, and most food probably contains some surface-active component if not forming such emulsion. The food composition control device in the present embodiment can form electromagnetic fields with various patterns of waveforms and seems to act on the interfacial activity in the food to control the food.

(Description of Hardware Configuration)

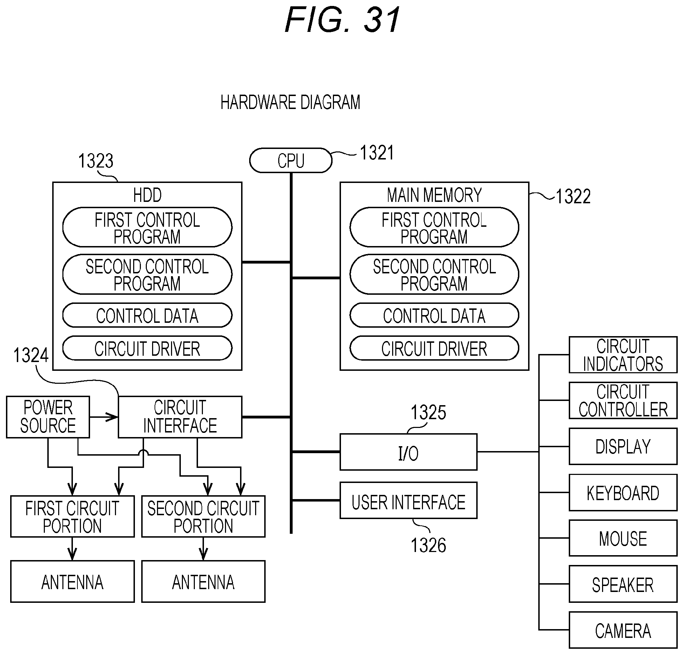

FIG. 31 is a schematic diagram showing an example of the configuration of the food composition control device, in which the functional components described above are implemented as hardware. Referring to this figure, the functions of the hardware components in the food composition control process will be described.

As shown in the figure, the food composition control device in the present embodiment includes a "CPU" (1321) that implements the first controller and the second controller as hardware, a "main memory" (1322), a "hard disk drive (HDD)" (1323), a "circuit interface" (1324), an "input/output (I/O)" (1325), and a "user interface" (1325). The main memory has a "first control program", a "second control program", "control data", and a "circuit driver". The food composition control device in the present embodiment can transmit/receive information, for example, through the I/O such as "keyboard" and "camera" and can accept an instruction signal associated with a food processing method such as freezing and heating and accept an instruction to specify the kind or the volume of food through operation of the user interface such as an operation panel of the food composition control device or a remote controller. The circuit interface can implement the "first circuit portion", the "second circuit portion", and the "antenna" as hardware. This circuit interface can be provided by wire or by radio.

A program is read on the "main memory", and the "CPU" refers to the read program to execute a variety of operation processing in accordance with the procedure specified by the program. A plurality of addresses are allocated to each of the "main memory" and the "HDD", and in the operation processing in the "CPU", the address is specified, data stored therein is accessed, whereby the operation processing using the data can be performed.

First of all, the CPU reads the first control program and the second control program from the HDD and loads them on the main memory. For example, when information of food placed in the food composition control device is input through the user interface such as the operation panel of the food composition control device, the control data is referred to, the first control program and the second control program are executed, and the frequency or/and the phase of alternating current output from the first circuit portion and the second circuit portion are controlled through the circuit driver. Alternating current having a predetermined frequency or/and phase is then applied from the first circuit portion and the second circuit portion to the antenna function portion through the circuit interface. The CPU can control various conditions including voltage of alternating current and a period of time in which alternating current is applied, in addition to the control of frequency and phase of alternating current output from the first circuit portion and the second circuit portion.

Power from a power source is also supplied to the first circuit portion and the second circuit portion, so that the first circuit portion and the second circuit portion can output alternating current and apply alternating current to the antennas. The voltage supplied by the power source is, for example, 100 V, which is the voltage of a commercial power supply.

<Process Flow>

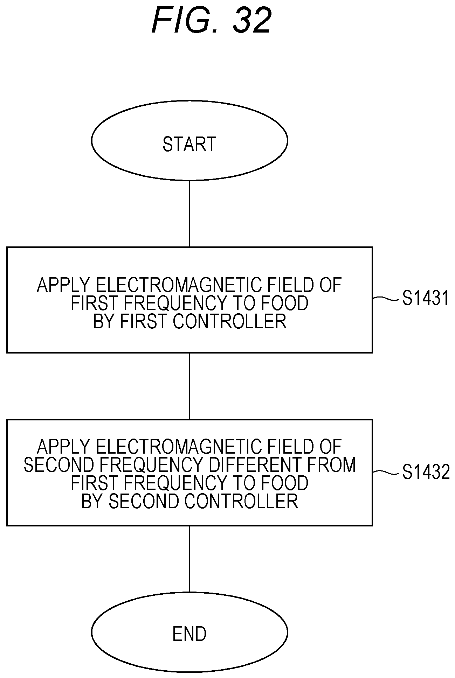

FIG. 32 is a flowchart showing an example of the process flow in the food composition control device in the present embodiment. The steps shown below may be steps executed by the hardware configuration of a computer as described above or may be process steps of a program recorded on a medium for controlling the first controller or/and the second controller.

As shown in this figure, first of all, at step S1431, the first controller applies an electromagnetic field of a first frequency to the food (first frequency applying step). At step S1432, the second controller applies an electromagnetic field of a second frequency, which is a frequency different from the first frequency to the food (second frequency applying step).

Here, the process order of step S1431 and step S1432 may be switched.

<Second Embodiment: Effects>

The food composition control device in the present embodiment can form electromagnetic waves forming an electromagnetic field in shapes more complicated than the conventional ones and therefore can enhance the effect of electromagnetic fields on food, compared with the conventional technique, and have a good effect on the food composition. Specifically, improvement and enhancement of the eating quality or keeping food fresh for a long time can be achieved.

<<Third Embodiment>>

<Third Embodiment: Overview>

The food composition control device in the present embodiment is based on the second embodiment, includes a frying tank and a heating portion for heating the frying tank, and is characterized by performing food composition control in frying food.

<Third Embodiment: Configuration>

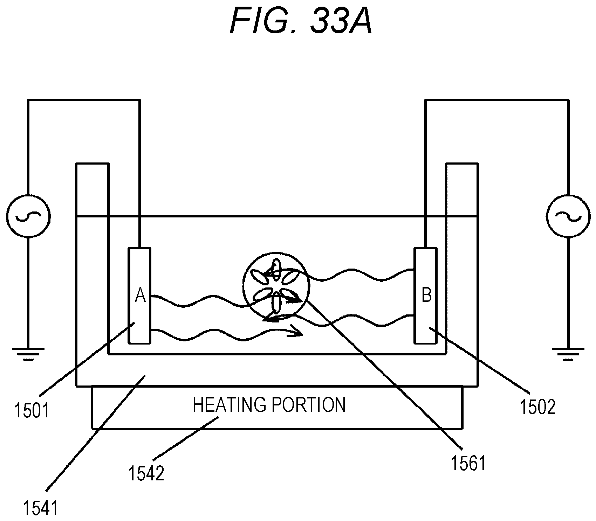

FIG. 33A is a conceptual diagram showing an overview of the food composition control device in the present embodiment. The food composition control device in the present embodiment further includes a frying tank (1541) and a heating portion (1542) for heating the frying tank. A pair of antenna function portions (1501, 1502) are disposed to form an electromagnetic field in the frying tank. An antenna of one antenna function portion has a rectangular shape about 23 cm in the lengthwise direction and about 10 cm in the widthwise direction. Power for activating this antenna is 100 W. The antenna function portion thus configured is regarded as a general type and mainly used in description and testing in the following embodiments. Although power for activating may be 200 W or 300 W, 100 W is sufficient to fulfill the food composition function.

<Third Embodiment: Examples>

As shown in FIG. 33A, food oil was put into the frying tank, an electromagnetic field was formed by a pair of antenna function portions in the frying tank, and the food oil was heated by the heating portion to about 170°C. Here, the frying tank has a width of 50 cm, a depth of 40 cm, and a height of 30 cm, and the antenna function portions that constitute a pair of antenna function portions (general type) are disposed about 1 cm apart from the side walls facing each other in the width direction of the frying tank, and the distance between the antenna plate surfaces of the antenna function portions is about 48 cm. The antenna function portions are each disposed such that the lengthwise direction of the antenna function portion extends along the depth direction of the frying tank. Both ends in the lengthwise direction of the antenna function portion are disposed about 5 cm apart from the side walls facing each other in the depth direction of the frying tank. Food oil fills the frying tank up to 25 cm in the height direction. In such a configuration, 50 g of silken tofu, not drained, was put into the frying tank, but almost no oil splash occurred. After three minutes, silken tofu was removed from the frying tank. When similar cooking was performed without forming an electromagnetic field in the frying tank, a big oil splash occurred when tofu was put in. The cross sections of the silken tofu after cooking were compared. The silken tofu with no electromagnetic field had a plurality of bubbles with diameters of 5 to 20 mm and tasted dried out. On the other hand, the silken tofu cooked with the food composition control device in the present embodiment had no bubbles. The taste was less dried out and was juicy.

<Third Embodiment: Evaluation Test>

Using the food composition control device in the present embodiment, an electromagnetic field was formed in the frying tank in which target food was placed by the method described below. A sensory test of the food in which food composition was controlled was conducted for 10 subjects. In the sensory test, the subjects made evaluation in six levels: 5 points for "very good", 4 points for "good", 3 points for "rather good", 2 points for "rather bad", 1 point for "bad", and 0 point for "very bad". The subjects evaluated two items including taste and food texture for each individual food, and the points were summed up (as used herein the sensory test refers to a test by summing up the points, unless otherwise specified). The maximum evaluation score per subject is 10 points (taste 5 points + food texture 5 points = 10 points) and there are 10 tests, so the maximum score is 100 and the minimum score is 0. (Method)

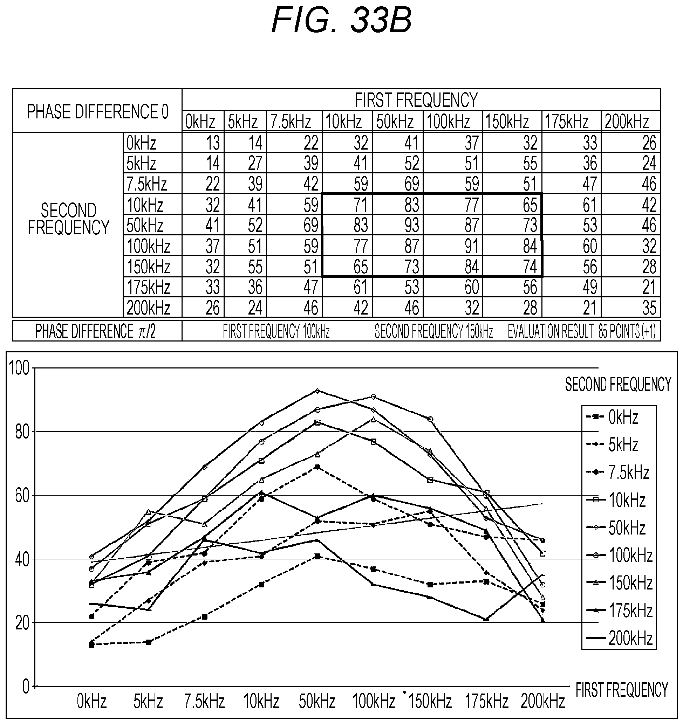

Alternating current of a first frequency and alternating current of a second frequency were applied to the food placed in the frying tank to control the food composition. The first frequency and the second frequency were in a range of 5 kHz to 200 kHz, and an electromagnetic field was formed in the frying tank in actually 36 combinations shown in the table in FIG. 33B.

The test was also conducted for a case where one of the first frequency and the second frequency was 0 kHz, that is, alternating current was applied to either one antenna function portion, and for a case where both frequencies were 0 kHz, that is, alternating current was not applied to either antenna function portion, in order to make a comparison with the effect brought by the food composition control according to the present embodiment.

The lower side in the table indicates the score in the case where alternating current was applied with the first frequency of 100 kHz, the second frequency of 150 kHz, the phase of the first frequency $\alpha = 0$, and the phase of the second frequency $\alpha = \pi/2$. The numerical value in brackets indicates that the difference from the score in the case where the first frequency was 100 kHz, the second frequency was 150 kHz, and both were applied in the same phase. The evaluation result is shown in the form of a graph for each second frequency applied, in which the abscissa axis indicates the value of first frequency, and the ordinate axis indicates the evaluation result (0 point to 100 points).

(Food and Test Result)

This test was carried out with the general-type antenna function portions placed in the frying tank shown in FIG. 33A in a similar manner. Silken tofu cut into 25 g of a substantially cubic shape was cooked for five minutes in oil at 170°C in the frying tank while alternating current was applied in each combination. As shown in FIG. 33B, the rating is high (65 points or higher) when both of the first frequency and the second frequency are in a range of 10 kHz to 150 kHz (enclosed by a thick line in the table). The result when a phase difference is applied between the first frequency (100 kHz) and the second frequency (150 kHz) is 85 points. The result with no phase difference is 84 points, and the difference is +1 point. This is applicable to the following tables showing the test results. The rating is slightly increased by applying a phase difference.

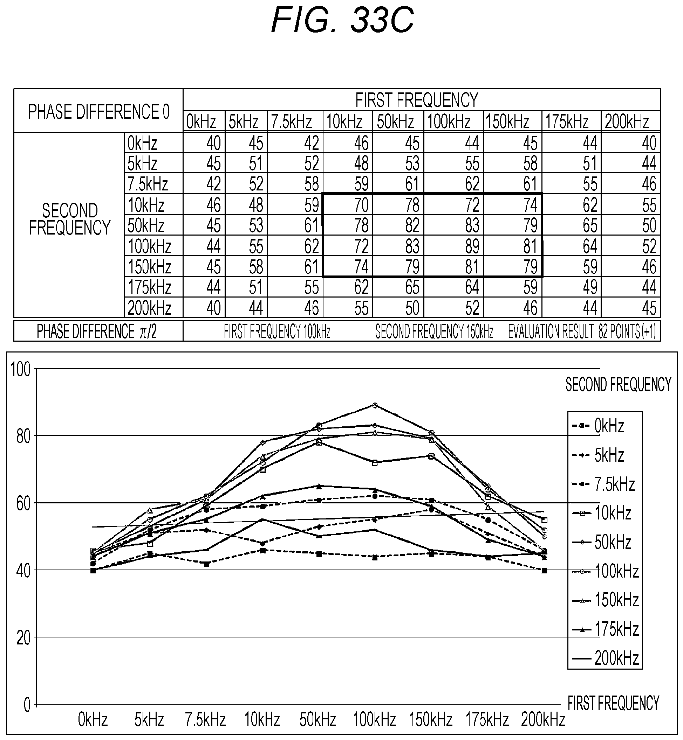

The test described above was performed for frozen fried chicken instead of silken tofu. Specifically, no-fry chicken (not cooked) was cooked in oil at 170°C for five minutes in the frying tank. FIG. 33C shows the result of the sensory test of the chicken. The rating is high when both of the first frequency and the second frequency are in a range of 10 kHz to 150 kHz. The result when a phase difference is applied between the first frequency and the second frequency is 82 points. The result with no phase difference is 81 points, and the rating is slightly increased by applying a phase difference.

<Third Embodiment: Effects>

In the food composition control device in the present embodiment, even when raw food containing water is put into the frying tank containing heated oil, oil splash scarcely occurs. The food composition control device can make the eating quality juicy and less dried out after cooking.

<<Fourth Embodiment>>

<Fourth Embodiment: Overview>

The food composition control device in the present embodiment is based on the second embodiment, further includes a food soaking tank capable of storing edible liquid for soaking or/and extracting food to allow the edible liquid to soak into or/and extract the food, and is characterized by performing food composition control by allowing edible liquid to soak into food.

<Fourth Embodiment: Configuration>

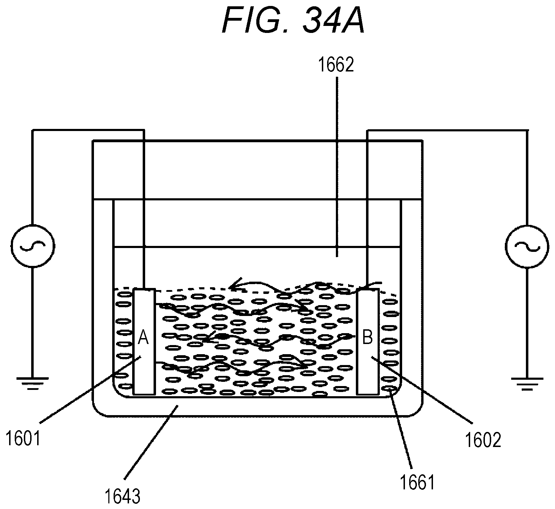

FIG. 34A is a conceptual diagram showing an overview of the food composition control device in the present embodiment. The food composition control device in the present embodiment further includes a food soaking tank (1643) capable of storing edible liquid for soaking or/and extracting food (1661) to allow the edible liquid (1662) to soak into or/and extract the food. A pair of antenna function portions (1601, 1602) are disposed to form an electromagnetic field in the food soaking tank.

The temperature for allowing edible liquid to soak into or extract food is not limited. When the food includes an ingredient that is easily denatured or volatized by heating, processing at low temperature is preferable, whereas when heating facilitates penetration of the ingredient in the edible liquid into the food, processing at high temperature is possible.

<Fourth Embodiment: Examples>

Uncooked rice was soaked in water in the food soaking tank and an electromagnetic field was formed in the food soaking tank to reduce the time for soaking and make rice fluffy. Sticky rice was also made fluffy similarly to rice. It is known that when water is soaked into rice, higher water temperature can reduce the time for soaking. It is also said that soaking rice at low temperature improves the eating quality. In the food composition control device in the present embodiment, even when rice is soaked in water at low temperature, the time for soaking can be reduced. When tsukemono (Japanese pickles) or pickles were preserved, for example, vegetable was soaked in a pickle solution in the food soaking tank and an electromagnetic field was formed in the food soaking tank to allow seasoning to soak well into the vegetable and reduce the soaking time. For example, when meat or fish was stewed in soup, meat or fish was soaked in soup containing umami components in the food soaking tank and an electromagnetic field was formed in the food soaking tank to allow the soup to soak well into the meat or fish and reduce the time for stewing.

When fruit liquor was made, fruit was soaked in edible liquid such as liquor in the food soaking tank and an electromagnetic field was formed in the food soaking tank. The fruit in the edible liquid was then extracted into the edible liquid for a short time, resulting in a mature fruit liquor. This process is effective also for tea and coffee. For example, green tea was soaked in hot water in the food soaking tank, and an electromagnetic field was formed in the food soaking tank. Green tea was extracted for a short time with vivid color and good flavor. When coffee was extracted using the food composition control device in the present embodiment, for example, coffee was extracted in an amount smaller than usual but the taste and flavor was the same as usual, because the amount of extract in hot water was increased.

<Fourth Embodiment: Evaluation Test>

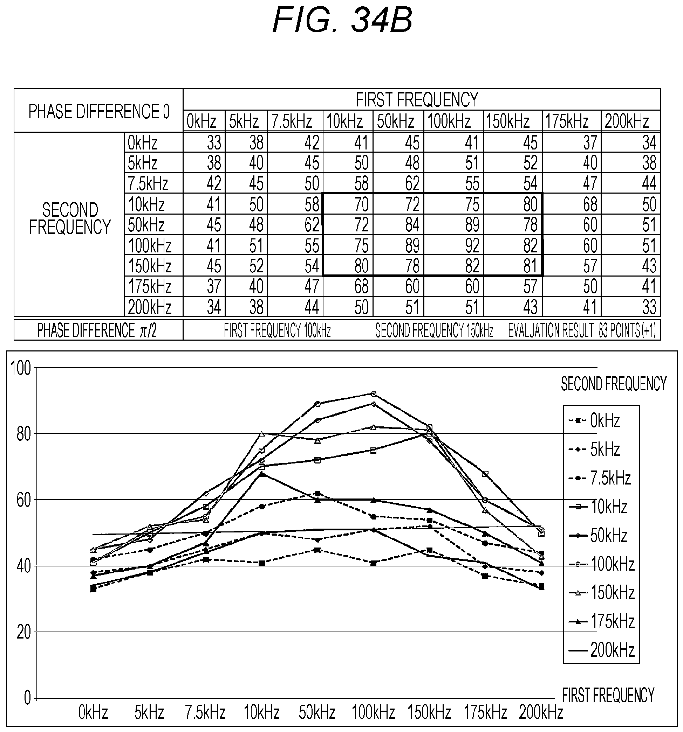

A sensory test was conducted on "rice" similarly to the test performed in the third embodiment. The food soaking tank has a width of 50 cm, a depth of 40 cm, and a height of 30 cm. The antenna function portions that constitute a pair of antenna function portions (general type) are disposed about 1 cm apart from the side walls facing each other in the width direction of the food soaking tank, and the distance between the antenna plate surfaces of the antenna function portions is about 48 cm. The antenna function portions are each disposed such that the lengthwise direction of the antenna function portion extends along the depth direction of the food soaking tank. Both ends in the lengthwise direction of the antenna function portion are disposed about 5 cm apart from the side walls facing each other in the depth direction of the food soaking tank. In such a configuration, 1 kg of Koshihikari was quickly washed, then drained in a strainer, and put into the food soaking tank. As edible liquid, 1 kg of water was added, and a first frequency and a second frequency were applied in a variety of combinations in a similar manner as in the third embodiment. After soaking for 10 minutes, the rice was drained in a strainer. "Rice" cooked with the same type of rice cooker under the same condition with the food composition controlled was individually evaluated. FIG. 34B shows the result of this sensory test. The rating is high when both of the first frequency and the second frequency are in a range of 10 kHz to 150 kHz. The result when a phase difference is applied between the first frequency and the second frequency is 83 points, one point up.

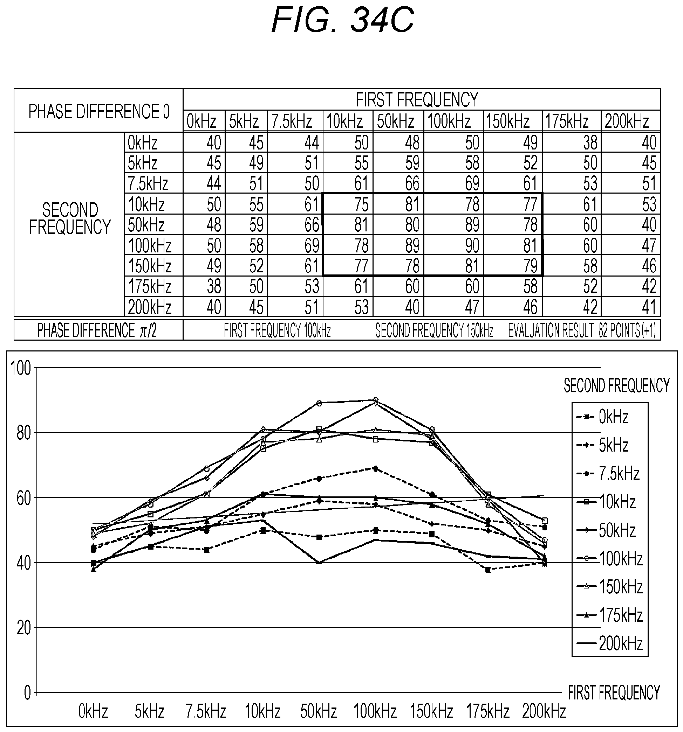

A sensory test similar to the test for "rice" above was conducted on "green tea". Ten grams of green tea in a nonwoven fabric bag and one liter of hot water at 95°C as edible liquid were put into the food soaking tank to make tea by soaking for one minute. FIG. 34C shows the result of this sensory test. The rating is high when both of the first frequency and the second frequency are in a range of 10 kHz to 150 kHz. The result when a phase difference is applied between the first frequency and the second frequency is 77 points, one point up.

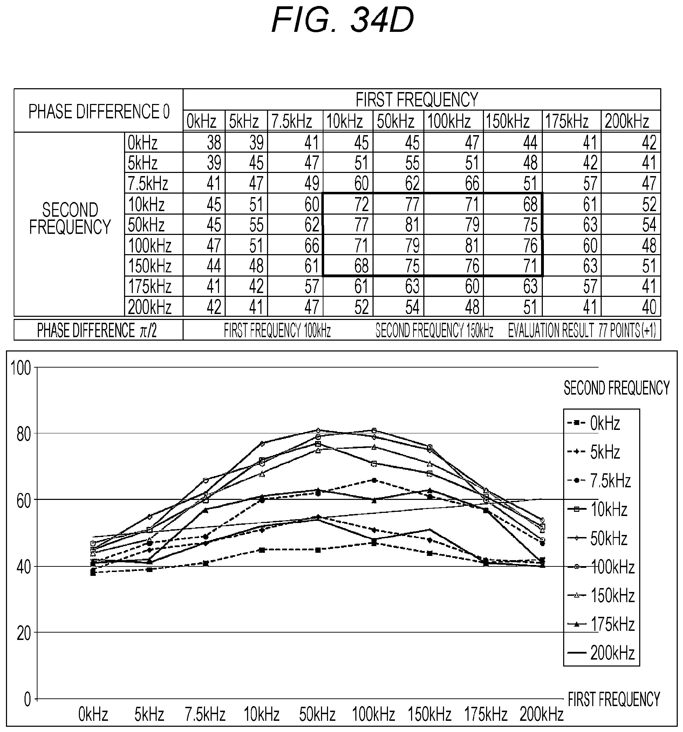

A sensory test similar to the one described above was conducted on "green tea". Ten grams of green tea in a nonwoven fabric bag and two liters of hot water at 95°C as edible liquid were put into the food soaking tank to make tea by soaking for two minutes. FIG. 34D shows the result of this sensory test. The rating is high when both of the first frequency and the second frequency are in a range of 10 kHz to 150 kHz. The result when a phase difference is applied between the first frequency and the second frequency is 77 points, one point up.

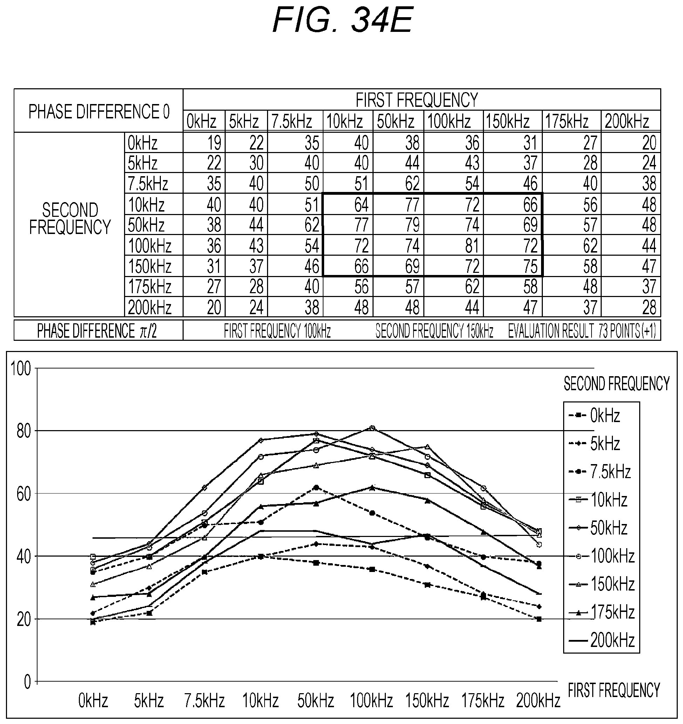

Subsequently, a test to measure the amount of water absorption by soaking was conducted on "rice". The test environment was similar to the one in the sensory test for rice. One hundred grams of Koshihikari were quickly washed, then drained in a strainer, and put into the food soaking tank. As edible liquid, 100 g of water was added, and after soaking for 10 minutes, rice was drained in a strainer and its weight was measured. A similar test was repeated three times, and a total value of the increased weight was measured. This value was used as a score. The temperature of the food soaking tank was 15°C. FIG. 34E shows the result of this test. The amount of water absorption is a high value when both of the first frequency and the second frequency are in a range of 10 kHz to 150 kHz. The result when a phase difference is applied between the first frequency and the second frequency is 73 points, one point up.

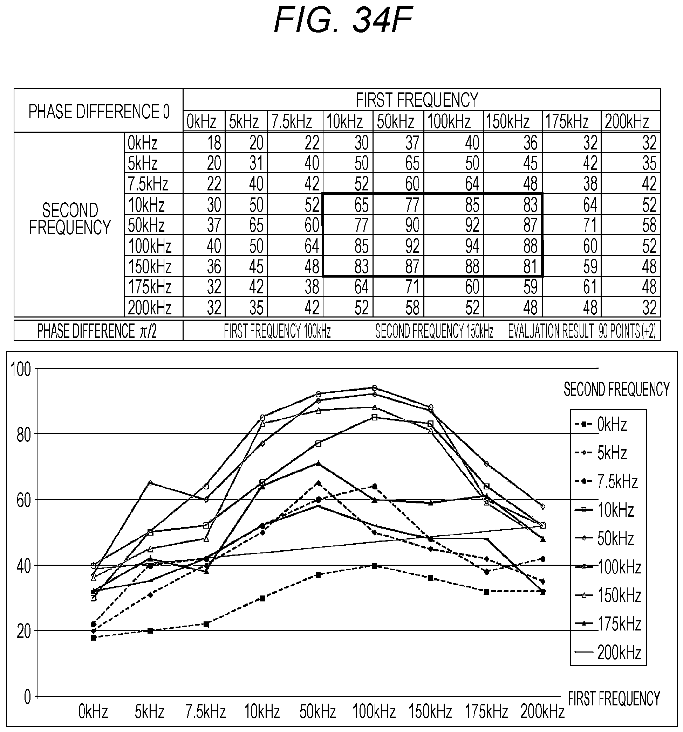

A test for the amount of water absorption similar as described above was conducted on "soybeans". One hundred grams of soybeans were put into the food soaking tank, and 100 g of consommé soup was put into the food soaking tank as edible liquid. After soaking for 30 minutes, the soybeans were drained in a strainer and the weight was measured. A similar test was repeated three times, and a total value of the increased weight was measured. This value was used as a score. FIG. 34F shows the result of this test. Also in this test, the value is high when both of the first frequency and the second frequency are in a range of 10 kHz to 150 kHz. The result when a phase difference is applied between the first frequency and the second frequency is 90 points, two points up.

<Fourth Embodiment: Effects>

The food composition control device in the present embodiment allows edible liquid to penetrate faster into the food soaked in the edible liquid. Since the edible liquid penetrates into the food and the ingredients in the food dissolves into the edible liquid, the time taken to extract the ingredients in the food into the edible liquid can be reduced, and the amount of extract can be increased.

<<Fifth Embodiment>>

<Fifth Embodiment: Overview>

The food composition control device in the present embodiment is based on the second embodiment, further includes a high-temperature food cooking portion for heating food at high temperature, and is characterized by performing food composition control by making food hot.

<Fifth Embodiment: Configuration>

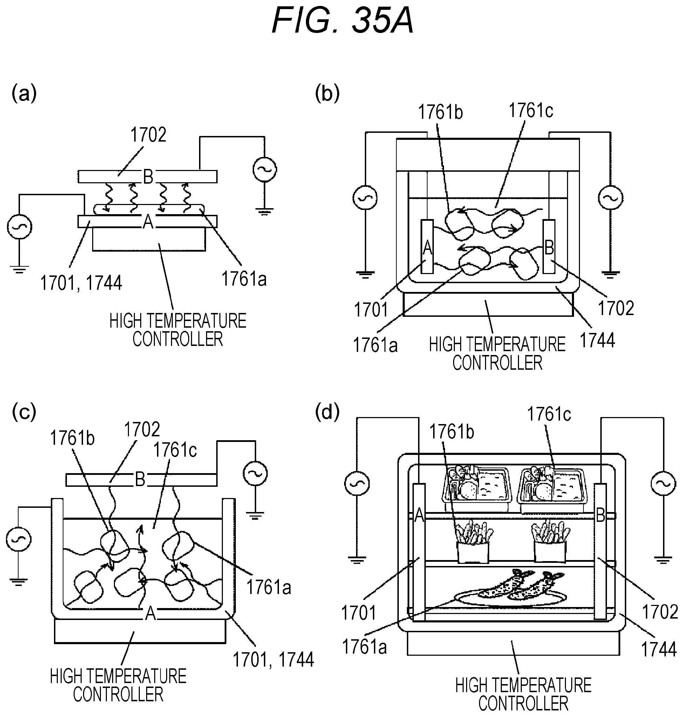

FIG. 35A is a conceptual diagram showing an overview of the food composition control device in the present embodiment. The food composition control device in the present embodiment further includes a high-temperature food cooking portion (1744) for heating food (1761a, 1761b, 1761c) at high temperature. A pair of antenna function portions (1701, 1702) are disposed to form an electromagnetic field in the high-temperature food cooking portion.

The high-temperature food cooking portion of the food composition control device in the present embodiment can be used not only for cooking, for example, boiling, baking, steaming, and frying, but also for preserving food, for example, storing cooked rice at a temperature of 60°C or higher and preventing degradation of starch and proliferation of microorganisms to keep the eating quality of cooked rice. The food composition control also includes keeping taste or soy sauce at high temperature and promoting the activity of microorganisms and ferment to mature the food. In the high-temperature food cooking portion, food is heated at high temperature. The temperature is normal temperature or higher and preferably 40°C or higher, although the temperature varies depending on the kinds of food and the purpose of food composition control.

<Fifth Embodiment: Examples>

FIG. 35A(a) shows an example in which one (1701) of a pair of antenna function portions also serves as a high-temperature food cooking portion (1744). When the antenna function portion also has the function of the high-temperature food cooking portion, it is preferably formed of iron or stainless steel. In this example, one antenna function portion is formed in the shape of a rectangular plate 50 cm in the lengthwise direction and 40 cm in the widthwise direction. One antenna function portion and the other antenna function portion face each other at a distance of about 4 cm from each other. Beef for steak (1761a) was placed on the high-temperature food cooking portion also serving as an antenna function portion, and while an electromagnetic field was formed, beef for steak was cooked for two minutes on each side. Without forming an electromagnetic field, beef for steak was cooked similarly, for comparison. The beef for steak cooked with an electromagnetic field formed was cooked through, while the beef for steak cooked without forming an electromagnetic field was not cooked through. Other examples in which the antenna function portion also has the function of the high-temperature food cooking portion include, but not limited to, plates of hot plates, baking sheets or grills of ovens or toasters, pots of rice cookers, iron pans, and iron plates.

Referring to FIG. 35A(b), an example of cooking the ingredients of beef-on-rice bowls will be described. The container shown in the figure is a container that has a similar size as the frying tank shown in the third embodiment or the food soaking tank shown in the fourth embodiment, and a pair of general-type antenna function portions are disposed in the container. The manner of their arrangement is similar to the manner shown in the third embodiment or the fourth embodiment. Chopped onions (1761a), thinly sliced beef (1761b) cut into bite-size pieces, and broth for beef-on-rice bowls (1761c) were placed in the high-temperature food cooking portion (1744), and the food composition control device in the present embodiment was used to form an electromagnetic field, thereby reducing the stewing time taken to cook the ingredients of beef-on-rice bowls.

FIG. 35A(c) also shows an example, similar to FIG. 35A(a), in which one (1701) of a pair of antenna function portions serves as a high-temperature food cooking portion (1744). In this example, the antenna function portion shown in FIG. 35A(a) is disposed to cover the opening of the container shown in FIG. 35A(b). An example of heating precooked food is described using FIG. 35A(c). This is an example of continuing heating for precooked warm food and an example of the food composition control device for keeping food warm. When the ingredients of beef-on-rice bowls cooked by forming an electromagnetic field using the food composition control device in the present embodiment were heated, the state after cooking remained the same even after two hours, the onions were still crunchy, and the beef kept tendered. When the simmered ingredients of beef-on-rice bowls were heated continuously for two hours without forming an electromagnetic field, the onions lost crunchiness and the beef became tough.

An example of heating precooked food is described using FIG. 35A(d). This is an example of continuing heating for precooked warm food and an example of the food composition control device for keeping food warm, similar to the example in FIG. 35A(c). This example has an opening in the horizontal direction, has several (three, in the figure) shelves inside, and is installed, for example, in a convenience store. As a configuration example, in a container having inside dimensions of 60 cm in width, 40 cm in depth, and 50 cm in height, a pair of general-type antenna function portions are disposed such that the plate surfaces of the antennas face each other in the width direction of the container with the lengthwise direction oriented vertically. When precooked fried food such as fried chicken, french fries, and fritter was heated with an electromagnetic field formed using the food composition control device in the present embodiment, the state after cooking remained almost the same even after two hours, and the food texture was not greasy and was crispy. When precooked fried food such as fried chicken, french fries, and fritter was heated continuously for two hours without forming an electromagnetic field, the food texture was greasy and no longer crispy. The food composition control device in the present embodiment can heat precooked food other than precooked fried food and can heat, for example, boxed meals. The food composition control device in the present embodiment can be used as an apparatus for delivering food while keeping food warm when meals are served to inpatients in a hospital, for example.

<Fifth Embodiment: Evaluation Test>

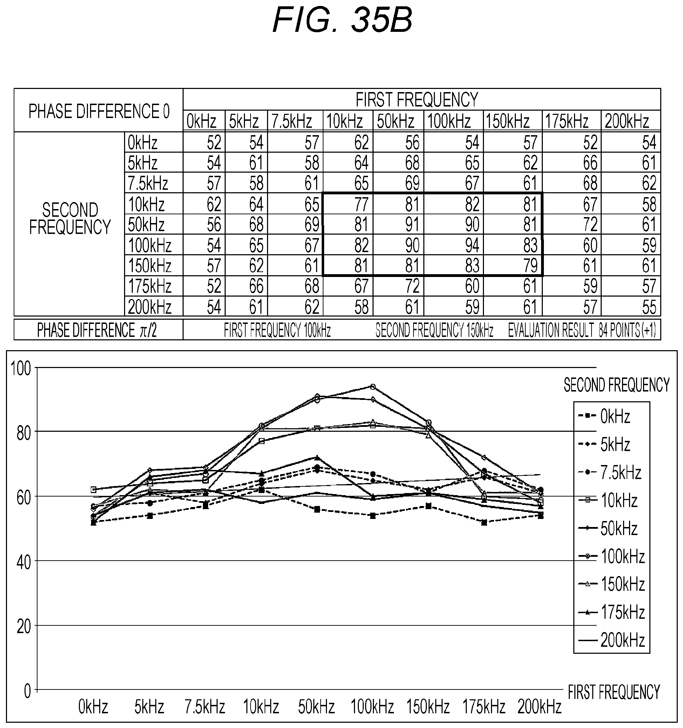

A sensory test similar to the test performed in the third embodiment or the fourth embodiment was conducted on "beef" with the configuration shown in FIG. 35A(a). Two hundred grams of meat for steak were heated for two minutes on each side, in total, for four minutes. The temperature of the high-temperature food cooking portion was set to 240°C. The first frequency was applied from the antenna function portion also serving as a high-temperature food cooking portion. FIG. 35B shows the result of this test. The rating is high when both of the first frequency and the second frequency are in a range of 10 kHz to 150 kHz. The result when a phase difference is applied between the first frequency and the second frequency is 84 points, one point up.

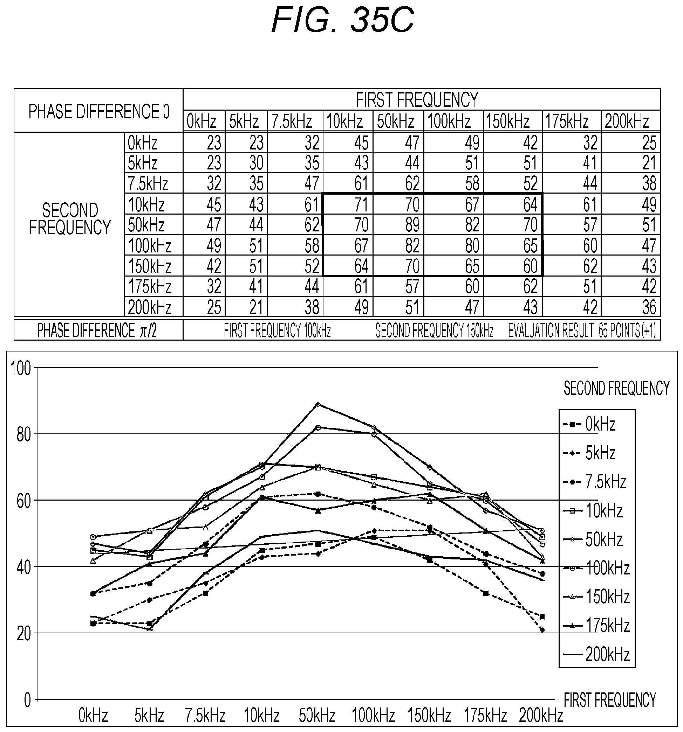

With the configuration shown in FIG. 35A(d), a sensory test was conducted on "french fries". Precooked french fries were placed on the high-temperature food cooking portion and kept warm at 60°C for 60 minutes. FIG. 35C shows the result of this sensory test. The rating is high when both of the first frequency and the second frequency are in a range of 10 kHz to 150 kHz. The result when a phase difference is applied between the first frequency and the second frequency is 66 points, one point up.

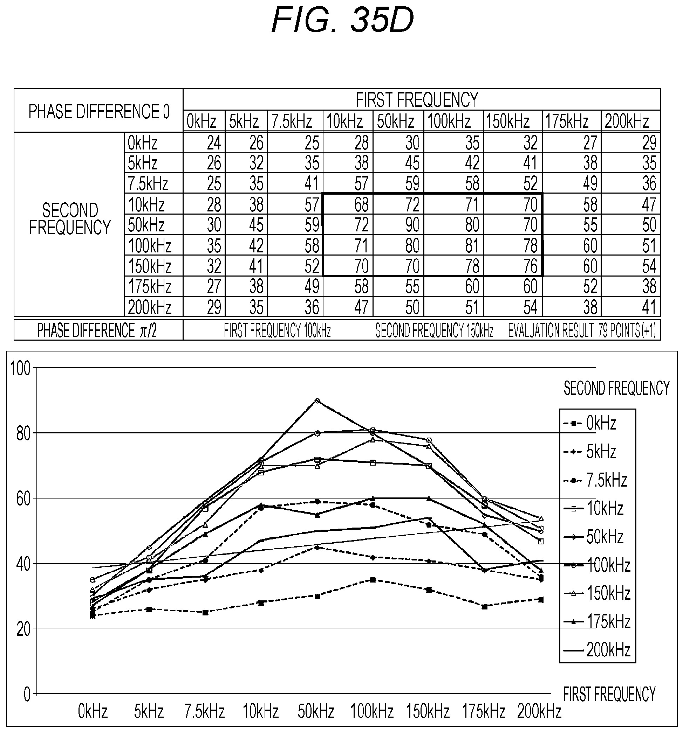

With the configuration shown in FIG. 35A(d), a sensory test was conducted on "fried chicken". Precooked fried chicken was placed on the high-temperature food cooking portion and kept warm at 60°C for 60 minutes. FIG. 35D shows the result of this sensory test. The rating is high when both of the first frequency and the second frequency are in a range of 10 kHz to 150 kHz. The result when a phase difference is applied between the first frequency and the second frequency is 79 points, one point up.

<Fifth Embodiment: Effects>

With the food composition control device in the present embodiment, the food heated at high temperature in the high-temperature food cooking portion can be cooked for a short time. In addition, when precooked food is stored at high temperature in the high-temperature food cooking portion, the eating quality and the food texture immediately after cooking can be kept for a long time.

<<Sixth Embodiment>>

<Sixth Embodiment: Overview>

The food composition control device in the present embodiment is based on the second embodiment, further includes a room-temperature food cooking portion in which food is placed at room temperature, and is characterized by performing food composition control at room temperature.

<Sixth Embodiment: Configuration>

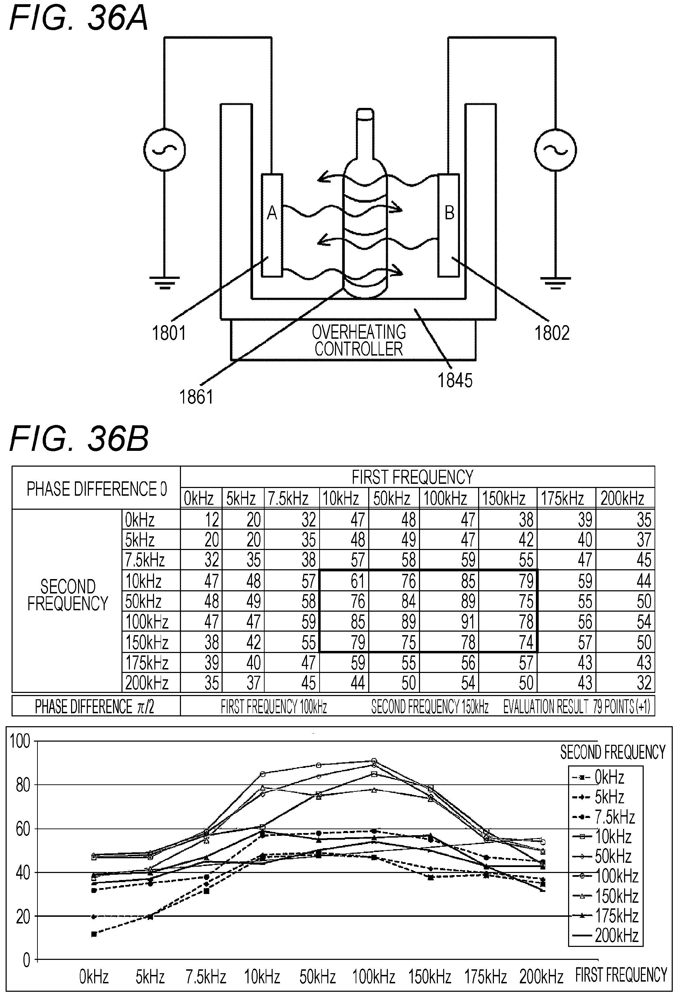

FIG. 36A is a conceptual diagram showing an overview of the food composition control device in the present embodiment. The food composition control device in the present embodiment further includes a room-temperature food cooking portion (1845) in which food (1861) is placed at room temperature. A pair of antenna function portions (1801, 1802) are disposed to form an electromagnetic field in the room-temperature food cooking portion. In the food composition control device in the present embodiment, room temperature is preferably temperature of 10°C or higher to 40°C or lower.

<Sixth Embodiment: Examples>

Wine a few days after opening and oxidized was placed in the room-temperature food cooking portion, and the room-temperature food cooking portion formed an electromagnetic field for 10 minutes, whereby aroma and taste were improved. When wine immediately after opening was brought into contact with an electromagnetic field for 10 minutes, aroma and taste were improved, resulting in a wine having a flavor of aging wine. There is no difference in effect between wine put into a decanter with no stopper and placed in the room-temperature food cooking portion and wine put into a bottle with a lid on and placed in the room-temperature food cooking portion. When unopened wine was stored in the room-temperature food cooking portion in which an electromagnetic field was formed, aroma and taste were improved compared with unopened wine stored in a room. In addition to the room-temperature food cooking portion, the food composition control device in the present embodiment may further include a vapor supply portion to supply water vapor or/and water spray to control the humidity as described later. When food such as wine is stored for a long time, it is preferable that humidity is controlled by the vapor supply portion.

<Sixth Embodiment: Evaluation Test>

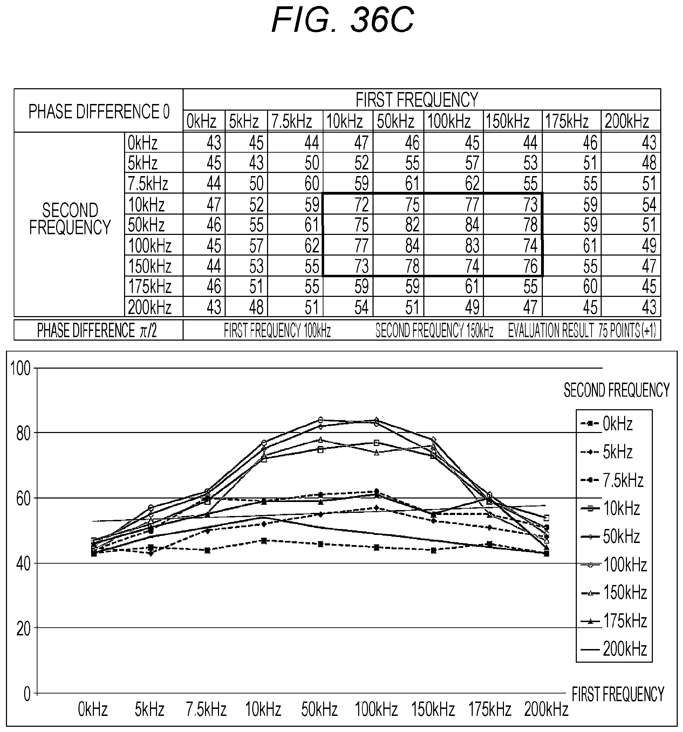

A sensory test similar to the test performed in the third embodiment to the fifth embodiment was conducted on "wine". The container that forms the room-temperature food cooking portion has inner dimensions of 50 cm in width, 40 cm in depth, and 30 cm in height. The antenna function portions that constitute a pair of antenna function portions (general type) are disposed about 1 cm apart from the side walls facing each other in the width direction of the container, and the distance between the antenna plate surfaces of the antenna function portions is about 48 cm. The antenna function portions are each disposed such that the lengthwise direction of the antenna function portion extends along the depth direction of the container. Both ends in the lengthwise direction of the antenna function portion are disposed about 5 cm apart from the side walls facing each other in the depth direction of the container. Wine 10 days after opening was placed substantially at the center of the container that forms the room-temperature food cooking portion. After processing at 15°C for 10 minutes, the wine having the food composition controlled was evaluated in terms of two items: taste and aroma. FIG. 36B shows the result of this test. The rating is high when both of the first frequency and the second frequency are in a range of 10 kHz to 150 kHz. The result when a phase difference is applied between the first frequency and the second frequency is 79 points, one point up.
Wine immediately after opening was also tested under a similar environment as in the test above. Similarly, after processing at 15°C for 10 minutes, the wine having the food composition controlled was evaluated in terms of two items: taste and aroma. FIG. 36C shows the result of this test. The rating is high when both of the first frequency and the second frequency are in a range of 10 kHz to 150 kHz. The result when a phase difference is applied between the first frequency and the second frequency is 75 points, one point up.

<Sixth Embodiment: Effects>

With the food composition control device in the present embodiment, the taste and aroma of food in contact with an electromagnetic field in the room-temperature food cooking portion can be enhanced or improved.

<<Seventh Embodiment>>

<Seventh Embodiment: Overview>

The food composition control device in the present embodiment is based on the second embodiment, further includes a refrigerated food cooking portion for refrigerating food and a refrigerating portion for refrigerating the refrigerated food cooking portion, and is characterized by performing composition control while storing food in the refrigerated food cooking portion.

<Seventh Embodiment: Configuration>

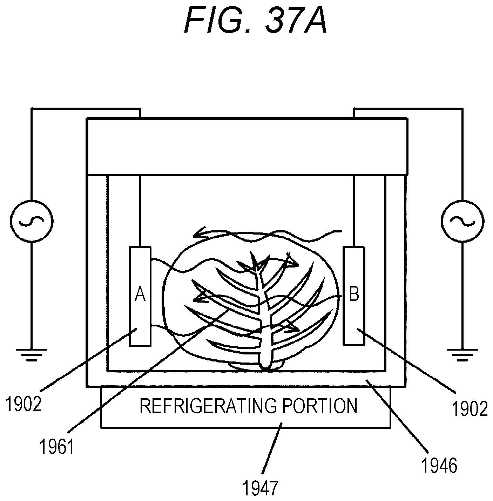

FIG. 37A is a conceptual diagram showing an overview of the food composition control device in the present embodiment. The food composition control device in the present embodiment further includes a refrigerated food cooking portion (1946) for refrigerating food (1961) and a refrigerating portion (1947) for refrigerating the refrigerated food cooking portion. A pair of antenna function portions (1901, 1902) are disposed to form an electromagnetic field in the refrigerating layer. In the food composition control device in the present embodiment, refrigerating is preferably at temperatures of 0°C or higher to 10°C or lower.

<Seventh Embodiment: Examples>

After the refrigerated food cooking portion is cooled by the refrigerating portion, lettuce was placed in the refrigerated food cooking portion and refrigerated for seven days while an electromagnetic field was formed. The lettuce was not discolored and stayed fresh. Similarly, when lettuce was refrigerated for seven days without forming an electromagnetic field, the lettuce was withered and discolored. The lettuce refrigerated in the food composition control device in the present embodiment was fresh and felt crunchy. On the other hand, the lettuce refrigerated without forming an electromagnetic field did not taste fresh or crunchy even at a non-discolored portion.

After the refrigerated food cooking portion was cooled by the refrigerating portion, tuna fillet for sashimi was placed in the refrigerated food cooking portion and refrigerated at a temperature around zero degree for seven days while an electromagnetic field was formed. The tuna fillet was not discolored and stayed fresh. Similarly, when tuna fillet for sashimi was refrigerated for seven days without forming an electromagnetic field, the tuna fillet was darkly discolored. Tuna sashimi refrigerated in the food composition control device in the present embodiment tasted good and did not have a fishy smell. On the other hand, tuna sashimi refrigerated without forming an electromagnetic field did not taste good and had a fishy smell, even at a non-discolored portion. In this way, the food composition control device in the present embodiment can form an electromagnetic field at a temperature near zero degree, just above the temperature at which food is frozen, or at a temperature at which food is slightly frozen.

<Seventh Embodiment: Evaluation Test>

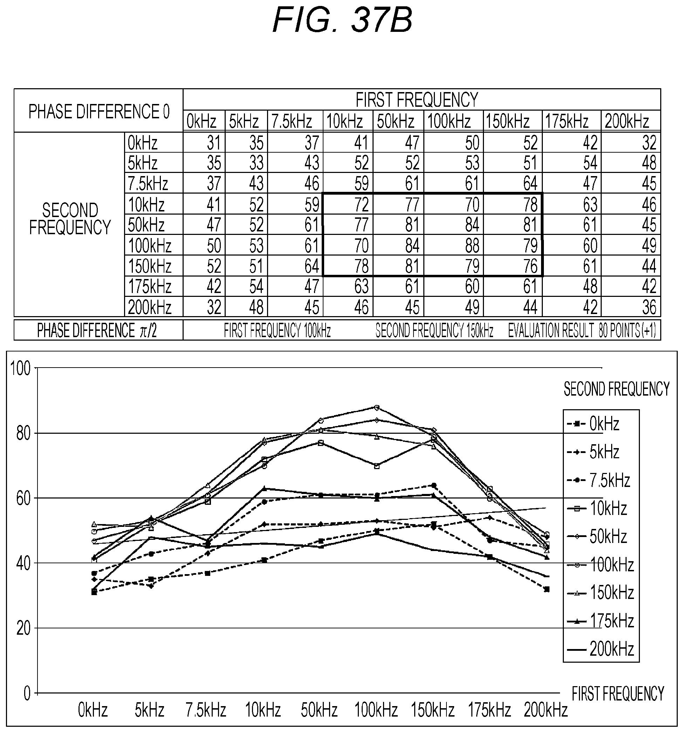

A sensory test similar to the test performed in the third embodiment to the sixth embodiment was conducted on "lettuce". The food composition control device is as shown in the conceptual diagram in FIG. 37A. Specifically, a container that forms the refrigerated food cooking portion has inner dimensions of 50 cm in width, 40 cm in depth, and 30 cm in height. The antenna function portions that constitute a pair of antenna function portions (general type) are disposed about 1 cm apart from the side walls facing each other in the width direction of the container, and the distance between the antenna plate surfaces of the antenna function portions is about 48 cm. The antenna function portions are each disposed such that the lengthwise direction of the antenna function portion extends along the depth direction of the container. Both ends in the lengthwise direction of the antenna function portion are disposed about 5 cm apart from the side walls facing each other in the depth direction of the container. Lettuce was placed in the container of the refrigerated food cooking portion kept at temperatures of 5 to 7°C and processed for seven days. The lettuce was evaluated in terms of two items: taste and texture. FIG. 37B shows the result of this test. The rating is high when both of the first frequency and the second frequency are in a range of 10 kHz to 150 kHz. The result when a phase difference is applied between the first frequency and the second frequency is 80 points, one point up.

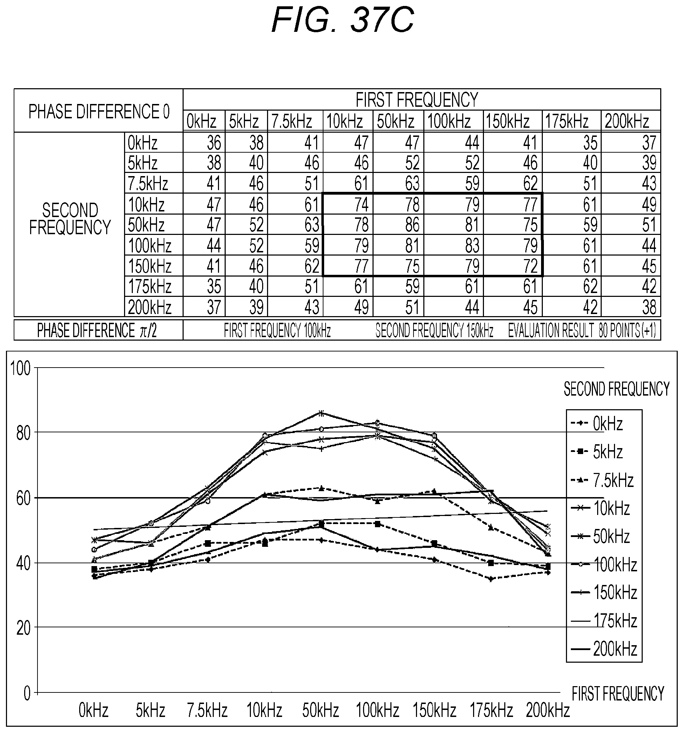

A test was conducted similarly on "tuna" using the refrigerated food cooking portion described above. Tuna fillet for sashimi (about 500 g) was placed in the container of the refrigerated food cooking portion kept at temperatures of 5 to 7°C and processed for seven days, and sashimi prepared from this fillet was evaluated in terms of two items: taste and color. FIG. 37C shows the result of this test. The rating is high when both of the first frequency and the second frequency are in a range of 10 kHz to 150 kHz. The result when a phase difference is applied between the first frequency and the second frequency is 80 points, one point up.

<Seventh Embodiment: Effects>

With the food composition control device in the present embodiment, the food stored in the refrigerated food cooking portion can be kept in a fresh state for a long time.

<<Eighth Embodiment>>

<Eighth Embodiment: Overview>

The food composition control device in the present embodiment is based on the second embodiment, further includes a low-temperature refrigerated food cooking portion for storing food by low-temperature refrigeration, and is characterized by performing composition control while storing food by low-temperature refrigeration.

<Eighth Embodiment: Configuration>

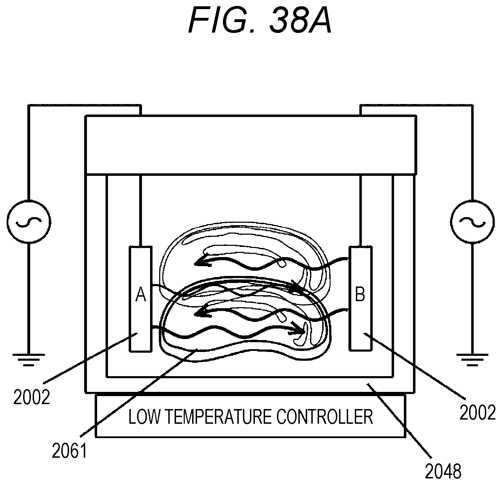

FIG. 38A is a conceptual diagram showing an overview of the food composition control device in the present embodiment. The food composition control device in the present embodiment further includes a low-temperature refrigerated food cooking portion (2048) for storing food (2061) by low-temperature refrigeration. A pair of antenna function portions (2001, 2002) are disposed to form an electromagnetic field in the low-temperature refrigerated food cooking portion. Chilling often refers to a temperature range of near 0°C, ice temperature refers to a temperature range of near minus 1°C, and partial freezing refers to a temperature range of near minus 3°C. In the food composition control device in the present embodiment, low-temperature refrigeration is preferably at temperatures of minus 5°C or higher to 0°C or lower. In the food composition control device in the present embodiment, storing by low-temperature refrigeration refers to keeping freshness in a temperature range in which food is not frozen.

<Eighth Embodiment: Examples>

About 2 kg of meat was placed in the low-temperature refrigerated food cooking portion for storage by low-temperature refrigeration (minus 2°C to 0°C) and stored for 30 days while an electromagnetic field was formed. The meat was then cut into about 200 g of a steak. Similarly, beef stored in the low-temperature refrigerated food storing portion for 30 days without forming an electromagnetic field was cooked into to a steak. The steak made from beef stored in the food composition control device in the present embodiment had a concentrated flavor with no smell unique to meat, and the eating quality was excellent. On the other hand, a steak of beef refrigerated without forming an electromagnetic field did not taste good and had smell unique to meat.

<Eighth Embodiment: Evaluation Test>

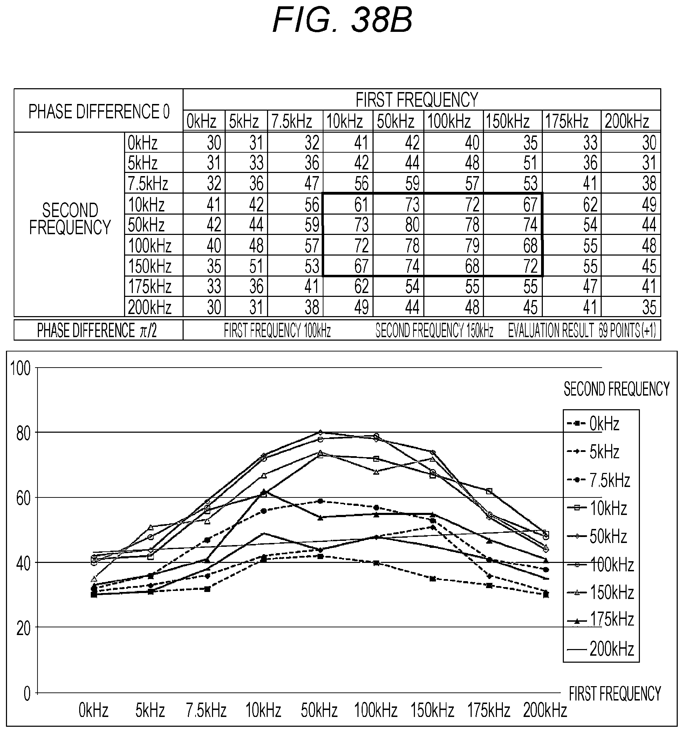

A sensory test similar to the test performed in the third embodiment to the seventh embodiment was conducted on "beef". The food composition control device is as shown in a conceptual diagram FIG. 38A. Specifically, the container that forms the low-temperature refrigerated food cooking portion has inner dimensions of 50 cm in width, 40 cm in depth, and 30 cm in height. The antenna function portions that constitute a pair of antenna function portions (general type) are disposed about 1 cm apart from the side walls facing each other in the width direction of the container, and the distance between the antenna plate surfaces of the antenna function portions is about 48 cm. The antenna function portions are each disposed such that the lengthwise direction of the antenna function portion extends along the depth direction of the container. Both ends in the lengthwise direction of the antenna function portion are disposed about 5 cm apart from the side walls facing each other in the depth direction of the container. Two kilograms of a beef lump was placed in the low-temperature refrigerated food cooking portion kept at temperatures of minus 5 to minus 2°C and processed for 30 days. Two hundred grams prepared from the beef were evaluated in terms of two items: taste and texture. FIG. 38B shows the result of this test. The rating is high when both of the first frequency and the second frequency are in a range of 10 kHz to 150 kHz. The result when a phase difference is applied between the first frequency and the second frequency is 69 points, one point up.

<Eighth Embodiment: Effects>

The food composition control device in the present embodiment can improve umami components such as glutamic acids in the food stored in the low-temperature refrigerated food cooking portion and can mature the food.

<<Ninth Embodiment>>

<Ninth Embodiment: Overview>

The food composition control device in the present embodiment is based on the second embodiment, further includes a food placement portion for defrosting frozen food, and is characterized by performing composition control while defrosting the food.

<Ninth Embodiment: Configuration>

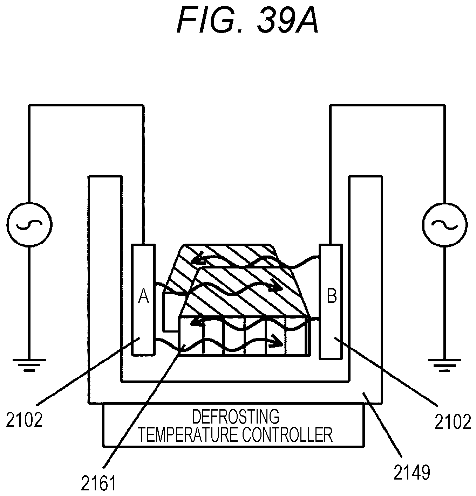

FIG. 39A is a conceptual diagram showing an overview of the food composition control device in the present embodiment. The food composition control device in the present embodiment further includes a food defrost cooking portion (2149) for defrosting frozen food such as tuna fillet. A pair of antenna function portions (2101, 2102) are disposed to form an electromagnetic field in the food defrost cooking portion. The temperature at which food is defrosted in the food composition control device in the present embodiment is preferably, but not limited to, 15°C or lower. However, it is needless to say that some food can be defrosted at room temperature or high temperatures.

<Ninth Embodiment: Examples>

A packaged product containing four slices of 200 g frozen beef was obtained, and one slice of the beef was placed in the food defrost cooking portion for defrosting frozen food and defrosted while an electromagnetic field was formed for 10 minutes in the food defrost cooking portion. Another slice of four slices was left in a refrigerator overnight and defrosted. Each slice was cooked into a steak, and the eating quality was compared. No drip loss was observed in the beef defrosted in the food composition control device in the present embodiment, whereas drip loss during defrosting was observed in the beef defrosted in the refrigerator, and the beef was discolored. The steak of beef defrosted in the food composition control device in the present embodiment did not taste dried out and was juicy. On the other hand, the steak of beef defrosted in the refrigerator tasted dried out and was not juicy.

<Ninth Embodiment: Evaluation Test>

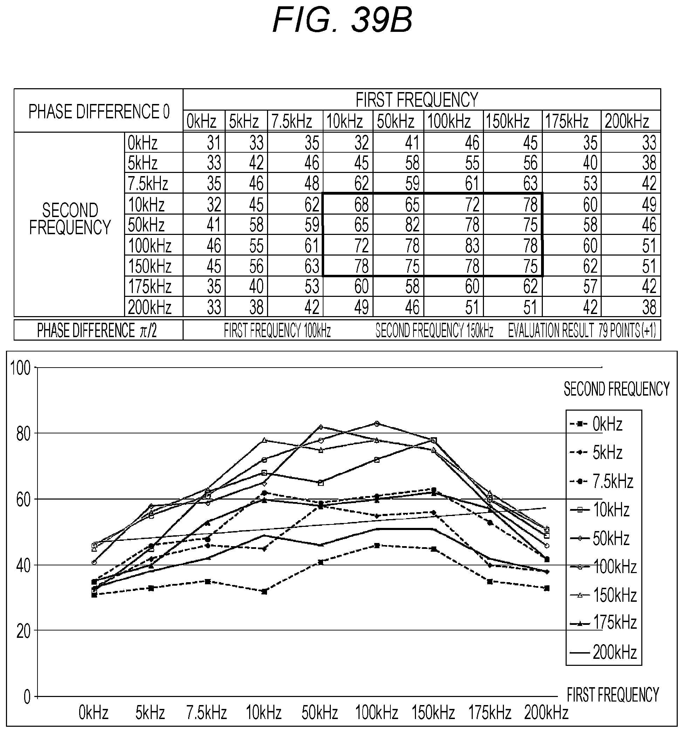

A sensory test similar to the test performed in the third embodiment to the eighth embodiment was conducted on "tuna". The food composition control device is as shown in the conceptual diagram in FIG. 39A. Specifically, the container that forms the food defrost cooking portion has inner dimensions of 50 cm in width, 40 cm in depth, and 30 cm in height. The antenna function portions that constitute a pair of antenna function portions (general type) are disposed about 1 cm apart from the side walls facing each other in the width direction of the container, and the distance between the antenna plate surfaces of the antenna function portions is about 48 cm. The antenna function portions are each disposed such that the lengthwise direction of the antenna function portion extends along the depth direction of the container. Both ends in the lengthwise direction of the antenna function portion are disposed about 5 cm apart from the side walls facing each other in the depth direction of the container. Two hundred grams of frozen tuna fillet were placed in the food defrost cooking portion and processed for 10 minutes and defrosted. Sashimi prepared from the tuna fillet was evaluated in terms of two items: taste and texture. FIG. 39B shows the result of this test. The rating is high when both of the first frequency and the second frequency are in a range of 10 kHz to 150 kHz. The result when a phase difference is applied between the first frequency and the second frequency is 79 points, one point up.

<Ninth Embodiment: Effects>

The food composition control device in the present embodiment can reduce the time for defrosting food without causing uneven defrosting.

<<Tenth Embodiment>>

<Tenth Embodiment: Overview>

The food composition control device in the present embodiment is based on the third embodiment to the ninth embodiment, further includes a vapor supply portion for supplying water vapor or/and water spray in the cooking portions shown in the third embodiment to the ninth embodiment, and is characterized by performing composition control while replenishing water in food by supplying water vapor or/and water spray.

<Tenth Embodiment: Configuration>

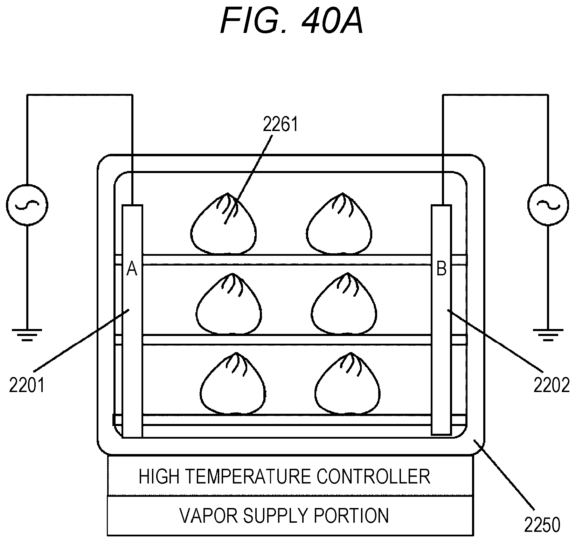

FIG. 40A is a conceptual diagram showing an overview of the food composition control device in the present embodiment. The food composition control device in the present embodiment further includes a vapor supply portion (2250) for supplying water vapor or/and water spray in the cooking portion shown in the third embodiment to the ninth embodiment. A pair of antenna function portions (2201, 2202) are disposed to form an electromagnetic field in a high-temperature food cooking portion (2244), which is one of the cooking portions. The temperature inside the food composition control device in the present embodiment is not limited. The food composition can be controlled at temperatures suitable for the cooking portions shown in the third embodiment to the ninth embodiment.

<Tenth Embodiment: Examples>

FIG. 40A is a conceptual diagram showing an overview of the food composition control device in the present embodiment. Referring to FIG. 40A, an example of keeping food warm with the high-temperature food cooking portion and the vapor supply portion will be described. Frozen meat buns were placed in the high-temperature food cooking portion (2244) of the food composition control device in the present embodiment. When the frozen meat buns were cooked with an electromagnetic field while water vapor or water spray was supplied from the vapor supply portion (2250), the cooking time was reduced compared with cooking without forming an electromagnetic field.

An example of heating precooked food is described using FIG. 40A. This is an example of continuing heating for precooked warm food and an example of the food composition control device for keeping food warm. Cooked meat buns were placed on the high-temperature food cooking portion (2244) of the food composition control device, and the cooked meat buns were heated with an electromagnetic field while water vapor and water spray were supplied from the vapor supply portion (2250). Even after 30 minutes, the state immediately after cooking remained almost the same, the meat buns did not look watery or dried and tasted fluffy like immediately after cooking. On the other hand, when the cooked meat buns were heated continuously for 30 minutes while water vapor and water spray were supplied from the vapor supply portion without forming an electromagnetic field, the mean buns looked watery and the texture was also watery. When the cooked meat buns were heated continuously for 30 minutes with an electromagnetic field and without supplying water vapor or water spray from the vapor supply portion, the meat buns looked dry and shrunken and had tough texture.

In this way, the food composition control device in the present embodiment can be used as a steamer or a steam convection oven. In the food composition control device in the present embodiment, the food composition control device having the room-temperature food cooking portion, the refrigerated food cooking portion, the low-temperature refrigerated food cooking portion, or the food defrost cooking portion, other than the high-temperature food cooking portion, may have the vapor supply portion for supplying water vapor or/and water spray to cook food by controlling the water content in the food.

<Tenth Embodiment: Evaluation Test>

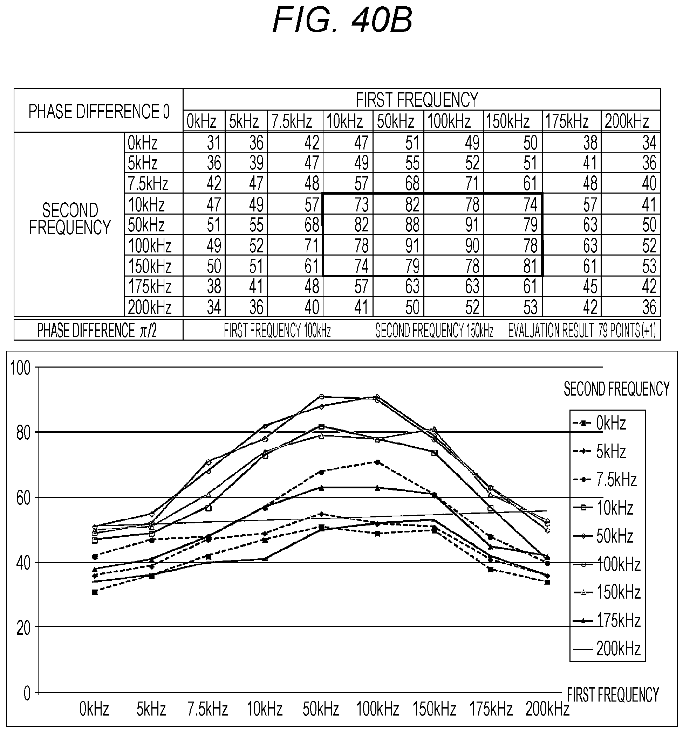

A sensory test similar to the test performed in the third embodiment to the ninth embodiment was conducted on "meat buns". The food composition control device is as shown in the conceptual diagram in FIG. 40A. Specifically, the container that forms the high-temperature food cooking portion has inner dimensions of 50 cm in width, 40 cm in depth, and 30 cm in height. The antenna function portions that constitute a pair of antenna function portions (general type) are disposed about 1 cm apart from the side walls facing each other in the width direction of the container, and the distance between the antenna plate surfaces of the antenna function portions is about 48 cm. The antenna function portions are each disposed such that the lengthwise direction of the antenna function portion extends along the depth direction of the container. Both ends in the lengthwise direction of the antenna function portion are disposed about 5 cm apart from the side walls facing each other in the depth direction of the container. The vapor supply portion is configured to supply water vapor or/and water into the container. The cooked meat buns were placed in the container of the high-temperature food cooking portion and kept warm for 30 minutes with water vapor and water spray supplied from the vapor supply portion. FIG. 40B shows the result of this test. The rating is high when both of the first frequency and the second frequency are in a range of 10 kHz to 150 kHz. The result when a phase difference is applied between the first frequency and the second frequency is 79 points, one point up.

<Tenth Embodiment: Effects>

Water vapor or/and water spray is supplied to the cooking portions shown in the third embodiment to the ninth embodiment to replenish water in the food or to control the humidity of the environment in which food is put, whereby the water content in the food can be controlled. This configuration can further enhance the effects of food control by the food composition control device of the present invention, such as enhancement and improvement of the eating quality or keeping food fresh for a long time.

<<Eleventh Embodiment>>

<Eleventh Embodiment: Overview>

The food composition control device in the present embodiment is based on the second embodiment, further includes a frozen food storing portion for storing food by freezing, and is characterized by performing composition control while storing food by freezing.

<Eleventh Embodiment: Configuration>

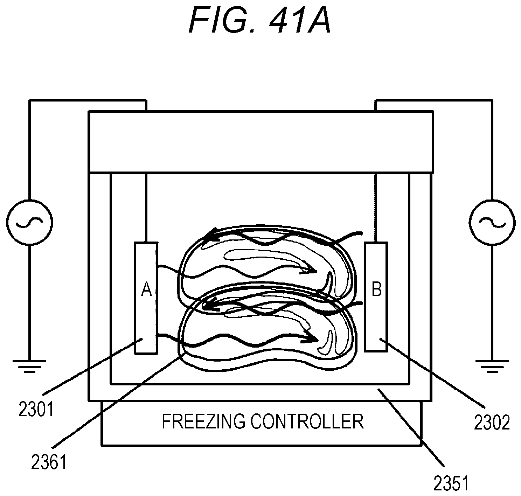

FIG. 41A is a conceptual diagram showing an overview of the food composition control device in the present embodiment. The food composition control device in the present embodiment further includes a frozen food storing portion (2351) for storing food by freezing. A pair of antenna function portions (2301, 2302) are disposed to form an electromagnetic field in the frozen food storing portion. In the food composition control device in the present embodiment, freezing is preferably at temperatures of minus 60°C or higher to minus 5°C or lower. The frozen food storing portion of the food composition control device in the present embodiment can perform cooking, for example, making freeze-dried food by freeze-drying or mixing ice cream with fruits or nuts.

<Eleventh Embodiment: Examples>

About 200 g of beef was placed in the frozen food storing portion for freeze-storage and stored for 60 days while an electromagnetic field was formed. After defrosting, a steak was made. Similarly, beef stored in the frozen food storing portion without forming an electromagnetic field was cooked into a steak. Almost no drip loss occurred during defrosting in the beef stored in the food composition control device in the present embodiment, whereas drip loss occurred during defrosting in the beef defrosted without forming an electromagnetic field, and the beef was discolored. The steak of beef stored in the food composition control device in the present embodiment did not taste dried out and was juicy. On the other hand, the steak of beef stored without forming an electromagnetic field tasted dried out and was not juicy.

<Eleventh Embodiment: Evaluation Test>

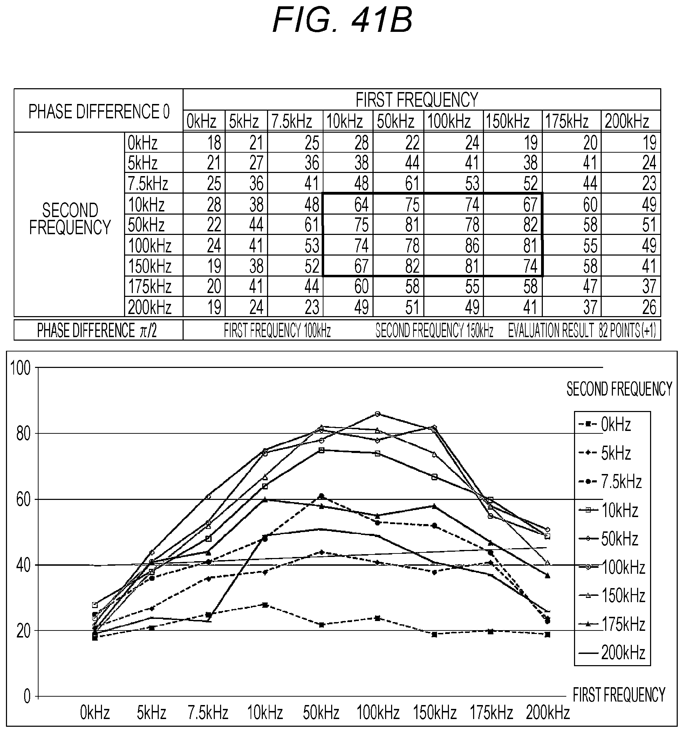

A sensory test similar to the test performed in the third embodiment to the tenth embodiment was conducted on "beef". The food composition control device is as shown in the conceptual diagram in FIG. 41A. Specifically, the container that forms the frozen food storing portion has inner dimensions of 50 cm in width, 40 cm in depth, and 30 cm in height. The antenna function portions that constitute a pair of antenna function portions (general type) are disposed about 1 cm apart from the side walls facing each other in the width direction of the container, and the distance between the antenna plate surfaces of the antenna function portions is about 48 cm. The antenna function portions are each disposed such that the lengthwise direction of the antenna function portion extends along the depth direction of the container. Both ends in the lengthwise direction of the antenna function portion are disposed about 5 cm apart from the side walls facing each other in the depth direction of the container. Then, 200 g of beef for steak was placed in the frozen food storing portion for 60 days. The beef was defrosted to room temperature, cooked into a steak, and evaluated in terms of two items: taste and texture. FIG. 41B shows the result of this test. The rating is high when both of the first frequency and the second frequency are in a range of 10 kHz to 150 kHz. The result when a phase difference is applied between the first frequency and the second frequency is 82 points, one point up.

<Eleventh Embodiment: Effects>

The food composition control device in the present embodiment can suppress growth of ice crystals in the food stored in the frozen food storing portion and thus can prevent drip loss during defrosting due to growth of ice crystals. Accordingly, degradation of food stored by freezing can be prevented, and the eating quality can be maintained.

<<Twelfth Embodiment>>

Japanese Patent No. 4637051 discloses a water activating device in which the north pole and the south pole of a pair of permanent magnets are disposed to face each other with a water pipe interposed therebetween, and a paramagnetic metal plate and a diamagnetic metal plate are disposed in a direction at the right angle to the magnetic line of force of the permanent magnets. The paramagnetic metal plate is a nickel-plated copper plate or a nickel single metal plate. The diamagnetic metal plate is a silver-plated copper plate or a single metal plate of copper or silver. The paramagnetic metal plate and the diamagnetic metal plate are connected through a good conductive wire to form a contact battery. The description, the claims, and the drawings of Japanese Patent No. 4637051 are incorporated herein by reference.

A molecular arrangement adjusting unit, a molecular arrangement adjusting device, and a transportation method using the same according to a twelfth embodiment adjust the arrangement of molecules of a liquid with a simple structure and at low costs and can keep an object such as food and beverages fresh.

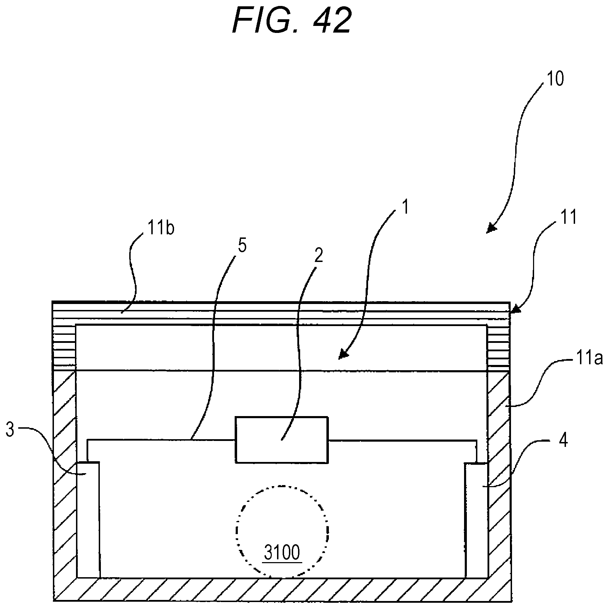

FIG. 42 is a diagram showing the molecular arrangement adjusting unit and the molecular arrangement adjusting device according to the present embodiment.

The molecular arrangement adjusting unit 1 in the present embodiment includes a power source 2 for generating alternating current, a first electrode 3 coupled to one electrode of the power source 2, a second electrode 4 coupled to the other electrode of the power source 2, and a wire 5 coupling one electrode of the power source 2 with the first electrode 3 and coupling the other electrode of the power source 2 with the second electrode 4.

An AC power source with an effective value of voltage of 100 V to 200 V and a frequency of about 5 kHz to 200 kHz may be used as the power source 2. Direct current from a DC power source may be converted into alternating current using an inverter or the like. The DC power source may be a 12V battery or a dry battery, for example. The power source 2 may adjust voltage, frequency, phase, and the like. A not-shown switch may be used for ON/OFF control of the power source 2. In addition, for example, a timer may be used to power on the power source 2 only for a certain time and subsequently power off the power source 2.

The first electrode 3 and the second electrode 4 are disposed with a space therebetween. The first electrode 3 and the second electrode 4 are formed of a conductive material such as metal or metal alloy. For example, when the first electrode 3 and the second electrode 4 are members such as copper plates or aluminum plates, they can be made thin and modified in shape and thus can be lightweight and installed in a small space.

The first electrode 3 and the second electrode 4 may have surfaces coated with an insulating material. The coating of an insulating material can prevent users of the fryer 1 from receiving an electric shock.

The wire 5 is a conductive material. For example, the conductive material used for the wire 5 may be metal such as copper or aluminum or metal alloy, or may be carbon. Preferably, the wire 5 is coated with an insulating material on its periphery.

The molecular arrangement adjusting unit 1 in the present embodiment is installed in a container 11 to configure the molecular arrangement adjusting device 10. An object 3100 of which molecular arrangement is to be adjusted is installed in the container 11. The container 11 is preferably an insulating member. When the container 11 is a conductive member, the first electrode 3 and the second electrode 4 are installed in an insulated state. The container 11 in the present embodiment has a box 11a in which the object 3100 and the molecular arrangement adjusting unit 1 are installed and a lid 11b closing the opening of the box 11a.

The container 11 does not necessarily have the lid 11b and may only have the box 11a. The object 3100 and the molecular arrangement adjusting unit 1 may be installed in the lid 11b. One of the object 3100 and the molecular arrangement adjusting unit 1 may be installed in the box 11a, and the other may be installed in the lid 11b.

The molecular arrangement adjusting unit 1 activates the power source 2, for example, by a not-shown switch. An electric field is then generated between the first electrode 3 and the second electrode 4.

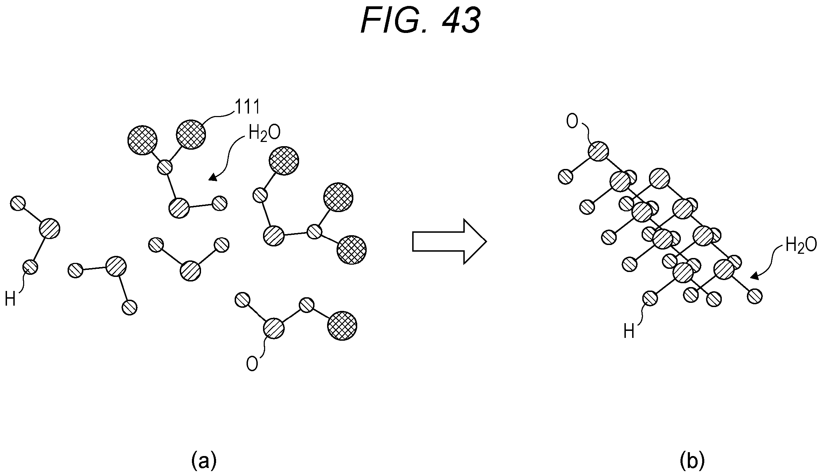

FIG. 43 is a diagram showing the arrangement of water molecules of an object in a normal state and the arrangement of water molecules $H_2O$ of an object in an electric field generated between the first electrode 3 and the second electrode 4.

The object 3100 includes a liquid ingredient. For example, the object 3100 may be food such as meats, fish, and vegetables, beverages or plant/animal cells or oils and fats. The object 3100 in the present embodiment includes water molecules $H_2O$.

Water molecules $H_2O$ are usually arranged irregularly, as shown in FIG. 43A. Hence, hydrogen atoms H take in active oxygen 111 or generate hydrogen bonds, so that the size of water molecules $H_2O$ increases and water molecules $H_2O$ become inert. Oxidation of water molecules $H_2O$ then starts.

By contrast, when an electric field is generated between the first electrode 3 and the second electrode 4, water molecules $H_2O$ tend to orient in a certain direction. This is because oxygen atoms O of water molecules $H_2O$ that have strong force of attracting electrons become slightly minus and hydrogen atoms H that tend to release electrons become slightly positive, and they are apt to turn to the direction of the electric field between the first electrode 3 and the second electrode 4.

Since the power source 2 generates alternating current, water molecules $H_2O$ change directions alternately. Since the power source 2 in the present embodiment generates alternating current of about 50 kHz, water molecules $H_2O$ change directions about 50,000 times per second and appear to be vibrating. As this vibration is repeated, as shown in FIG. 43B, the hydrogen bonds of water molecules $H_2O$ to active oxygen 111 or other ingredients are cut off, and water molecules $H_2O$ gradually become finely particulate and regularly arranged. The frequency of alternating current generated from the power source 2 may be in a range of 5 kHz to 200 kHz.

Water will now be described. Water can be classified into "bound water" and "free water". Bound water is bound by hydrogen bonding to other ingredients and stable. By contrast, free water is freely movable and is fresh and not stale (see FIG. 43A). However, free water has molecules easily bonded to the other ingredients and is easily rotten.

Water molecules $H_2O$ regularly arranged by the molecular arrangement adjusting unit 1 in the present embodiment form a pearl-chain structure in which free water is bound into a stable state like bound water. To be more specific, water molecules $H_2O$ regularly arranged by the molecular arrangement adjusting unit 1 in the present embodiment are not bonded to other ingredients, although they are free water, and can stay fresh and not stale.

The molecular arrangement adjusting device 10 including the molecular arrangement adjusting unit 1 in the present embodiment installed in the container 11 therefore can adjust the liquid molecule arrangement of the object 3100 and can keep freshness of the object 3100. For example, the molecular arrangement adjusting device 10 can be used as a transportation container to transport an object farther than now while keeping freshness. The container 11 may be, for example, styrene foam, and the molecular arrangement adjusting unit 1 in the present embodiment may be attached to the existing styrene foam to form a transportation container.

Water molecules $H_2O$ once regularly arranged by the molecular arrangement adjusting unit 1 in the present embodiment are kept in the regularly arranged state for a few days. Therefore, even when the object 3100 is stored in another container after the liquid molecular arrangement in the cells of the object 3100 is adjusted in the molecular arrangement adjusting device 10 including the molecular arrangement adjusting unit 1 in the present embodiment installed in the container 11, the freshness of the object 3100 can be kept. Even when the object 3100 is moved to and transported in another transportation container after the liquid molecular arrangement of the object 3100 is adjusted in the molecular arrangement adjusting device 10 including the molecular arrangement adjusting unit 1 in the present embodiment installed in the container 11, the object 3100 can be transported farther than now while keeping fresh.

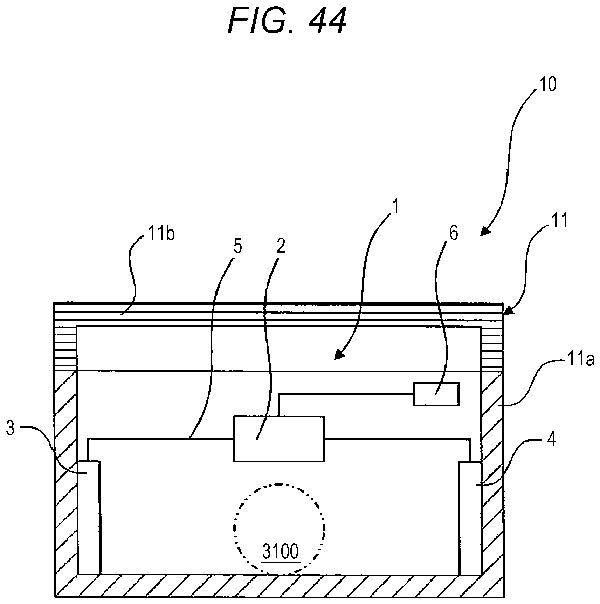

FIG. 44 is a diagram showing an example including a temperature controller in the molecular arrangement adjusting unit in the present embodiment.

As shown in FIG. 44, the molecular arrangement adjusting unit 1 in the present embodiment may include a temperature controller 6 for controlling the ambient temperature. The temperature controller 6 can regulate the inside of the container 11 to a predetermined temperature. For example, when the inside of the container 11 is set in a refrigerated state, the fresh state can be maintained for a long time. Food or beverage may be transported in a refrigerated state in the container 11, and its temperature may be increased during transportation to be ready for eating or drinking on arrival.

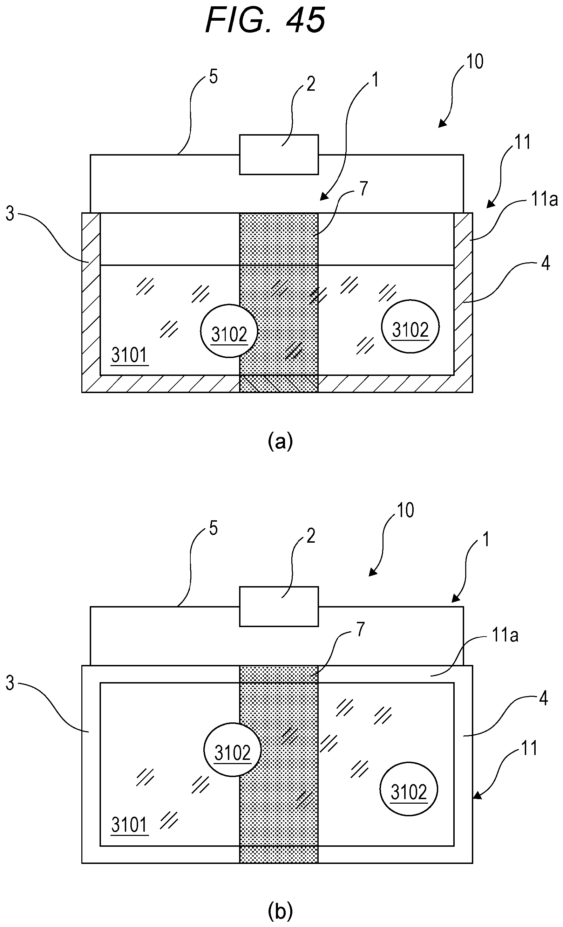

FIG. 45 is a diagram showing the molecular arrangement adjusting device according to another embodiment. FIG. 45(a) is a diagram showing a cross section of the molecular arrangement adjusting device 10 in another embodiment. FIG. 45(b) is a diagram showing a top view of the molecular arrangement adjusting device 10 in another embodiment.

The molecular arrangement adjusting device 10 in another embodiment shown in FIG. 45 is an example in which the container 11 also serves as electrodes 3 and 4. The container 11 of the molecular arrangement adjusting device 10 is a box 11a in the shape of a tube with a bottom. The box 11a has a first electrode 3 on one side made of a conductive material such as metal or alloy, a second electrode 4 on the other side made of a conductive material such as metal and alloy, and an insulating member 7 installed between the first electrode 3 and the second electrode 4. The first electrode 3 and the second electrode 4 are separated from each other by the insulating member 7.

The molecular arrangement adjusting device 10 in another embodiment shown in FIG. 45 contains a liquid as a first object 3101 in the box 11a and contains a second object 3102 in the liquid. The molecular arrangement adjusting device 10 in the present embodiment can adjust the liquid molecular arrangement of the first object 3101 and the second object 3102 and keep the freshness of the first object 3101 and the second object 3102. Since the box 11a serves as the electrodes 3 and 4, the molecular arrangement adjusting device 10 can be compact and slim in appearance. In the molecular arrangement adjusting device 10 in another embodiment shown in FIG. 45, the electrodes 3 and 4 are provided only in the box 11a. However, a lid 11b may be further provided, and electrodes connected to the electrodes 3 and 4 may be provided in the lid 11b.

An experiment was conducted to compare an object 3100 stored by refrigeration using the molecular arrangement adjusting device 10 in the present embodiment with an object 3100 stored using a normal refrigerator. In the molecular arrangement adjusting device 10 in this example, the power source 2 generated alternating current of about 50 kHz. The refrigerator held a temperature of about 4°C for 10 days. Bean sprouts were used as the object 3100. The bean sprouts changed as listed in Table 1 below.

[Table 1]

| Bean sprouts | Refrigerator | Molecular arrangement adjusting device |
|---|---|---|
| Before storage | 223.03 g | 215.31 g |
| After 10 days | 185.56 g | 207.46 g |
| Weight reduction ratio | 16.80% | 3.65% |
| Amount of drip loss | 26.64 g | 1.08 g |

As listed in Table 1, 223.03 g of bean sprouts before storage decreased to 185.56 g after being stored in the refrigerator for 10 days. The weight reduction ratio is 16.80% and the amount of drip loss, which is escaping water, is 26.64 g.

By contrast, 215.31 g of bean sprouts before storage, stored in the molecular arrangement adjusting device 10, decreased to 207.46 g after 10 days. The weight reduction ratio is 3.65% and the amount of drip loss, which is escaping water, is only 1.08 g.

The molecular arrangement adjusting device 10 thus can keep the water in the bean sprouts for a long time and keep the bean sprouts not stale and fresh.

In the molecular arrangement adjusting device 10 in the next example, pea sprouts were used as the object 3100. The power source 2 generated alternating current of about 50 kHz. The refrigerator held a temperature of about 4°C for 35 days. The pea sprouts changed as listed in Table 2 below.

[Table 2]

| Pea sprouts | Refrigerator | Molecular arrangement adjusting device |
|---|---|---|
| Before storage | 380.47 g | 377.56 g |
| After 35 days | 323.87 g | 347.08 g |
| Weight reduction ratio | 15.00% | 8.00% |

As listed in Table 2, 380.47 g of pea sprouts before storage decreased to 323.87 g after 35 days in the refrigerator. The weight reduction ratio is 15.00%.

By contrast, 377.56 g of pea sprouts before storage, stored in the molecular arrangement adjusting device 10, decreased to 347.08 g after 35 days. The weight reduction ratio is 8.00%.

The molecular arrangement adjusting device 10 thus can keep the water in the pea sprouts for a long time and keep the pea sprouts not stale and fresh.

As described above, the molecular arrangement adjusting unit 1 in the present embodiment includes a power source 2 for generating alternating current, a first electrode 3 coupled to one electrode of the power source 2, a second electrode 4 coupled to the other electrode of the power source 2, and a wire 5 coupling one electrode of the power source 2 with the first electrode 3 and coupling the other electrode of the power source 2 with the second electrode 4. The molecular arrangement adjusting unit can adjust the arrangement of molecules of liquid with a simple structure and at low costs and can keep the freshness.

In the molecular arrangement adjusting unit 1 in the present embodiment, the first electrode 3 and the second electrode 4 are sheet-like members. The molecular arrangement adjusting unit therefore can be made thin and modified in shape and can be lightweight and installed in a small space.

The molecular arrangement adjusting unit 1 in the present embodiment includes the temperature controller 6 for controlling the ambient temperature. The molecular arrangement adjusting unit therefore can keep a fresh state for a long term when the inside of the container 11 is refrigerated. Food or beverage may be transported in a refrigerated state in the container 11, and its temperature may be increased during transportation to be ready for eating or drinking on arrival.

The molecular arrangement adjusting device 10 in the present embodiment includes the molecular arrangement adjusting unit 1 and the container 11 in which the object 3100 of which molecular arrangement is to be adjusted and the molecular arrangement adjusting unit 1 are installed. The molecular arrangement adjusting device 10 can adjust the arrangement of molecules of liquid with a simple structure and at low costs and can keep the freshness.

In the molecular arrangement adjusting device 10 in the present embodiment, the container 11 has a part serving as the first electrode 3 and another part serving as the second electrode 4, and the insulating member 7 is installed between the first electrode 3 and the second electrode 4 to separate the first electrode 3 and the second electrode 4 from each other. The molecular arrangement adjusting device 10 therefore can be compact and slim in appearance. As used herein "the container 11 having a part serving as an electrode" means that a part of the container 11 is, for example, metal and functions as an electrode, or that a copper plate or a plate-like or sheet-like member such as an aluminum foil is attached to a part of the container 11.

In the transportation method in the present embodiment, the object 3100 of which molecular arrangement is to be adjusted is installed between the first electrode 3 and the second electrode 4 of the molecular arrangement adjusting device 10, and the object 3100 is transported while an electric field is generated between the first electrode 3 and the second electrode 4. The transportation method using the molecular arrangement adjusting device 10 therefore can adjust the arrangement of molecules of liquid with a simple structure and at low costs and can transport the object while keeping the freshness.

In the transportation method in the present embodiment, the object 3100 of which molecular arrangement is to be adjusted is installed between the first electrode 3 and the second electrode 4 of the molecular arrangement adjusting device 10, and an electric field is generated between the first electrode 3 and the second electrode 4. After the elapse of a predetermined period of time, the object 3100 is removed from the molecular arrangement adjusting device 10, and the object 3100 is thereafter transported. Even when the object is moved to and transported in another transportation container, it can be transported farther than now while keeping the freshness.

Although the molecular arrangement adjusting unit, the molecular arrangement adjusting device, and the molecular arrangement adjusting method have been described based on some examples, the present invention is not limited to those examples and is susceptible to various combinations and modifications.

<<Thirteenth Embodiment>>

A cooking method according to a thirteenth embodiment enables uniform cooking in a short time and improves the eating quality.

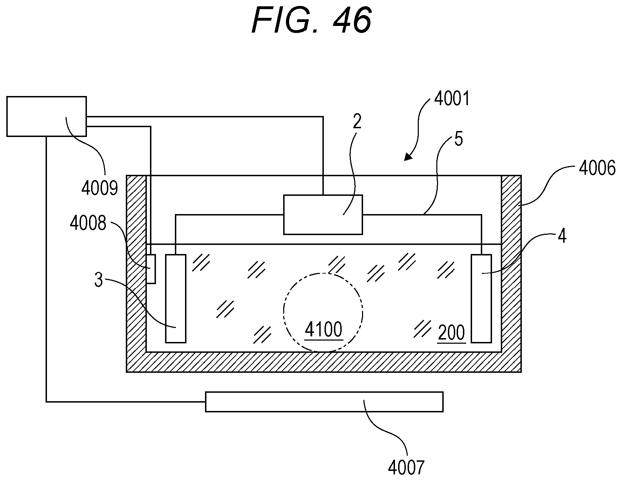

FIG. 46 is a diagram showing a fryer in the present embodiment. The same configuration as in the twelfth embodiment is denoted by the same reference sign and a description thereof is omitted.

A fryer 4001 in the present embodiment includes a power source 2 for generating alternating current, a first electrode 3 coupled to one electrode of the power source 2, a second electrode 4 coupled to the other electrode of the power source 2, a wire 5 coupling one electrode of the power source 2 with the first electrode 3 and coupling the other electrode of the power source 2 with the second electrode 4, an oil reservoir 4006 for storing oil, a heating portion 4007 for heating oil stored in the oil reservoir 4006, a temperature measuring portion 4008 for measuring the temperature of oil stored in the oil reservoir 4006, and a controller 4009 for controlling the power source 2 and the heating portion 4007.

The oil reservoir 4006 is a box-shaped member having an opening on the top. The oil reservoir 4006 is preferably formed of a conductive material such as stainless steel less degraded. When the oil reservoir 4006 is formed of an insulating member, the first electrode 3 and the second electrode 4 are insulated. Food oil 200 is stored in the oil reservoir 4006. An ingredient 4100 such as food is put into the heated food oil 200.

The heating portion 4007 heats the food oil 200 stored in the oil reservoir 4006. The structure of the heating portion 4007 may be a heating structure that feeds current to a heating coil, a heating structure that burns gas, or a heating structure by electromagnetic induction. The heating portion 4007 may be installed in the inside of the oil reservoir 4006 or may be formed as a structure integrated with the oil reservoir 4006. The heating portion 4007 in the present embodiment is installed on the outside of the oil reservoir 4006 and heats the food oil 200 in the oil reservoir 4006 to 120 degrees to 200 degrees centigrade.

The temperature measuring portion 4008 measures the temperature of the food oil 200 stored in the oil reservoir 4006. At least a part of the temperature measuring portion 4008 that measures the temperature is installed in the food oil 200 stored in the oil reservoir 4006.

The controller 4009 controls the power source 2 and the heating portion 4007 in accordance with the kind of the ingredient 4100 and the temperature measured by the temperature measuring portion 4008. For example, the controller 4009 controls the voltage or the frequency applied by the power source 2 to the first electrode 3 and the second electrode 4. The controller 4009 controls electric power generated by the heating portion 4007 or the flow rate of gas flowing through the heating portion 4007.

In this manner, the controller 4009 controls the power source 2 and the heating portion 4007 in accordance with the kind of the ingredient 4100 and the temperature measured by the temperature measuring portion 4008, whereby the food oil 200 is set to the temperature and the electric field most suitable for cooking the ingredient 4100. Different ingredients 4100 therefore have individual excellent eating quality.

The fryer 4001 in the present embodiment may have a not-shown oxidation degree sensor that measures the degree of oxidation of the food oil 200 stored in the oil reservoir 4006. When the fryer 4001 has an oxidation degree sensor, the controller 4009 may control the power source 2 and the heating portion 4007 in accordance with the degree of oxidation of the food oil 200 measured by the oxidation degree sensor.

In this manner, the controller 4009 controls the power source 2 and the heating portion 4007 in accordance with the kinds of the ingredient 4100 and the degree of oxidation of the food oil 200 measured by the oxidation degree sensor, whereby the food oil 200 is set to the temperature and the electric field most suitable for cooking the ingredient 4100. Different materials 4100 therefore have individual excellent eating quality.

A description will now be given to the water content in the ingredient 4100 in the electric field generated between the first electrode 3 and the second electrode 4 and the molecular arrangement of the food oil 200 when the power source 2 of the fryer 4001 is turned on.

The ingredient 4100 includes a liquid ingredient. For example, the ingredient 4100 may be food such as meat, fish, and vegetable. The ingredient 4100 in the present embodiment contains water molecules $H_2O$.

Water molecules $H_2O$ regularly arranged by the fryer 4001 in the present embodiment form a pearl-chain structure in which free water is bound into a stable state like bound water. To be more specific, water molecules $H_2O$ regularly arranged by the fryer 4001 in the present embodiment are not bonded to other ingredients and are finely particulate, although they are free water, and can stay fresh and not stale.

FIG. 30 is a diagram showing the arrangement of long-chain fatty acid in food oil.

The food oil in the present embodiment includes fatty acid. The fatty acid is preferably a long-chain fatty acid or a medium-chain fatty acid.

The long-chain fatty acid is preferably those with 12 or more carbons. Examples of the long-chain fatty acid include lauric acid, myristic acid, pentadecylic acid, palmitic acid, palmitoleic acid, margaric acid, stearic acid, oleic acid, vaccenic acid, linoleic acid, $\alpha$-linolenic acid, $\gamma$-linolenic acid, arachidic acid, arachidonic acid, eicosapentaenoic acid, and docosahexaenoic acid. The medium-chain fatty acid is preferably those with 8 to 10 carbons. Examples of the medium-chain fatty acid include caprylic acid, capric acid, and lauric acid.

For example, the fatty acid has a carboxyl chain moiety functioning as hydrophilic group and a hydrocarbon chain moiety functioning as lipophilic group and mixes the oil component of the food oil 200 with the water component present on the surface of the ingredient 4100 put into the food oil 200. For example, when particulate water is present on the surface of the ingredient 4100, the hydrophilic group of the fatty acid aligns on the surface of water.

When the food oil 200 stored in the oil reservoir 4006 of the fryer 4001 is heated to a predetermined temperature by the heating portion 4007, and the ingredient 4100 having particulate water on the surface is put with an electric field generated between the first electrode 3 and the second electrode 4, the particulate water on the surface of the ingredient 4100 and the hydrophilic group of the fatty acid of the food oil 200 vibrate similarly to the water molecules shown in FIG. 43. The molecules of particulate water on the surface of the ingredient 4100 become finely particulate. The hydrophilic group of the fatty acid aligns on the ingredient 4100 side.

Even when the ingredient 4100 having particulate water on the surface is put into the hot food oil 200, the water on the surface is instantaneously formed into fine particles, and oil does not splash. The hydrophilic group of the fatty acid arranged on the surface side of the ingredient 4100 reduces the food oil 200 penetrating into the inside of the ingredient 4100 and prevents the ingredient 4100 from becoming greasy and at the same time prevents ejection of water from the ingredient 4100. That is, the ingredient 4100 is cooked crispy on the surface and moist in the inside.

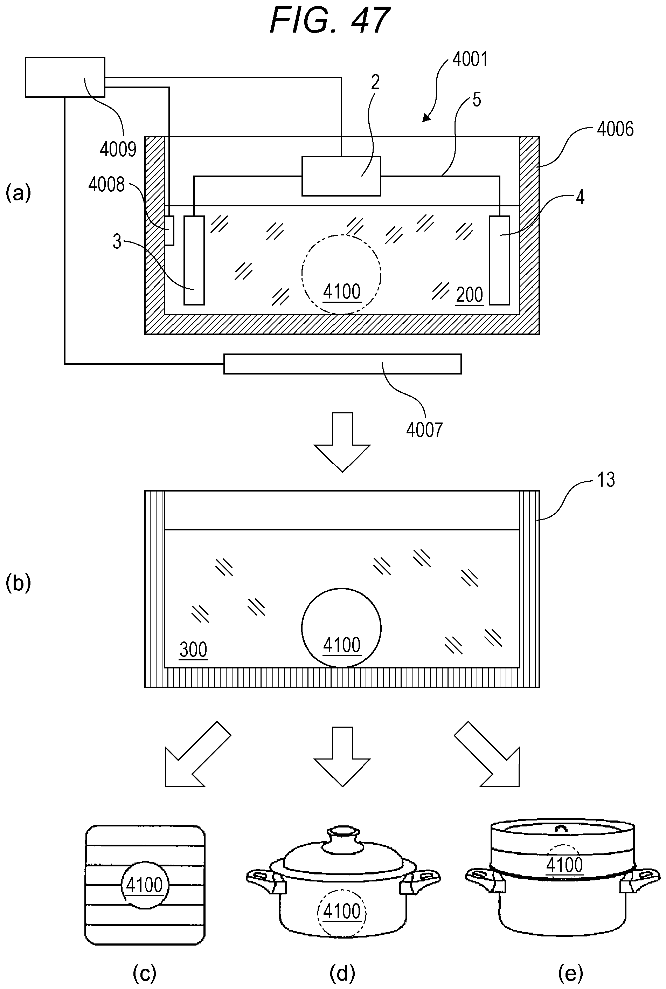

FIG. 47 is a diagram showing a cooking method in the present embodiment. FIG. 47A is a diagram showing an ingredient put into food oil. FIG. 47B is a diagram showing an ingredient washed with water. FIG. 47C is a diagram showing baking of an ingredient. FIG. 47D is a diagram showing boiling of an ingredient. FIG. 47E is a diagram showing steaming of an ingredient.

At step 1, as shown in FIG. 47A, the ingredient 4100 is fried in food oil 200 using the fryer 4001 in the present embodiment shown in FIG. 46 (ST1). Preparation is necessary before frying in the fryer 4001. In the cooking method in the present embodiment, batter such as bread crumbs usually put on the ingredient 4100 is not used.

First of all, the first electrode 3 and the second electrode 4 are installed in the oil reservoir 4006. A predetermined amount of food oil 200 is then stored in the oil reservoir 4006. The food oil 200 is stored such that the first electrode 3 and the second electrode 4 are at least partially submerged. Next, the power source 2 is turned on to form an electric field between the first electrode 3 and the second electrode 4. Subsequently, the controller 4009 controls the voltage and the frequency of the power source 2 and the temperature of the heating portion 4007. The voltage and the frequency of the power source 2 and the temperature of the heating portion 4007 may be preset.

Next, the ingredient 4100 is put into the food oil 200 in the oil reservoir 4006. The ingredient 4100 is fried in the food oil 200 for a predetermined period of time. A not-shown timer may be installed to give an alarm when a predetermined period of time passes. The voltage and the frequency of the power source 2 and the temperature of the heating portion 4007 may be set after the ingredient 4100 is put or may be set before and after the ingredient 4100 is put.

After the ingredient 4100 is fried in the food oil 200, at step 2, the ingredient 4100 is washed with water as shown in FIG. 47B (ST2). In washing, the fried ingredient 4100 is put into water 300 stored in a water reservoir 13. Alternatively, the ingredient 4100 may be exposed to running tap water and washed. After washing with water, water is preferably wiped off.

Typically, when the ingredient 4100 is fried in the food oil 200 and then immediately washed with water for a short time within five minutes or so, water reacts with the hot food oil 200 adhering to the ingredient 4100, and water splashes to cause a dangerous situation. The ingredient 4100 fried by the fryer 4001 in the present embodiment, however, is fried at a low temperature in a short time, and the ingredient 4100 is not greasy and can be washed immediately.

The ingredient 4100 fried by the fryer 4001 in the present embodiment is washed with water so that the oil is washed away. In this way, in the ingredient cooking method in the present embodiment, after the ingredient 4100 is fried in the food oil 200, the fried ingredient 4100 is washed with water immediately and water is wiped off, so that the ingredient 4100 is cooked in a similar state to being baked while it is cooked through evenly without producing smoke.

After washing with water, as shown in FIG. 47C, the ingredient 4100 may be baked for a short time, for example, in a grill or a frying pan. In this way, when the surface of the ingredient 4100 is additionally baked in a grill for a short time after washing with water, the ingredient 4100 is browned and cooked in the same way as being baked. Compared with typical baking in a grill or the like, the ingredient 4100 can be cooked through evenly for a short time without producing smoke.

After washing with water, as shown in FIG. 47D, the ingredient 4100 may be boiled, for example, in a pan for a short time. In this way, when the ingredient 4100 is additionally boiled in a pan for a short time after washing with water, the ingredient 4100 is stewed and cooked in the same way as being simmered. Compared with typical simmering in a pan or the like, the ingredient 4100 can be cooked through evenly for a short time without unevenness in heating or losing its shape.

After washing with water, as shown in FIG. 47E, the ingredient 4100 may be steamed, for example, in a steamer for a short time. In this way, when the ingredient 4100 is additionally steamed in a steamer after washing with water, the ingredient 4100 is steamed and cooked in the same way as being steamed. Compared with typical steam cooking in a steamer or the like, the ingredient 4100 can be cooked through evenly for a short time without unevenness in heating or losing its shape.

These ingredient cooking methods can be entirely systemized and all the steps can be performed automatically through a production line. For example, the step of putting the ingredient 4100 into the fryer 4001 shown in FIG. 47A, the step of removing the fried ingredient, and the step of washing with water shown in FIG. 47B may be performed automatically through a production line. The baking step shown in FIG. 47C, the boiling step shown in FIG. 47D, and the steaming step shown in FIG. 47E may also be performed automatically through a production line.

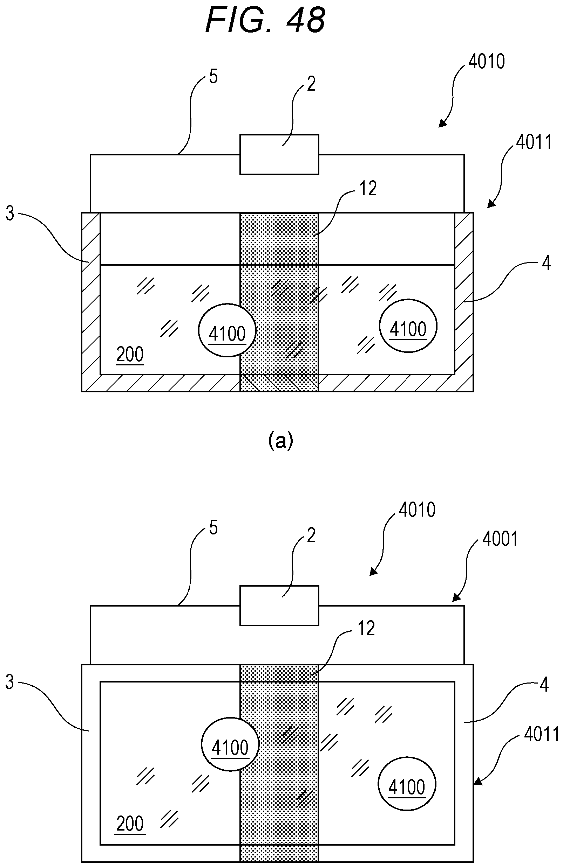

FIG. 48 is a diagram showing a fryer and an oil reservoir in another embodiment. FIG. 48A is a diagram showing a cross section of the fryer and the oil reservoir in another embodiment. FIG. 48B is a diagram showing a top view of the fryer and the oil reservoir in another embodiment.

A fryer 4010 in another embodiment shown in FIG. 48 is an example in which an oil reservoir 4011 also serves as electrodes 3 and 4. The oil reservoir 4011 is a box-shaped member in the shape of a tube with a bottom. The oil reservoir 4011 has a first electrode 3 on one side made of a conductive material such as metal or alloy, a second electrode 4 on the other side made of a conductive material such as metal and alloy, and an insulating member 12 installed between the first electrode 3 and the second electrode 4. The first electrode 3 and the second electrode 4 are separated from each other by the insulating member 12.

In the fryer 4010 and the oil reservoir 4011 in another embodiment shown in FIG. 48, food oil 200 is put into the oil reservoir 4011, and an ingredient 4100 is put into the food oil 200. In the fryer 4010 in this embodiment, since the oil reservoir 4011 also serves as the electrodes 3 and 4, the fryer 4010 can be compact and slim in appearance.

In the present embodiment shown in FIG. 46 and FIG. 48, the first electrode 3 and the second electrode 4 are used as vibration generating portions. The vibration generating portions in the present embodiment, however, may be those that generate electric waves or ultrasonic waves, rather than electrodes. The vibration generating portions in the present embodiment may use any frequency range. The vibration generating portions vibrate water and oil, so that an emulsion phenomenon occurs in which water and oil are emulsified, the affinity between water and oil increases, the interfacial tension decreases, and consequently, the size of water droplets becomes small. Water on the surface of the ingredient becomes fine, and the ingredient is promptly covered with water skin. This prevents intrusion of oil into the ingredient and makes fried food with oil less absorbed.

Typically, when the ingredient 4100 is fried in the food oil 200 and then immediately washed with water for a short time within five minutes or so, water reacts with the hot food oil 200 adhering to the ingredient 4100, and water splashes to cause a dangerous situation. The ingredient 4100 fried by the fryer 4001 in the present embodiment, however, is fried at a low temperature in a short time, and the ingredient 4100 is not greasy and therefore can be washed with water immediately.

The ingredient 4100 fried by the fryer 4001 in the present embodiment is washed with water so that the oil is washed away. In this way, in the ingredient cooking method in the present embodiment, after the ingredient 4100 is fried in the food oil 200, the fried ingredient 4100 is washed with water immediately and water is wiped off, so that the ingredient 4100 is heated in the same way as being baked while it is cooked through evenly without producing smoke.

In a conventional cooking method for fried food using oil, cooking at high temperature makes protein and burnt bits bonded to each other and accelerates glycation. Moreover, protein and cells in the ingredient are destroyed, and the ingredient rapidly loses water and becomes tough. By contrast, when the vibration generating portions in the present embodiment are used, the ingredient can be cooked at low temperature, and the ingredient can be cooked moist and tender without destroying protein.

Traditionally, grillers, iron plates, frying pans, charcoal, or ovens are used for bake cooking and produce smoke. By contrast, the use of the vibration generating portions in the present embodiment can reduce smoking.

In conventional bake cooking using a griller, the ingredient is heated only on one side, and the ingredient is not evenly baked. By contrast, when the vibration generating portions in the present embodiment are used, the ingredient is heated on all surfaces, thereby eliminating baking unevenness. Since the ingredient is heated on all surfaces, the time for cooking can be controlled, and the evenly cooked state can be always achieved by setting the time for heating, for example, using a timer.

The ingredient cooking method in the present embodiment as described above uses the fryer 4001 including the power source 2 and the vibration generating portions 3 and 4 connected to the power source 2 to generate vibrations. The ingredient cooking method includes: storing oil in the oil reservoir 4006 in which the vibration generating portions 3 and 4 of the fryer 1 are installed; frying the ingredient 4100 in the oil in the oil reservoir 4006 in which the vibration generating portions 3 and 4 generate vibrations; and thereafter washing the ingredient 4100 with water. The ingredient cooking method in the present embodiment therefore ensures even cooking at low temperature in a short time, thereby improving the eating quality.

In the ingredient cooking method in the present embodiment, after the ingredient 4100 is washed with water, the ingredient 4100 is baked. The ingredient cooking method in the present embodiment therefore ensures even cooking at low temperature in a short time and improves the eating quality in bake cooking.

In the ingredient cooking method in the present embodiment, after the ingredient 4100 is washed with water, the ingredient 4100 is boiled. The ingredient cooking method in the present embodiment therefore ensures even cooking at low temperature in a short time and improves the eating quality in boil cooking.

In the ingredient cooking method in the present embodiment, after the ingredient 4100 is washed with water, the ingredient 4100 is steamed. The ingredient cooking method in the present embodiment therefore ensures even cooking at low temperature in a short time and improves the eating quality in steam cooking.

In the ingredient cooking method in the present embodiment, the vibration generating portions 3 and 4 generate electric waves. The eating quality therefore can be improved inexpensively with a simple structure.

In the ingredient cooking method in the present embodiment, the oil reservoir 4011 has a part serving as the first electrode 3 and another part serving as the second electrode 4, and the insulating member 12 is installed between the first electrode 3 and the second electrode 4 to separate the first electrode 3 and the second electrode 4 from each other. The fryer 4010 therefore can be compact and slim in appearance.

This application claims priority to Japanese Patent Application No. 2017-100354 filed on May 19, 2017, Japanese Patent Application No. 2017-126102 filed on June 28, 2017, and Japanese Patent Application No. 2017-153591 filed on August 8, 2017.

Reference Signs List

    1 molecular arrangement adjusting unit (ingredient control device)
    2 power source
    3 first electrode (vibration generating portion)
    4 second electrode (vibration generating portion)
    5 wire
    6 temperature controller
    7, 12 insulating member
    10 molecular arrangement adjusting device (ingredient control device)
    11 container
    11a box
    11b lid
    13 water reservoir
    100, 4001, 4010 fryer (ingredient control device)
    101, 4006, 4011 oil reservoir
    102 opposed plate antenna (vibration generating portion)
    103 drive portion
    104, 1542, 4007 heating portion
    111 base portion
    112 vertical portion
    113 terminal
    200 food oil
    300 water
    0100, 0400 food composition control device (ingredient control device)
    0101, 0401, 1501, 1601, 1701, 1801, 1901, 2001, 2101, 2201 antenna function portion (first vibration generating portion)
    0102, 0402, 1502, 1602, 1702, 1802, 1902, 2002, 2102, 2202 antenna function portion (second vibration generating portion)
    0103, 0403 first frequency
    0104, 0404 second frequency
    0105, 0405 first circuit portion
    0106, 0406 second circuit portion
    0107, 0407 first controller
    0108, 0408 second controller
    0209 antenna
    0210 feeding point
    0211, 0511, 0611, 0711, 0811, 0911 electromagnetic wave of first frequency
    0212, 0512, 0612, 0712, 0812, 0912 electromagnetic wave of second frequency
    0413 first frequency controller
    0414 second frequency controller
    0415 first phase controller
    0416 second phase controller
    0417 first timing controller
    0418 second timing controller
    1019 region of electromagnetic field
    1020 region of electromagnetic field

1321 CPU
1322 main memory
1323 HDD
1324 circuit interface
1325 I/O
1326 user interface
1541 frying tank
1643 food soaking tank
1744, 2244 high-temperature food cooking portion
1845 room-temperature food cooking portion
1946 refrigerated food cooking portion
1947 refrigerating portion
2048 low-temperature refrigerated food cooking portion
2149 food defrost cooking portion
2250 vapor supply portion
2351 frozen food storing portion
1561, 1661, 1761, 1861, 1961, 2061, 2161, 2216 food (object)
1662 edible liquid
4100 ingredient (object)

**Claims**

1. An ingredient control device (100, 0100, 0400, 10, 4001, 4010) comprising at least one vibration generating portion (102, 0101, 0102, 0401, 0402, 3, 4) configured to generate vibrations, wherein vibration is generated by the vibration generating portion to control an ingredient in an object disposed to face the vibration generating portion to decrease an interfacial tension between a water phase and another phase.

2. The ingredient control device (100, 0100, 0400, 10, 4001, 4010) according to claim 1, wherein

   the vibration generating portion (102, 0101, 0102, 0401, 0402, 3, 4) includes an electrode configured to generate electromagnetic waves, and
   a water activity of the object is controlled by generating electromagnetic waves by the electrode.

3. The ingredient control device (100, 0100, 0400, 10, 4001, 4010) according to claim 2, wherein electromagnetic waves are generated by the electrode to increase interfacial polarization between a water phase and another phase of the object and thus decrease an interfacial tension between the water phase and the other phase and bind water in the object into a pearl-chain structure.

4. The ingredient control device (0100, 0400) according to claim 1, 2, or 3, wherein

   the vibration generating portion (102, 0101, 0102, 0401, 0402, 3, 4) includes a pair of vibration generating portions,
   the ingredient control device (0100, 0400) further comprising:

   a first circuit portion (0105, 0405) configured to apply alternating current of a first frequency to a first vibration generating portion (0101, 0401) of the pair of vibration generating portions; and
   a second circuit portion (0106, 0406) configured to apply alternating current of a second frequency to a second vibration generating portion (0102, 0402) of the pair of vibration generating portions.

5. The ingredient control device (0400) according to claim 4, further comprising a frequency controller (0413, 0414) configured to control the first frequency and the second frequency to different frequencies.

6. The ingredient control device (0400) according to claim 4 or 5, wherein the first frequency and the second frequency are at least 10 kilohertz to at most 150 kilohertz.

7. The ingredient control device (0400) according to claim 4, 5, or 6, further comprising a phase controller (0415, 0416) configured to control a phase of the alternating current of the first frequency and the alternating current of the second frequency.

8. The ingredient control device (0100, 0400) according to any one of claims 4 to 7, further comprising:

> a frying tank (1541); and
> a heating portion (1542) configured to heat the frying tank, wherein
> the vibration generating portions (1501, 1502) generate electromagnetic waves, and
> the pair of vibration generating portions are disposed to form an electromagnetic field in the frying tank.

9. The ingredient control device (0100, 0400) according to any one of claims 4 to 7, further comprising a food soaking tank (1643) capable of storing edible liquid for soaking food (1661) to allow the edible liquid (1662) to soak into the food and/or to extract an ingredient from the food into the edible liquid, wherein

> the vibration generating portions (1601, 1602) generate electromagnetic waves, and
> the pair of vibration generating portions (1601, 1602) are disposed to form an electromagnetic field in the food soaking tank.

10. The ingredient control device (0100, 0400) according to any one of claims 4 to 7, further comprising a high-temperature food cooking portion (1744) configured to heat food (1761a, 1761b, 1761c) as the object at high temperature, wherein

> the vibration generating portions (1701, 1702) generate electromagnetic waves, and
> the pair of vibration generating portions are disposed to form an electromagnetic field in the high-temperature food cooking portion.

11. The ingredient control device (0100, 0400) according to any one of claims 4 to 7, further comprising a room-temperature food cooking portion (1845) in which food (1861) as the object is placed at room temperature, wherein

> the vibration generating portions (1801, 1802) generate electromagnetic waves, and
> the pair of vibration generating portions are disposed to form an electromagnetic field in the room-temperature food cooking portion.

12. The ingredient control device (0100, 0400) according to any one of claims 4 to 7, further comprising a refrigerated food cooking portion (1946) configured to refrigerate food (1961) as the object, wherein

> the vibration generating portions (1901, 1902) generate electromagnetic waves, and
> the pair of vibration generating portions are disposed to form an electromagnetic field in the refrigerated food cooking portion.

13. The ingredient control device (0100, 0400) according to any one of claims 4 to 7, further comprising a low-temperature refrigerated food cooking portion (2048) configured to store food (2061) as the object by low-temperature refrigeration, wherein

> the vibration generating portions (2001, 2002) generate electromagnetic waves, and
> the pair of vibration generating portions are disposed to form an electromagnetic field in the low-temperature refrigerated food cooking portion.

14. The ingredient control device (0100, 0400) according to any one of claims 4 to 7, further comprising a food defrost cooking portion (2149) for defrosting frozen food, wherein

> the vibration generating portions (2101, 2102) generate electromagnetic waves, and
> the pair of vibration generating portions are disposed to form an electromagnetic field in the food defrost cooking portion.

15. The ingredient control device (0100, 0400) according to any one of claims 10 to 14, further comprising a vapor supply portion (2250) configured to supply water vapor and/or water spray.

16. The ingredient control device (0100, 0400) according to any one of claims 4 to 7, further comprising a frozen food storing portion (2351) configured to store food as the object by freezing, wherein

> the vibration generating portions (2301, 2302) generate electromagnetic waves, and
> the pair of vibration generating portions are disposed to form an electromagnetic field in the frozen food storing portion.

17. The ingredient control device (10, 4001, 4010) according to claim 1, wherein the vibration generating portion (102, 0101, 0102, 0401, 0402, 3, 4) includes a pair of vibration generating portions,

> the ingredient control device (10, 4001, 4010) further comprising a power source (10) configured to generate alternating current, wherein
> a first vibration generating portion (3) of the pair of vibration generating portions is coupled to one electrode of the power source, and
> a second vibration generating portion (4) of the pair of vibration generating portions is coupled to another electrode of the power source.

18. The ingredient control device (10, 4001, 4010) according to claim 17, wherein the vibration generating portions (3, 4) are sheet-like members.

19. The ingredient control device (10) according to claim 17 or 18, further comprising a temperature controller (6) configured to control ambient temperature.

20. The ingredient control device (10) according to claim 17, 18, or 19, further comprising a container (11) in which the object is disposed, wherein

> the vibration generating portions (3, 4) are electrodes configured to generate electromagnetic waves,
> the container has a part serving as one electrode of a pair of the electrodes and another part serving as another electrode of the pair of the electrodes, and
> an insulating member (7) is installed between the pair of the electrodes to separate the pair of the electrodes from each other.

21. An ingredient control method using an ingredient control device (100, 0100, 0400, 10, 4001, 4010) including at least one vibration generating portion (102, 0101, 0102, 0401, 0402, 3, 4) configured to generate vibrations,
the method comprising generating vibrations by the vibration generating portion to control an ingredient in an object disposed to face the vibration generating portion to decrease an interfacial tension between a water phase and another phase.

22. The ingredient control method according to claim 21, wherein

> the vibration generating portion (102, 0101, 0102, 0401, 0402, 3, 4) includes an electrode configured to generate electromagnetic waves, and
> a water activity of the object is controlled by generating electromagnetic waves by the electrode.

23. The ingredient control method according to claim 21 or 22, wherein electromagnetic waves are generated between by the electrode to increase interfacial polarization between a water phase and another phase of the object to decrease an interfacial tension between the water phase and the other phase and bind water in the object into a pearl-chain structure.

24. The ingredient control method according to claim 22, wherein a DC electric field is applied as an offset electric field to an AC electric field to increase interfacial polarization between a water phase and another phase of the object to decrease an interfacial tension between the water phase and the other phase and bind water in the object into a pearl-chain structure.

25. The ingredient control method according to claim 24, wherein the DC electric field of approximately +100 V is applied as an offset electric field on the water phase side relative to the other phase in the AC electric field to increase interfacial polarization between the water phase and the other phase of the object and thus decrease the interfacial tension between the water phase and the other phase and bind water in the object into a pearl-chain structure.

26. The ingredient control method according to any one of claims 22 to 25, wherein the electromagnetic waves are low-frequency waves.

27. The ingredient control method according to any one of claims 22 to 25, wherein the electromagnetic waves have a frequency of approximately 10 kHz to approximately 500 kHz.

28. The ingredient control method according to any one of claims 22 to 27, wherein

   the water in the object is divided into bound water and free water, and
   the free water in the object is bound in a pearl-chain structure.

29. The ingredient control method according to claim 21, wherein

   the vibration generating portion (102, 0101, 0102, 0401, 0402, 3, 4) includes a pair of vibration generating portions,
   the vibration generating portions generate electromagnetic waves,
   one (0101, 0401) of the pair of vibration generating portions applies an electromagnetic field of a first frequency to the object, and
   the other (0102, 0402) of the pair of vibration generating portions applies an electromagnetic field of a second frequency different from the first frequency to the object.

30. A transportation method using an ingredient control device (10) including at least one vibration generating portion (3, 4) configured to generate vibrations, the method comprising:

   installing an object disposed to face the vibration generating portion; and
   transporting the object while generating vibrations by the vibration generating portion to control an ingredient in the object to decrease an interfacial tension between a water phase and another phase.

31. A transportation method using an ingredient control device (10) including at least one vibration generating portion (3, 4) configured to generate vibrations, the method comprising:

   installing an object disposed to face the vibration generating portion;
   generating vibrations by the vibration generating portion to control an ingredient in the object to decrease an interfacial tension between a water phase and another phase;
   removing the object from the ingredient control device after elapse of a predetermined period of time; and
   thereafter transporting the object.

32. A cooking method using an ingredient control device (4001, 4010) including at least one vibration generating portion (3, 4) configured to generate vibrations and an oil reservoir (4006, 4011) in which the vibration generating portions are installed, the method comprising:

   storing oil in the oil reservoir;
   frying an ingredient in oil in the oil reservoir in which the vibration generating portion generates vibrations to control an ingredient in the object to decrease an interfacial tension between a water phase and another phase and thereafter washing the ingredient with water.

33. The cooking method according to claim 32, wherein after the ingredient is washed with water, the ingredient is baked.

34. The cooking method according to claim 32, wherein after the ingredient is washed with water, the ingredient is boiled.

35. The cooking method according to claim 32, wherein after the ingredient is washed with water, the ingredient is steamed.

36. The cooking method according to any one of claims 32 to 35, wherein the vibration generating portions (3, 4) generate electromagnetic waves.

37. The cooking method according to any one of claims 32 to 36, wherein

the vibration generating portion (3, 4) includes electrodes configured to generate electromagnetic waves,
the oil reservoir has a part serving as one electrode of a pair of the electrodes and another part serving as the other electrode of a pair of the electrodes, and
an insulating member (12) is installed between the pair of the electrodes to separate the pair of the electrodes from each other.

**38.** A program which when executed by a computer of an ingredient control device (0100, 0400) including a pair of vibration generating portions configured to generate electromagnetic waves to control an ingredient in the object to decrease an interfacial tension between a water phase and another phase, , causes the computer to perform:

applying an electromagnetic field of a first frequency by one (0101, 0401) of the pair of vibration generating portions to an object installed between the pair of vibration generating portions; and
applying an electromagnetic field of a second frequency different from the first frequency by the other (0102, 0402) of the pair of vibration generating portions to the object installed between the pair of vibration generating portions.

**Patentansprüche**

**1.** Vorrichtung zur Steuerung von Zutaten (100, 0100, 0400, 10, 4001, 4010), die mindestens einen vibrationserzeugenden Abschnitt (102, 0101, 0102, 0401, 0402, 3, 4) umfasst, der so konfiguriert ist, dass er Vibrationen erzeugt, wobei durch den vibrationserzeugenden Abschnitt eine Vibration erzeugt wird, um eine Zutat in einem Objekt, das so angeordnet ist, dass es dem vibrationserzeugenden Abschnitt gegenüberliegt, so zu steuern, dass eine Grenzflächenspannung zwischen einer Wasserphase und einer anderen Phase verringert wird.

**2.** Vorrichtung zur Steuerung von Zutaten (100, 0100, 0400, 10, 4001, 4010) nach Anspruch 1, wobei

der vibrationserzeugende Abschnitt (102, 0101, 0102, 0401, 0402, 3, 4) eine Elektrode einschließt, die so konfiguriert ist, dass sie elektromagnetische Wellen erzeugt, und
eine Wasseraktivität des Objekts durch die Erzeugung elektromagnetischer Wellen durch die Elektrode gesteuert wird.

**3.** Vorrichtung zur Steuerung von Zutaten (100, 0100, 0400, 10, 4001, 4010) nach Anspruch 2, wobei elektromagnetische Wellen von der Elektrode erzeugt werden, um die Grenzflächenpolarisation zwischen einer Wasserphase und einer anderen Phase des Objekts zu erhöhen und so die Grenzflächenspannung zwischen der Wasserphase und der anderen Phase zu verringern und das Wasser in dem Objekt zu einer Perlenkettenstruktur zu binden.

**4.** Vorrichtung zur Steuerung von Zutaten (0100, 0400) nach Anspruch 1, 2 oder 3, wobei

der vibrationserzeugende Abschnitt (102, 0101, 0102, 0401, 0402, 3, 4) ein Paar vibrationserzeugender Abschnitte einschließt,
die Vorrichtung zur Steuerung von Zutaten (0100, 0400) weiter Folgendes umfasst:

einen ersten Schaltungsabschnitt (0105, 0405), der so konfiguriert ist, dass er Wechselstrom mit einer ersten Frequenz an einen ersten vibrationserzeugenden Abschnitt (0101, 0401) des Paars vibrationserzeugender Abschnitte anlegt; und
einen zweiten Schaltungsabschnitt (0106, 0406), der so konfiguriert ist, dass er Wechselstrom mit einer zweiten Frequenz an einen zweiten vibrationserzeugenden Abschnitt (0102, 0402) des Paars vibrationserzeugender Abschnitte anlegt.

**5.** Vorrichtung zur Steuerung von Zutaten (0400) nach Anspruch 4, weiter umfassend einen Frequenzregler (0413, 0414), der so konfiguriert ist, dass er die erste Frequenz und die zweite Frequenz auf unterschiedliche Frequenzen einstellt.

**6.** Vorrichtung zur Steuerung von Zutaten (0400) nach Anspruch 4 oder 5, wobei die erste Frequenz und die zweite Frequenz mindestens 10 Kilohertz bis höchstens 150 Kilohertz betragen.

**7.** Vorrichtung zur Steuerung von Zutaten (0400) nach Anspruch 4, 5 oder 6, weiter umfassend einen Phasenregler (0415, 0416), der so konfiguriert ist, dass eine Phase des Wechselstroms der ersten Frequenz und des Wechselstroms der zweiten Frequenz steuert.

8. Vorrichtung zur Steuerung von Zutaten (0100, 0400) nach einem der Ansprüche 4 bis 7, weiter umfassend:

   einen Frittierbehälter (1541); und
   einen Heizabschnitt (1542), der so konfiguriert ist, dass er den Frittierbehälter beheizt, wobei
   die vibrationserzeugenden Abschnitte (1501, 1502) elektromagnetische Wellen erzeugen, und
   das Paar vibrationserzeugender Abschnitte so angeordnet sind, dass sie ein elektromagnetisches Feld im Frittierbehälter bilden.

9. Vorrichtung zur Steuerung von Zutaten (0100, 0400) nach einem der Ansprüche 4 bis 7, weiter umfassend einen Behälter zum Einweichen von Lebensmitteln (1643), in dem eine essbare Flüssigkeit zum Einweichen von Lebensmitteln (1661) gelagert werden kann, damit die essbare Flüssigkeit (1662) in das Lebensmittel eindringen kann und/oder eine Zutat aus dem Lebensmittel in die essbare Flüssigkeit extrahiert werden kann, wobei

   die vibrationserzeugenden Abschnitte (1601, 1602) elektromagnetische Wellen erzeugen, und
   das Paar vibrationserzeugender Abschnitte (1601, 1602) so angeordnet sind, dass sie ein elektromagnetisches Feld in dem Behälter zum Einweichen von Lebensmitteln erzeugen.

10. Vorrichtung zur Steuerung von Zutaten (0100, 0400) nach einem der Ansprüche 4 bis 7, weiter umfassend einen Hochtemperatur-Lebensmittelkochabschnitt (1744), der so konfiguriert ist, dass er Lebensmittel (1761a, 1761b, 1761c) als das Objekt bei hoher Temperatur erhitzt, wobei

    die vibrationserzeugenden Abschnitte (1701, 1702) elektromagnetische Wellen erzeugen, und
    das Paar vibrationserzeugender Abschnitte so angeordnet ist, dass es ein elektromagnetisches Feld in dem Hochtemperatur-Lebensmittelkochabschnitt bildet.

11. Vorrichtung zur Steuerung von Zutaten (0100, 0400) nach einem der Ansprüche 4 bis 7, weiter umfassend einen Raumtemperatur-Lebensmittelkochabschnitt (1845), in dem die Lebensmittel (1861) als Objekt bei Raumtemperatur platziert werden, wobei

    die vibrationserzeugenden Abschnitte (1801, 1802) elektromagnetische Wellen erzeugen, und
    das Paar vibrationserzeugender Abschnitte so angeordnet ist, dass es ein elektromagnetisches Feld in dem Raumtemperatur-Lebensmittelkochabschnitt bildet.

12. Vorrichtung zur Steuerung von Zutaten (0100, 0400) nach einem der Ansprüche 4 bis 7, weiter umfassend einen gekühlten Lebensmittelkochabschnitt (1946), der so konfiguriert ist, dass er Lebensmittel (1961) als das Objekt kühlt, wobei

    die vibrationserzeugenden Abschnitte (1901, 1902) elektromagnetische Wellen erzeugen, und
    das Paar vibrationserzeugender Abschnitte so angeordnet ist, dass es ein elektromagnetisches Feld in dem gekühlten Lebensmittelkochabschnitt bildet.

13. Vorrichtung zur Steuerung von Zutaten (0100, 0400) nach einem der Ansprüche 4 bis 7, weiter umfassend einen gekühlten Niedrigtemperatur-Lebensmittelkochabschnitt (2048), der so konfiguriert ist, dass er Lebensmittel (2061) als das Objekt bei Niedrigtemperaturkühlung lagert, wobei

    die vibrationserzeugenden Abschnitte (2001, 2002) elektromagnetische Wellen erzeugen, und
    das Paar vibrationserzeugender Abschnitte so angeordnet ist, dass es ein elektromagnetisches Feld in dem gekühlten Niedrigtemperatur-Lebensmittelkochabschnitt bildet.

14. Vorrichtung zur Steuerung von Zutaten (0100, 0400) nach einem der Ansprüche 4 bis 7, weiter umfassend einen Lebensmittelauftau-Kochabschnitt (2149) zum Auftauen von gefrorenen Lebensmitteln, wobei

    die vibrationserzeugenden Abschnitte (2101, 2102) elektromagnetische Wellen erzeugen, und
    das Paar vibrationserzeugender Abschnitte so angeordnet ist, dass es ein elektromagnetisches Feld im Lebensmittelauftau-Kochabschnitt bildet.

15. Vorrichtung zur Steuerung von Zutaten (0100, 0400) nach einem der Ansprüche 10 bis 14, weiter umfassend einen Dampfzufuhrabschnitt (2250), der so konfiguriert ist, dass er Wasserdampf und/oder Wassernebel zuführt.

16. Vorrichtung zur Steuerung von Zutaten (0100, 0400) nach einem der Ansprüche 4 bis 7, weiter umfassend einen Lagerabschnitt für gefrorene Lebensmittel (2351), der so konfiguriert ist, dass er Lebensmittel als das Objekt durch Einfrieren lagert, wobei

    die vibrationserzeugenden Abschnitte (2301, 2302) elektromagnetische Wellen erzeugen, und
    das Paar vibrationserzeugender Abschnitte so angeordnet sind, dass sie ein elektromagnetisches Feld in dem Lagerabschnitt für gefrorene Lebensmittel bilden.

17. Vorrichtung zur Steuerung von Zutaten (10, 4001, 4010) nach Anspruch 1, wobei der vibrationserzeugende Abschnitt (102, 0101, 0102, 0401, 0402, 3, 4) ein Paar vibrationserzeugender Abschnitte einschließt,

    die Vorrichtung zur Steuerung von Zutaten (10, 4001, 4010) weiter eine Stromquelle (10) umfasst, die so konfiguriert ist, dass sie Wechselstrom erzeugt, wobei
    ein erster vibrationserzeugender Abschnitt (3) des Paars vibrationserzeugender Abschnitte mit einer Elektrode der Stromquelle gekoppelt ist, und
    ein zweiter vibrationserzeugender Abschnitt (4) des Paars vibrationserzeugender Abschnitte mit einer anderen Elektrode der Stromquelle gekoppelt ist.

18. Vorrichtung zur Steuerung von Zutaten (10, 4001, 4010) nach Anspruch 17, wobei die vibrationserzeugenden Abschnitte (3, 4) plattenförmige Elemente sind.

19. Vorrichtung zur Steuerung von Zutaten (10) nach Anspruch 17 oder 18, weiter umfassend einen Temperaturregler (6), der so konfiguriert ist, dass er die Umgebungstemperatur steuert.

20. Vorrichtung zur Steuerung von Zutaten (10) nach Anspruch 17, 18 oder 19, weiter umfassend einen Behälter (11), in dem das Objekt angeordnet ist, wobei

    die vibrationserzeugenden Abschnitte (3, 4) Elektroden sind, die so konfiguriert sind, dass sie elektromagnetische Wellen erzeugen,
    der Behälter einen Teil aufweist, der als eine Elektrode eines Elektrodenpaars dient, und einen anderen Teil, der als eine andere Elektrode des Elektrodenpaars dient, und
    ein Isolierelement (7) zwischen dem Elektrodenpaar installiert ist, um das Elektrodenpaar voneinander zu trennen.

21. Verfahren zur Steuerung von Zutaten unter Verwendung einer Vorrichtung zur Steuerung von Zutaten (100, 0100, 0400, 10, 4001, 4010) einschließend mindestens einen vibrationserzeugenden Abschnitt (102, 0101, 0102, 0401, 0402, 3, 4), der so konfiguriert ist, dass er Vibrationen erzeugt,
das Verfahren umfassend das Erzeugen von Vibrationen durch den vibrationserzeugenden Abschnitt, um eine Zutat in einem Objekt, das so angeordnet ist, dass es dem vibrationserzeugenden Abschnitt gegenüberliegt, so zu steuern, dass eine Grenzflächenspannung zwischen einer Wasserphase und einer anderen Phase verringert wird.

22. Verfahren zur Steuerung von Zutaten nach Anspruch 21, wobei

    der vibrationserzeugende Abschnitt (102, 0101, 0102, 0401, 0402, 3, 4) eine Elektrode einschließt, die so konfiguriert ist, dass sie elektromagnetische Wellen erzeugt, und
    eine Wasseraktivität des Objekts durch die Erzeugung elektromagnetischer Wellen durch die Elektrode gesteuert wird.

23. Verfahren zur Steuerung von Zutaten nach Anspruch 21 oder 22, wobei elektromagnetische Wellen dazwischen durch die Elektrode erzeugt werden, um die Grenzflächenpolarisation zwischen einer Wasserphase und einer anderen Phase des Objekts zu erhöhen, um die Grenzflächenspannung zwischen der Wasserphase und der anderen Phase zu verringern und das Wasser in dem Objekt zu einer Perlenkettenstruktur zu binden.

24. Verfahren zur Steuerung von Zutaten nach Anspruch 22, wobei ein elektrisches Gleichfeld als Gegenfeld zu einem elektrischen Wechselfeld angelegt wird, um die Grenzflächenpolarisation zwischen einer Wasserphase und einer anderen Phase des Objekts zu erhöhen, um die Grenzflächenspannung zwischen der Wasserphase und der anderen Phase zu verringern und das Wasser im Objekt zu einer Perlenkettenstruktur zu binden.

25. Verfahren zur Steuerung von Zutaten nach Anspruch 24, wobei das elektrische Gleichfeld von etwa +100 V als versetztes elektrisches Feld auf der Seite der Wasserphase relativ zu der anderen Phase im elektrischen Wechselfeld angelegt wird, um die Grenzflächenpolarisation zwischen der Wasserphase und der anderen Phase des Objekts zu erhöhen und somit die Grenzflächenspannung zwischen der Wasserphase und der anderen Phase zu verringern und das Wasser im Objekt zu einer Perlenkettenstruktur zu binden.

26. Verfahren zur Steuerung von Zutaten nach einem der Ansprüche 22 bis 25, wobei die elektromagnetischen Wellen Niederfrequenzwellen sind.

27. Verfahren zur Steuerung von Zutaten nach einem der Ansprüche 22 bis 25, wobei die elektromagnetischen Wellen eine Frequenz von etwa 10 kHz bis etwa 500 kHz aufweisen.

28. Verfahren zur Steuerung von Zutaten nach einem der Ansprüche 22 bis 27, wobei

das Wasser im Objekt in gebundenes und freies Wasser unterteilt wird, und
das freie Wasser im Objekt in einer Perlenkettenstruktur gebunden ist.

29. Verfahren zur Steuerung von Zutaten nach Anspruch 21, wobei

der vibrationserzeugende Abschnitt (102, 0101, 0102, 0401, 0402, 3, 4) ein Paar vibrationserzeugender Abschnitte einschließt,
die vibrationserzeugenden Abschnitte elektromagnetische Wellen erzeugen,
einer (0101, 0401) der beiden vibrationserzeugenden Abschnitte ein elektromagnetisches Feld einer ersten Frequenz an das Objekt anlegt, und
der andere (0102, 0402) des Paars vibrationserzeugender Abschnitte ein elektromagnetisches Feld mit einer zweiten Frequenz, die sich von der ersten Frequenz unterscheidet, an das Objekt anlegt.

30. Transportverfahren, das eine Vorrichtung zur Steuerung von Zutaten (10) verwendet, einschließend mindestens einen vibrationserzeugenden Abschnitt (3, 4), der so konfiguriert ist, dass er Vibrationen erzeugt, wobei das Verfahren umfasst:

Installieren eines Objekts, das so angeordnet ist, dass es dem vibrationserzeugenden Abschnitt gegenüberliegt; und
Transportieren des Objekts unter Erzeugung von Vibrationen durch den vibrationserzeugenden Abschnitt, um eine Zutat in dem Objekt so zu steuern, dass eine Grenzflächenspannung zwischen einer Wasserphase und einer anderen Phase verringert wird.

31. Transportverfahren, das eine Vorrichtung zur Steuerung von Zutaten (10) verwendet, einschließend mindestens einen vibrationserzeugenden Abschnitt (3, 4), der so konfiguriert ist, dass er Vibrationen erzeugt, wobei das Verfahren umfasst:

Installieren eines Objekts, das so angeordnet ist, dass es dem vibrationserzeugenden Abschnitt gegenüberliegt;
Erzeugen von Vibrationen durch den vibrationserzeugenden Abschnitt, um eine Zutat in dem Objekt so zu steuern, dass eine Grenzflächenspannung zwischen einer Wasserphase und einer anderen Phase verringert wird;
Entfernen des Objekts aus der Vorrichtung zur Steuerung von Zutaten nach Ablauf einer vorgegebenen Zeitspanne; und
Transportieren des Objekts im Anschluss.

32. Kochverfahren, das eine Vorrichtung zur Steuerung der Zutaten (4001, 4010) verwendet einschließend mindestens einen vibrationserzeugenden Abschnitt (3, 4), der so konfiguriert ist, dass er Vibrationen erzeugt, und einem Ölreservoir (4006, 4011), in dem die vibrationserzeugenden Abschnitte installiert sind, wobei das Verfahren umfasst:

Lagern von Öl im Ölreservoir;
Frittieren einer Zutat in Öl in dem Ölreservoir, in dem der vibrationserzeugende Abschnitt Vibrationen erzeugt, um eine Zutat in dem Objekt zu steuern, um eine Grenzflächenspannung zwischen einer Wasserphase und einer anderen Phase zu verringern und
Waschen der Zutat mit Wasser im Anschluss.

33. Kochverfahren nach Anspruch 32, wobei nach dem Waschen der Zutat mit Wasser die Zutat gebacken wird.

34. Kochverfahren nach Anspruch 32, wobei nach dem Waschen der Zutat mit Wasser die Zutat gekocht wird.

35. Kochverfahren nach Anspruch 32, wobei nach dem Waschen der Zutat mit Wasser die Zutat gedämpft wird.

36. Kochverfahren nach einem der Ansprüche 32 bis 35, wobei die vibrationserzeugenden Abschnitte (3, 4) elektromagnetische Wellen erzeugen.

37. Kochverfahren nach einem der Ansprüche 32 bis 36, wobei

der vibrationserzeugende Abschnitt (3, 4) Elektroden einschließt, die so konfiguriert sind, dass sie elektromagnetische Wellen erzeugen,
das Ölreservoir einen Teil aufweist, der als eine Elektrode eines Elektrodenpaars dient, und einen anderen Teil, der als die andere Elektrode eines Elektrodenpaars dient, und
ein Isolierelement (12) zwischen dem Elektrodenpaar installiert ist, um das Elektrodenpaar voneinander zu trennen.

38. Programm, das, wenn es von einem Computer einer Vorrichtung zur Steuerung von Zutaten (0100, 0400), einschließend ein Paar vibrationserzeugender Abschnitte, die so konfiguriert sind, dass sie elektromagnetische Wellen erzeugen, um eine Zutat in dem Objekt so zu steuern, um die Grenzflächenspannung zwischen einer Wasserphase und einer anderen Phase zu verringert, ausgeführt wird, den Computer zur folgenden Ausführung veranlasst:

Anlegen eines elektromagnetischen Feldes einer ersten Frequenz durch einen (0101, 0401) des Paars vibrationserzeugenden Abschnitte an ein Objekt, das zwischen den beiden vibrationserzeugenden Abschnitten installiert ist; und
Anlegen eines elektromagnetischen Feldes mit einer zweiten Frequenz, die sich von der ersten Frequenz unterscheidet, durch den anderen (0102, 0402) des Paars vibrationserzeugender Abschnitte an das Objekt, das zwischen dem Paar vibrationserzeugender Abschnitte installiert ist.

**Revendications**

1. Dispositif (100, 0100, 0400, 10, 4001, 4010) de commande d'ingrédient comprenant au moins une portion (102, 0101, 0102, 0401, 0402, 3, 4) de génération de vibrations configurée pour générer des vibrations, dans lequel une vibration est générée par la portion de génération de vibrations pour commander un ingrédient dans un objet disposé pour faire face à la portion de génération de vibrations afin de diminuer une tension interfaciale entre une phase aqueuse et une autre phase.

2. Dispositif (100, 0100, 0400, 10, 4001, 4010) de commande d'ingrédient selon la revendication 1, dans lequel

la portion (102, 0101, 0102, 0401, 0402, 3, 4) de génération de vibrations inclut une électrode configurée pour générer des ondes électromagnétiques, et
une activité hydrique de l'objet est commandée en générant des ondes électromagnétiques par l'électrode.

3. Dispositif (100, 0100, 0400, 10, 4001, 4010) de commande d'ingrédient selon la revendication 2, dans lequel des ondes électromagnétiques sont générées par l'électrode afin d'augmenter la polarisation interfaciale entre une phase aqueuse et une autre phase de l'objet et ainsi diminuer une tension interfaciale entre la phase aqueuse et l'autre phase et lier l'eau dans l'objet dans une structure de chaîne de perles.

4. Dispositif (0100, 0400) de commande d'ingrédient selon la revendication 1, la revendication 2 ou la revendication 3, dans lequel

la portion (102, 0101, 0102, 0401, 0402, 3, 4) de génération de vibrations inclut une paire de portions de génération de vibrations,

le dispositif (0100, 0400) de commande d'ingrédient comprenant en outre :

une première portion circuit (0105, 0405) configurée pour appliquer un courant alternatif d'une première fréquence à une première portion (0101, 0401) de génération de vibrations de la paire de portions de génération de vibrations ; et

une seconde portion circuit (0106, 0406) configurée pour appliquer un courant alternatif d'une seconde fréquence à une seconde portion (0102, 0402) de génération de vibrations de la paire de portions de génération de vibrations.

5. Dispositif (0400) de commande d'ingrédient selon la revendication 4, comprenant en outre un dispositif (0413, 0414) de commande de fréquence configuré pour commander la première fréquence et la seconde fréquence à des fréquences différentes.

6. Dispositif (0400) de commande d'ingrédient selon la revendication 4 ou la revendication 5, dans lequel la première fréquence et la seconde fréquence sont au moins 10 kilohertz à au plus 150 kilohertz.

7. Dispositif (0400) de commande d'ingrédient selon la revendication 4 ou la revendication 5 ou la revendication 6, comprenant en outre un dispositif (0415, 0416) de commande de phase configuré pour commander une phase du courant alternatif de la première fréquence et du courant alternatif de la seconde fréquence.

8. Dispositif (0100, 0400) de commande d'ingrédient selon l'une quelconque des revendications 4 à 7, comprenant en outre :

une cuve de friture (1541) ; et

une portion (1542) de chauffage configurée pour chauffer la cuve de friture, dans lequel

les portions (1501, 1502) de génération de vibrations génèrent des ondes électromagnétiques, et

la paire de portions de génération de vibrations sont disposées pour former un champ électromagnétique dans la cuve de friture.

9. Dispositif (0100, 0400) de commande d'ingrédient selon l'une quelconque des revendications 4 à 7, comprenant en outre une cuve de trempage (1643) d'aliments apte à stocker un liquide consommable pour tremper des aliments (1661) afin de permettre au liquide consommable (1662) de pénétrer dans les aliments et/ou pour extraire un ingrédient des aliments dans le liquide consommable, dans lequel

les portions (1601, 1602) de génération de vibrations génèrent des ondes électromagnétiques, et

la paire de portions (1601, 1602) de génération de vibrations sont disposées pour former un champ électromagnétique dans la cuve de trempage d'aliments.

10. Dispositif (0100, 0400) de commande d'ingrédient selon l'une quelconque des revendications 4 à 7, comprenant en outre une portion (1744) de cuisson d'aliments à température élevée configurée pour chauffer des aliments (1761a, 1761b, 1761c) en tant qu'objet à température élevée, dans lequel

les portions (1701, 1702) de génération de vibrations génèrent des ondes électromagnétiques, et

la paire de portions de génération de vibrations sont disposées pour former un champ électromagnétique dans la portion de cuisson d'aliments à température élevée.

11. Dispositif (0100, 0400) de commande d'ingrédient selon l'une quelconque des revendications 4 à 7, comprenant en outre une portion (1845) de cuisson d'aliments à température ambiante dans laquelle des aliments (1861) en tant qu'objet sont placés à température ambiante, dans lequel

les portions (1801, 1802) de génération de vibrations génèrent des ondes électromagnétiques, et

la paire de portions de génération de vibrations sont disposées pour former un champ électromagnétique dans la portion de cuisson d'aliments à température ambiante.

12. Dispositif (0100, 0400) de commande d'ingrédient selon l'une quelconque des revendications 4 à 7, comprenant en outre une portion (1946) de cuisson d'aliments réfrigérés configurée pour réfrigérer des aliments (1961) en tant qu'objet, dans lequel

les portions (1901, 1902) de génération de vibrations génèrent des ondes électromagnétiques, et
la paire de portions de génération de vibrations sont disposées pour former un champ électromagnétique dans la portion de cuisson d'aliments réfrigérés.

13. Dispositif (0100, 0400) de commande d'ingrédient selon l'une quelconque des revendications 4 à 7, comprenant en outre une portion (2048) de cuisson d'aliments réfrigérés à basse température configurée pour stocker des aliments (2061) en tant qu'objet par réfrigération à basse température, dans lequel

les portions (2001, 2002) de génération de vibrations génèrent des ondes électromagnétiques, et
la paire de portions de génération de vibrations sont disposées pour former un champ électromagnétique dans la portion de cuisson d'aliments réfrigérés à basse température.

14. Dispositif (0100, 0400) de commande d'ingrédient selon l'une quelconque des revendications 4 à 7, comprenant en outre une portion (2149) de cuisson par décongélation d'aliments pour décongeler des aliments surgelés, dans lequel

les portions (2101, 2102) de génération de vibrations génèrent des ondes électromagnétiques, et
la paire de portions de génération de vibrations sont disposées pour former un champ électromagnétique dans la portion de cuisson par décongélation d'aliments.

15. Dispositif (0100, 0400) de commande d'ingrédient selon l'une quelconque des revendications 10 à 14, comprenant en outre une portion (2250) d'apport de vapeur configurée pour apporter de la vapeur d'eau et/ou de l'eau pulvérisée.

16. Dispositif (0100, 0400) de commande d'ingrédient selon l'une quelconque des revendications 4 à 7, comprenant en outre une portion (2351) de stockage d'aliments surgelés configurée pour stocker des aliments en tant qu'objet par congélation, dans lequel

les portions (2301, 2302) de génération de vibrations génèrent des ondes électromagnétiques, et
la paire de portions de génération de vibrations sont disposées pour former un champ électromagnétique dans la portion de stockage d'aliments surgelés.

17. Dispositif (10, 4001, 4010) de commande d'ingrédient selon la revendication 1, dans lequel la portion (102, 0101, 0102, 0401, 0402, 3, 4) de génération de vibrations inclut une paire de portions de génération de vibrations,

le dispositif (10, 4001, 4010) de commande d'ingrédient comprenant en outre une source d'alimentation (10) configurée pour générer un courant alternatif, dans lequel
une première portion (3) de génération de vibrations de la paire de portions de génération de vibrations est couplée à une électrode de la source d'alimentation, et
une seconde portion (4) de génération de vibrations de la paire de portions de génération de vibrations est couplée à une autre électrode de la source d'alimentation.

18. Dispositif (10, 4001, 4010) de commande d'ingrédient selon la revendication 17, dans lequel les portions (3, 4) de génération de vibrations sont des éléments de type feuille.

19. Dispositif (10) de commande d'ingrédient selon la revendication 17 ou la revendication 18, comprenant en outre un dispositif (6) de commande de température configuré pour commander la température ambiante.

20. Dispositif (10) de commande d'ingrédient selon la revendication 17, la revendication 18 ou la revendication 19, comprenant en outre un récipient (11) dans lequel est disposé l'objet, dans lequel

les portions (3, 4) de génération de vibrations sont des électrodes configurées pour générer des ondes électromagnétiques,
le récipient présente une partie servant de première électrode d'une paire des électrodes et une autre partie servant d'autre électrode de la paire des électrodes, et
un élément isolant (7) est installé entre la paire des électrodes pour séparer la paire des électrodes l'une de l'autre.

21. Procédé de commande d'ingrédient utilisant un dispositif (100, 0100, 0400, 10, 4001, 4010) de commande d'ingrédient incluant au moins une portion (102, 0101, 0102, 0401, 0402, 3, 4) de génération de vibrations configurée pour générer des vibrations,
le procédé comprenant la génération de vibrations par la portion de génération de vibrations pour commander un ingrédient dans un objet disposé pour faire face à la portion de génération de vibrations afin de diminuer une tension interfaciale entre une phase aqueuse et une autre phase.

22. Procédé de commande d'ingrédient selon la revendication 21, dans lequel

la portion (102, 0101, 0102, 0401, 0402, 3, 4) de génération de vibrations inclut une électrode configurée pour générer des ondes électromagnétiques, et
une activité hydrique de l'objet est commandée en générant des ondes électromagnétiques par l'électrode.

23. Procédé de commande d'ingrédient selon la revendication 21 ou la revendication 22, dans lequel des ondes électromagnétiques sont générées par l'électrode afin d'augmenter la polarisation interfaciale entre une phase aqueuse et une autre phase de l'objet afin de diminuer une tension interfaciale entre la phase aqueuse et l'autre phase et lier l'eau dans l'objet dans une structure de chaîne de perles.

24. Procédé de commande d'ingrédient selon la revendication 22, dans lequel un champ électrique CC est appliqué en tant que champ électrique de décalage à un champ électrique CA afin d'augmenter la polarisation interfaciale entre une phase aqueuse et une autre phase de l'objet afin de diminuer une tension interfaciale entre la phase aqueuse et l'autre phase et lier l'eau dans l'objet dans une structure de chaîne de perles.

25. Procédé de commande d'ingrédient selon la revendication 24, dans lequel le champ électrique CC d'approximativement +100 V est appliqué en tant que champ électrique de décalage sur le côté phase aqueuse par rapport à l'autre phase dans le champ électrique CA pour augmenter la polarisation interfaciale entre la phase aqueuse et l'autre phase de l'objet et diminuer ainsi la tension interfaciale entre la phase aqueuse et l'autre phase et lier l'eau dans l'objet dans une structure de chaîne de perles.

26. Procédé de commande d'ingrédient selon l'une quelconque des revendications 22 à 25, dans lequel les ondes électromagnétiques sont des ondes basse fréquence.

27. Procédé de commande d'ingrédient selon l'une quelconque des revendications 22 à 25, dans lequel les ondes électromagnétiques présentent une fréquence d'approximativement 10 kHz à approximativement 500 kHz.

28. Procédé de commande d'ingrédient selon l'une quelconque des revendications 22 à 27, dans lequel

l'eau dans l'objet est divisée en eau liée et eau libre, et
l'eau libre dans l'objet est liée dans une structure de chaîne de perles.

29. Procédé de commande d'ingrédient selon la revendication 21, dans lequel

la portion (102, 0101, 0102, 0401, 0402, 3, 4) de génération de vibrations inclut une paire de portions de génération de vibrations,
les portions de génération de vibrations génèrent des ondes électromagnétiques,
l'une (0101, 0401) de la paire de portions de génération de vibrations applique un champ électromagnétique d'une première fréquence à l'objet, et
l'autre (0102, 0402) de la paire de portions de génération de vibrations applique un champ électromagnétique d'une seconde fréquence différente de la première fréquence à l'objet.

30. Procédé de transport utilisant un dispositif (10) de commande d'ingrédient incluant au moins une portion (3, 4) de génération de vibrations configurée pour générer des vibrations, le procédé comprenant :

l'installation d'un objet disposé pour faire face à la portion de génération de vibrations ; et
le transport de l'objet tout en générant des vibrations par la portion de génération de vibrations pour commander un ingrédient dans l'objet afin de diminuer une tension interfaciale entre une phase aqueuse et une autre phase.

31. Procédé de transport utilisant un dispositif (10) de commande d'ingrédient incluant au moins une portion (3, 4) de génération de vibrations configurée pour générer des vibrations, le procédé comprenant :

l'installation d'un objet disposé pour faire face à la portion de génération de vibrations ;
la génération de vibrations par la portion de génération de vibrations pour commander un ingrédient dans l'objet afin de diminuer une tension interfaciale entre une phase aqueuse et une autre phase ;
le retrait de l'objet du dispositif de commande d'ingrédient après l'écoulement d'une période de temps prédéterminée ; et
ensuite le transport de l'objet.

32. Procédé de cuisson utilisant un dispositif (4001, 4010) de commande d'ingrédient incluant au moins une portion (3, 4) de génération de vibrations configurée pour générer des vibrations et un réservoir (4006, 4011) d'huile dans lequel sont installées les portions de génération de vibrations, le procédé comprenant :

le stockage d'huile dans le réservoir d'huile ;
la friture d'un ingrédient dans l'huile du réservoir d'huile dans lequel la portion de génération de vibrations génère des vibrations pour commander un ingrédient dans l'objet afin de diminuer une tension interfaciale entre une phase aqueuse et une autre phase et
ensuite le lavage de l'ingrédient à l'eau.

33. Procédé de cuisson selon la revendication 32, dans lequel, après le lavage de l'ingrédient à l'eau, l'ingrédient est cuit.

34. Procédé de cuisson selon la revendication 32, dans lequel, après le lavage de l'ingrédient à l'eau, l'ingrédient est bouilli.

35. Procédé de cuisson selon la revendication 32, dans lequel, après le lavage de l'ingrédient à l'eau, l'ingrédient est cuit à la vapeur.

36. Procédé de cuisson selon l'une quelconque des revendications 32 à 35, dans lequel les portions (3, 4) de génération de vibrations génèrent des ondes électromagnétiques.

37. Procédé de cuisson selon l'une quelconque des revendications 32 à 36, dans lequel

la portion (3, 4) de génération de vibrations inclut des électrodes configurées pour générer des ondes électromagnétiques,
le réservoir d'huile présente une partie servant de première électrode d'une paire des électrodes et une autre partie servant d'autre électrode de la paire des électrodes, et
un élément isolant (12) est installé entre la paire des électrodes pour séparer la paire des électrodes l'une de l'autre.

38. Programme qui, lorsqu'exécuté par un ordinateur d'un dispositif (0100, 0400) de commande d'ingrédient incluant une paire de portions de génération de vibrations configurées pour générer des ondes électromagnétiques pour commander un ingrédient dans l'objet afin de diminuer une tension interfaciale entre une phase aqueuse et une autre phase, amène l'ordinateur à mettre en oeuvre :

l'application d'un champ électromagnétique d'une première fréquence par l'une (0101, 0401) de la paire de portions de génération de vibrations à un objet installé entre la paire de portions de génération de vibrations ; et
l'application d'un champ électromagnétique d'une seconde fréquence différente de la première fréquence par l'autre (0102, 0402) de la paire de portions de génération de vibrations à l'objet installé entre la paire de portions de génération de vibrations.

# FIG. 1

100

DRIVE PORTION — 103

113

112

102

111

101

104

# FIG. 2

( WATER CONTROL )

| HEAT FOOD OIL | S1 |

| GENERATE ELECTROMAGNETIC WAVES | S2 |

| COOK | S3 |

( END )

## FIG. 3

(a)

(b)

# FIG. 4

(a)

### $10^{-3}$M OLEIC ACID HARVEST OIL/PHOSPHATE-BUFFERED SALINE

50KHz
200V$_{pp}$

$\gamma^* = 17.81$mN/m

(b)

### $10^{-3}$M SODIUM OLEATE HARVEST OIL/PHOSPHATE-BUFFERED SALINE

50KHz
200V$_{pp}$

$\gamma = 20.66$mN/m

# *FIG. 5*

$10^{-3}$M SODIUM OLEATE HARVEST OIL/PHOSPHATE-BUFFERED SALINE

50KHz

0V $_{pp}$

$\gamma = 20.87$mN/m

RATE OF CHANGE

DC ELECTRIC FIELD [V]

# FIG. 6

$10^{-3}$M SODIUM OLEATE HARVEST OIL/PHOSPHATE-BUFFERED SALINE

Chart plotting RATE OF CHANGE (y-axis, 0 to 1.2) versus FREQUENCY OF AC ELECTRIC FIELD [Hz] (x-axis, 0 to $10^5$). Labels: 0V offset, 200Vpp. PHOSPHATE-BUFFERED SALINE pH7.2 TO 7.4

# FIG. 7

10⁻³M SODIUM OLEATE HARVEST OIL/PHOSPHATE-BUFFERED SALINE

## FIG. 8

10⁻³M SODIUM OLEATE HARVEST OIL/PHOSPHATE-BUFFERED SALINE

# FIG. 9

$10^{-3}$M SODIUM OLEATE HARVEST OIL/SALINE

50KHz
200V $_{pp}$
$\gamma = 20.86$mN/m

SALINE pH5.4 TO 5.6

RATE OF CHANGE

DC ELECTRIC FIELD [V]

# FIG. 10

$10^{-3}$M SODIUM OLEATE HARVEST OIL/SALINE

## FIG. 11

$10^{-3}$M SODIUM OLEATE HARVEST OIL/SALINE

## FIG. 12

$10^{-3}$M SODIUM OLEATE HARVEST OIL/SALINE

−100V offset

200Vpp

SALINE pH5.4 TO 5.6

RATE OF CHANGE

FREQUENCY OF AC ELECTRIC FIELD [Hz]

## FIG. 13

$10^{-3}$M SODIUM OLEATE HARVEST OIL/PHOSPHATE-BUFFERED SALINE

50KHz
200V $_{pp}$

$\gamma^* = 15.30$mN/m

PHOSPHATE-BUFFERED SALINE pH7.2 TO 7.4

RATE OF CHANGE

DC ELECTRIC FIELD [V]

## FIG. 14

10⁻³M SODIUM OLEATE HARVEST OIL/SALINE

50KHz
200V$_{pp}$

$\gamma^* = 19.23mN/m$

SALINE pH5.4 TO 5.6

## FIG. 15

| E, Vpp/cm (50kHz, 0Voffset) | HARVEST OIL | | HARVEST OIL/SODIUM OLEATE | |
|---|---|---|---|---|
| | pH7.2 TO 7.4 PHOSPHATE-BUFFERED SALINE | pH5.4 TO 5.6 SALINE | pH7.2 TO 7.4 PHOSPHATE-BUFFERED SALINE | pH5.4 TO 5.6 SALINE |
| 0 | × | × | × | × |
| 200 | × | × | △ | △ |
| 500 | × | × | ○ | ○ |
| 1000 | × | × | ○ | ○ |
| 2000 | × | × | — | — |

○ : FORMATION OF PEARL CHAINS　△ : RESPONDED TO ELECTRIC FIELD　× : NOT CHANGED　— : UNOBSERVABLE DUE TO FLOW GENERATION

# FIG. 16

100μm

# FIG. 17

(a)  PHOSPHATE-BUFFERED SALINE (pH7.2 TO 7.4)

| Vpp/cm | 50Hz | 100Hz | 500Hz | 1kHz | 5kHz | 10kHz | 50kHz | 100kHz |
|---|---|---|---|---|---|---|---|---|
| 0 | × | × | × | × | × | × | × | × |
| 200 | × | × | × | × | × | × | × | × |
| 500 | × | × | × | × | × | × | × | × |
| 1000 | × | × | × | × | × | × | × | × |
| 2000 | × | × | × | × | × | × | × | × |

(b)  SALINE (pH5.4 TO 5.6)

| Vpp/cm | 50Hz | 100Hz | 500Hz | 1kHz | 5kHz | 10kHz | 50kHz | 100kHz |
|---|---|---|---|---|---|---|---|---|
| 0 | × | × | × | × | × | × | × | × |
| 200 | × | × | × | × | × | × | × | × |
| 500 | × | × | × | × | × | × | × | × |
| 1000 | × | × | × | × | × | × | × | × |
| 2000 | × | × | × | × | × | × | × | × |

○ : FORMATION OF PEARL CHAINS    △ : RESPONDED TO ELECTRIC FIELD    × : NOT CHANGED    ─ : UNOBSERVABLE DUE TO FLOW GENERATION

# FIG. 18

(a)  PHOSPHATE-BUFFERED SALINE (pH7.2 TO 7.4)

| Vpp /cm | 50Hz | 100Hz | 500Hz | 1kHz | 5kHz | 10kHz | 50kHz | 100kHz |
|---|---|---|---|---|---|---|---|---|
| 0 | × | × | × | × | × | × | × | × |
| 200 | △ | △ | △ | △ | △ | △ | △ | × |
| 500 | O/– | O/– | O | O | O | O | O | O |
| 1000 | – | – | O/– | O/– | O/– | O | O | O |
| 2000 | – | – | – | – | – | – | – | O |

(b)  SALINE (pH5.4 TO 5.6)

| Vpp /cm | 50Hz | 100Hz | 500Hz | 1kHz | 5kHz | 10kHz | 50kHz | 100kHz |
|---|---|---|---|---|---|---|---|---|
| 0 | × | × | × | × | × | × | × | × |
| 200 | △ | △ | △ | △ | △ | △ | △ | × |
| 500 | O | O | O | O | O | O | O | O |
| 1000 | – | – | – | O/– | O/– | O | O | O |
| 2000 | – | – | – | – | – | – | – | O |

O : FORMATION OF PEARL CHAINS     △ : RESPONDED TO ELECTRIC FIELD     × : NOT CHANGED     – : UNOBSERVABLE DUE TO FLOW GENERATION

# FIG. 19

— 0100

FOOD COMPOSITION CONTROL DEVICE

0107 — FIRST CONTROLLER          SECOND CONTROLLER — 0108

0105 — FIRST CIRCUIT PORTION          SECOND CIRCUIT PORTION — 0106

0103 — FIRST FREQUENCY          SECOND FREQUENCY — 0104

0101 — ANTENNA FUNCTION PORTION          ANTENNA FUNCTION PORTION — 0102

## FIG. 20

0210

0211

0212

0209

## FIG. 21

(a)

(b)

A1

B1

B2

B3

# FIG. 22

0400

FOOD COMPOSITION CONTROL DEVICE

| 0407 | FIRST CONTROLLER | SECOND CONTROLLER | 0408 |
|---|---|---|---|

0413 — FIRST FREQUENCY CONTROLLER

SECOND FREQUENCY CONTROLLER — 0414

0415 — FIRST PHASE CONTROLLER

SECOND PHASE CONTROLLER — 0416

0417 — FIRST TIMING CONTROLLER

SECOND TIMING CONTROLLER — 0418

0405 — FIRST CIRCUIT PORTION

SECOND CIRCUIT PORTION — 0406

0403 — FIRST FREQUENCY

SECOND FREQUENCY — 0404

0401 — ANTENNA FUNCTION PORTION

ANTENNA FUNCTION PORTION — 0402

## FIG. 23

(a)

0511   0512

A   B

(b)
—— WAVEFORM OF ELECTROMAGNETIC WAVE OF 50kHz (P WAVE)
---- WAVEFORM OF ELECTROMAGNETIC WAVE OF 47kHz (Q WAVE)

(c)   P WAVE +Q WAVE

## FIG. 24

(a)

0611   0612

A   B

(b)
—— WAVEFORM OF ELECTROMAGNETIC WAVE OF 50kHz (P WAVE)
---- WAVEFORM OF ELECTROMAGNETIC WAVE OF 30kHz (Q WAVE)

(c)   P WAVE +Q WAVE

# FIG. 25

(a)

(b)

(c)

(d)

# FIG. 26

(a)

(b)

(c)

(d)

# FIG. 27

(a)

0911    0912

A
50kHz
$\alpha = 0$

B
30kHz
$\alpha = 0$

(b)

(c)

0911    0912

A'
50kHz
$\alpha = 0$

B'
30kHz
$\alpha = \pi/2$

(d)

# FIG. 28A

# FIG. 28B

# FIG. 29A

## FIG. 29B

(a)

(b)

(c)

## FIG. 29C

(a)

(b)

(c)

(d)

## FIG. 30

LIPOPHILIC GROUP

HYDROPHILIC GROUP

# FIG. 31

HARDWARE DIAGRAM

# FIG. 32

```
        ╭─────────────╮
        │    START    │
        ╰─────────────╯
               │
   ┌───────────────────────────┐
   │ APPLY ELECTROMAGNETIC     │
   │ FIELD OF FIRST FREQUENCY  │── S1431
   │ TO FOOD BY FIRST          │
   │ CONTROLLER                │
   └───────────────────────────┘
               │
   ┌───────────────────────────┐
   │ APPLY ELECTROMAGNETIC     │
   │ FIELD OF SECOND FREQUENCY │
   │ DIFFERENT FROM FIRST      │── S1432
   │ FREQUENCY TO FOOD BY      │
   │ SECOND CONTROLLER         │
   └───────────────────────────┘
               │
        ╭─────────────╮
        │     END     │
        ╰─────────────╯
```

# FIG. 33A

1501

1502

HEATING PORTION

1542

1561

1541

# FIG. 33B

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 13 | 14 | 22 | 32 | 41 | 37 | 32 | 33 | 26 |
| | 5kHz | 14 | 27 | 39 | 41 | 52 | 51 | 55 | 36 | 24 |
| | 7.5kHz | 22 | 39 | 42 | 59 | 69 | 59 | 51 | 47 | 46 |
| | 10kHz | 32 | 41 | 59 | 71 | 83 | 77 | 65 | 61 | 42 |
| | 50kHz | 41 | 52 | 69 | 83 | 93 | 87 | 73 | 53 | 46 |
| | 100kHz | 37 | 51 | 59 | 77 | 87 | 91 | 84 | 60 | 32 |
| | 150kHz | 32 | 55 | 51 | 65 | 73 | 84 | 74 | 56 | 28 |
| | 175kHz | 33 | 36 | 47 | 61 | 53 | 60 | 56 | 49 | 21 |
| | 200kHz | 26 | 24 | 46 | 42 | 46 | 32 | 28 | 21 | 35 |
| PHASE DIFFERENCE $\pi/2$ | | FIRST FREQUENCY 100kHz | | | | SECOND FREQUENCY 150kHz | | EVALUATION RESULT 85 POINTS (+1) | | |

# FIG. 33C

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 40 | 45 | 42 | 46 | 45 | 44 | 45 | 44 | 40 |
| | 5kHz | 45 | 51 | 52 | 48 | 53 | 55 | 58 | 51 | 44 |
| | 7.5kHz | 42 | 52 | 58 | 59 | 61 | 62 | 61 | 55 | 46 |
| | 10kHz | 46 | 48 | 59 | 70 | 78 | 72 | 74 | 62 | 55 |
| | 50kHz | 45 | 53 | 61 | 78 | 82 | 83 | 79 | 65 | 50 |
| | 100kHz | 44 | 55 | 62 | 72 | 83 | 89 | 81 | 64 | 52 |
| | 150kHz | 45 | 58 | 61 | 74 | 79 | 81 | 79 | 59 | 46 |
| | 175kHz | 44 | 51 | 55 | 62 | 65 | 64 | 59 | 49 | 44 |
| | 200kHz | 40 | 44 | 46 | 55 | 50 | 52 | 46 | 44 | 45 |
| PHASE DIFFERENCE $\pi/2$ | | FIRST FREQUENCY 100kHz | | | SECOND FREQUENCY 150kHz | | EVALUATION RESULT 82 POINTS (+1) | | | |

## FIG. 34A

## FIG. 34B

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 33 | 38 | 42 | 41 | 45 | 41 | 45 | 37 | 34 |
| | 5kHz | 38 | 40 | 45 | 50 | 48 | 51 | 52 | 40 | 38 |
| | 7.5kHz | 42 | 45 | 50 | 58 | 62 | 55 | 54 | 47 | 44 |
| | 10kHz | 41 | 50 | 58 | 70 | 72 | 75 | 80 | 68 | 50 |
| | 50kHz | 45 | 48 | 62 | 72 | 84 | 89 | 78 | 60 | 51 |
| | 100kHz | 41 | 51 | 55 | 75 | 89 | 92 | 82 | 60 | 51 |
| | 150kHz | 45 | 52 | 54 | 80 | 78 | 82 | 81 | 57 | 43 |
| | 175kHz | 37 | 40 | 47 | 68 | 60 | 60 | 57 | 50 | 41 |
| | 200kHz | 34 | 38 | 44 | 50 | 51 | 51 | 43 | 41 | 33 |

| PHASE DIFFERENCE π/2 | FIRST FREQUENCY 100kHz | SECOND FREQUENCY 150kHz | EVALUATION RESULT 83 POINTS (+1) |
|---|---|---|---|

# FIG. 34C

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 40 | 45 | 44 | 50 | 48 | 50 | 49 | 38 | 40 |
| | 5kHz | 45 | 49 | 51 | 55 | 59 | 58 | 52 | 50 | 45 |
| | 7.5kHz | 44 | 51 | 50 | 61 | 66 | 69 | 61 | 53 | 51 |
| | 10kHz | 50 | 55 | 61 | 75 | 81 | 78 | 77 | 61 | 53 |
| | 50kHz | 48 | 59 | 66 | 81 | 80 | 89 | 78 | 60 | 40 |
| | 100kHz | 50 | 58 | 69 | 78 | 89 | 90 | 81 | 60 | 47 |
| | 150kHz | 49 | 52 | 61 | 77 | 78 | 81 | 79 | 58 | 46 |
| | 175kHz | 38 | 50 | 53 | 61 | 60 | 60 | 58 | 52 | 42 |
| | 200kHz | 40 | 45 | 51 | 53 | 40 | 47 | 46 | 42 | 41 |

| PHASE DIFFERENCE $\pi/2$ | FIRST FREQUENCY 100kHz | SECOND FREQUENCY 150kHz | EVALUATION RESULT 82 POINTS (+1) |
|---|---|---|---|

# FIG. 34D

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 38 | 39 | 41 | 45 | 45 | 47 | 44 | 41 | 42 |
| | 5kHz | 39 | 45 | 47 | 51 | 55 | 51 | 48 | 42 | 41 |
| | 7.5kHz | 41 | 47 | 49 | 60 | 62 | 66 | 51 | 57 | 47 |
| | 10kHz | 45 | 51 | 60 | 72 | 77 | 71 | 68 | 61 | 52 |
| | 50kHz | 45 | 55 | 62 | 77 | 81 | 79 | 75 | 63 | 54 |
| | 100kHz | 47 | 51 | 66 | 71 | 79 | 81 | 76 | 60 | 48 |
| | 150kHz | 44 | 48 | 61 | 68 | 75 | 76 | 71 | 63 | 51 |
| | 175kHz | 41 | 42 | 57 | 61 | 63 | 60 | 63 | 57 | 41 |
| | 200kHz | 42 | 41 | 47 | 52 | 54 | 48 | 51 | 41 | 40 |

| PHASE DIFFERENCE π/2 | FIRST FREQUENCY 100kHz | SECOND FREQUENCY 150kHz | EVALUATION RESULT 77 POINTS (+1) |
|---|---|---|---|

# FIG. 34E

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 19 | 22 | 35 | 40 | 38 | 36 | 31 | 27 | 20 |
| | 5kHz | 22 | 30 | 40 | 40 | 44 | 43 | 37 | 28 | 24 |
| | 7.5kHz | 35 | 40 | 50 | 51 | 62 | 54 | 46 | 40 | 38 |
| | 10kHz | 40 | 40 | 51 | 64 | 77 | 72 | 66 | 56 | 48 |
| | 50kHz | 38 | 44 | 62 | 77 | 79 | 74 | 69 | 57 | 48 |
| | 100kHz | 36 | 43 | 54 | 72 | 74 | 81 | 72 | 62 | 44 |
| | 150kHz | 31 | 37 | 46 | 66 | 69 | 72 | 75 | 58 | 47 |
| | 175kHz | 27 | 28 | 40 | 56 | 57 | 62 | 58 | 48 | 37 |
| | 200kHz | 20 | 24 | 38 | 48 | 48 | 44 | 47 | 37 | 28 |
| PHASE DIFFERENCE $\pi/2$ | | FIRST FREQUENCY 100kHz | | | SECOND FREQUENCY 150kHz | | | EVALUATION RESULT 73 POINTS (+1) | | |

# FIG. 34F

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 18 | 20 | 22 | 30 | 37 | 40 | 36 | 32 | 32 |
| | 5kHz | 20 | 31 | 40 | 50 | 65 | 50 | 45 | 42 | 35 |
| | 7.5kHz | 22 | 40 | 42 | 52 | 60 | 64 | 48 | 38 | 42 |
| | 10kHz | 30 | 50 | 52 | 65 | 77 | 85 | 83 | 64 | 52 |
| | 50kHz | 37 | 65 | 60 | 77 | 90 | 92 | 87 | 71 | 58 |
| | 100kHz | 40 | 50 | 64 | 85 | 92 | 94 | 88 | 60 | 52 |
| | 150kHz | 36 | 45 | 48 | 83 | 87 | 88 | 81 | 59 | 48 |
| | 175kHz | 32 | 42 | 38 | 64 | 71 | 60 | 59 | 61 | 48 |
| | 200kHz | 32 | 35 | 42 | 52 | 58 | 52 | 48 | 48 | 32 |

| PHASE DIFFERENCE π/2 | FIRST FREQUENCY 100kHz | SECOND FREQUENCY 150kHz | EVALUATION RESULT 90 POINTS (+2) |
|---|---|---|---|

# FIG. 35A

(a)

1702

B

1701, 1744

A

1761a

HIGH TEMPERATURE
CONTROLLER

(b)

1761b    1761c

A    B

1701

1761a    HIGH TEMPERATURE    1744
         CONTROLLER

1702

(c)

1761b    1702    1761c

B

A

1761a

1701, 1744

HIGH TEMPERATURE
CONTROLLER

(d)

1761b    1761c

A    B

1701

1761a

1702

1744

HIGH TEMPERATURE
CONTROLLER

# FIG. 35B

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 52 | 54 | 57 | 62 | 56 | 54 | 57 | 52 | 54 |
| | 5kHz | 54 | 61 | 58 | 64 | 68 | 65 | 62 | 66 | 61 |
| | 7.5kHz | 57 | 58 | 61 | 65 | 69 | 67 | 61 | 68 | 62 |
| | 10kHz | 62 | 64 | 65 | 77 | 81 | 82 | 81 | 67 | 58 |
| | 50kHz | 56 | 68 | 69 | 81 | 91 | 90 | 81 | 72 | 61 |
| | 100kHz | 54 | 65 | 67 | 82 | 90 | 94 | 83 | 60 | 59 |
| | 150kHz | 57 | 62 | 61 | 81 | 81 | 83 | 79 | 61 | 61 |
| | 175kHz | 52 | 66 | 68 | 67 | 72 | 60 | 61 | 59 | 57 |
| | 200kHz | 54 | 61 | 62 | 58 | 61 | 59 | 61 | 57 | 55 |
| PHASE DIFFERENCE $\pi/2$ | | FIRST FREQUENCY 100kHz | | | | SECOND FREQUENCY 150kHz | | EVALUATION RESULT 84 POINTS (+1) | | |

# FIG. 35C

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 23 | 23 | 32 | 45 | 47 | 49 | 42 | 32 | 25 |
| | 5kHz | 23 | 30 | 35 | 43 | 44 | 51 | 51 | 41 | 21 |
| | 7.5kHz | 32 | 35 | 47 | 61 | 62 | 58 | 52 | 44 | 38 |
| | 10kHz | 45 | 43 | 61 | 71 | 70 | 67 | 64 | 61 | 49 |
| | 50kHz | 47 | 44 | 62 | 70 | 89 | 82 | 70 | 57 | 51 |
| | 100kHz | 49 | 51 | 58 | 67 | 82 | 80 | 65 | 60 | 47 |
| | 150kHz | 42 | 51 | 52 | 64 | 70 | 65 | 60 | 62 | 43 |
| | 175kHz | 32 | 41 | 44 | 61 | 57 | 60 | 62 | 51 | 42 |
| | 200kHz | 25 | 21 | 38 | 49 | 51 | 47 | 43 | 42 | 36 |

| PHASE DIFFERENCE π/2 | FIRST FREQUENCY 100kHz | SECOND FREQUENCY 150kHz | EVALUATION RESULT 65 POINTS (+1) |
|---|---|---|---|

# FIG. 35D

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 24 | 26 | 25 | 28 | 30 | 35 | 32 | 27 | 29 |
| | 5kHz | 26 | 32 | 35 | 38 | 45 | 42 | 41 | 38 | 35 |
| | 7.5kHz | 25 | 35 | 41 | 57 | 59 | 58 | 52 | 49 | 36 |
| | 10kHz | 28 | 38 | 57 | 68 | 72 | 71 | 70 | 58 | 47 |
| | 50kHz | 30 | 45 | 59 | 72 | 90 | 80 | 70 | 55 | 50 |
| | 100kHz | 35 | 42 | 58 | 71 | 80 | 81 | 78 | 60 | 51 |
| | 150kHz | 32 | 41 | 52 | 70 | 70 | 78 | 76 | 60 | 54 |
| | 175kHz | 27 | 38 | 49 | 58 | 55 | 60 | 60 | 52 | 38 |
| | 200kHz | 29 | 35 | 36 | 47 | 50 | 51 | 54 | 38 | 41 |

| PHASE DIFFERENCE $\pi/2$ | FIRST FREQUENCY 100kHz | SECOND FREQUENCY 150kHz | EVALUATION RESULT 79 POINTS (+1) |
|---|---|---|---|

## FIG. 36A

## FIG. 36B

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 12 | 20 | 32 | 47 | 48 | 47 | 38 | 39 | 35 |
| | 5kHz | 20 | 20 | 35 | 48 | 49 | 47 | 42 | 40 | 37 |
| | 7.5kHz | 32 | 35 | 38 | 57 | 58 | 59 | 55 | 47 | 45 |
| | 10kHz | 47 | 48 | 57 | 61 | 76 | 85 | 79 | 59 | 44 |
| | 50kHz | 48 | 49 | 58 | 76 | 84 | 89 | 75 | 55 | 50 |
| | 100kHz | 47 | 47 | 59 | 85 | 89 | 91 | 78 | 56 | 54 |
| | 150kHz | 38 | 42 | 55 | 79 | 75 | 78 | 74 | 57 | 50 |
| | 175kHz | 39 | 40 | 47 | 59 | 55 | 56 | 57 | 43 | 43 |
| | 200kHz | 35 | 37 | 45 | 44 | 50 | 54 | 50 | 43 | 32 |
| PHASE DIFFERENCE $\pi/2$ | | FIRST FREQUENCY 100kHz | | | SECOND FREQUENCY 150kHz | | EVALUATION RESULT 79 POINTS (+1) | | | |

# FIG. 36C

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 43 | 45 | 44 | 47 | 46 | 45 | 44 | 46 | 43 |
| | 5kHz | 45 | 43 | 50 | 52 | 55 | 57 | 53 | 51 | 48 |
| | 7.5kHz | 44 | 50 | 60 | 59 | 61 | 62 | 55 | 55 | 51 |
| | 10kHz | 47 | 52 | 59 | 72 | 75 | 77 | 73 | 59 | 54 |
| | 50kHz | 46 | 55 | 61 | 75 | 82 | 84 | 78 | 59 | 51 |
| | 100kHz | 45 | 57 | 62 | 77 | 84 | 83 | 74 | 61 | 49 |
| | 150kHz | 44 | 53 | 55 | 73 | 78 | 74 | 76 | 55 | 47 |
| | 175kHz | 46 | 51 | 55 | 59 | 59 | 61 | 55 | 60 | 45 |
| | 200kHz | 43 | 48 | 51 | 54 | 51 | 49 | 47 | 45 | 43 |
| PHASE DIFFERENCE $\pi/2$ | | FIRST FREQUENCY 100kHz | | | SECOND FREQUENCY 150kHz | | | EVALUATION RESULT 75 POINTS (+1) | | |

# FIG. 37A

REFRIGERATING PORTION

1902

1961

1947

1902

1946

# FIG. 37B

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 31 | 35 | 37 | 41 | 47 | 50 | 52 | 42 | 32 |
| | 5kHz | 35 | 33 | 43 | 52 | 52 | 53 | 51 | 54 | 48 |
| | 7.5kHz | 37 | 43 | 46 | 59 | 61 | 61 | 64 | 47 | 45 |
| | 10kHz | 41 | 52 | 59 | 72 | 77 | 70 | 78 | 63 | 46 |
| | 50kHz | 47 | 52 | 61 | 77 | 81 | 84 | 81 | 61 | 45 |
| | 100kHz | 50 | 53 | 61 | 70 | 84 | 88 | 79 | 60 | 49 |
| | 150kHz | 52 | 51 | 64 | 78 | 81 | 79 | 76 | 61 | 44 |
| | 175kHz | 42 | 54 | 47 | 63 | 61 | 60 | 61 | 48 | 42 |
| | 200kHz | 32 | 48 | 45 | 46 | 45 | 49 | 44 | 42 | 36 |

| PHASE DIFFERENCE $\pi/2$ | FIRST FREQUENCY 100kHz | SECOND FREQUENCY 150kHz | EVALUATION RESULT 80 POINTS (+1) |
|---|---|---|---|

# FIG. 37C

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 36 | 38 | 41 | 47 | 47 | 44 | 41 | 35 | 37 |
| | 5kHz | 38 | 40 | 46 | 46 | 52 | 52 | 46 | 40 | 39 |
| | 7.5kHz | 41 | 46 | 51 | 61 | 63 | 59 | 62 | 51 | 43 |
| | 10kHz | 47 | 46 | 61 | 74 | 78 | 79 | 77 | 61 | 49 |
| | 50kHz | 47 | 52 | 63 | 78 | 86 | 81 | 75 | 59 | 51 |
| | 100kHz | 44 | 52 | 59 | 79 | 81 | 83 | 79 | 61 | 44 |
| | 150kHz | 41 | 46 | 62 | 77 | 75 | 79 | 72 | 61 | 45 |
| | 175kHz | 35 | 40 | 51 | 61 | 59 | 61 | 61 | 62 | 42 |
| | 200kHz | 37 | 39 | 43 | 49 | 51 | 44 | 45 | 42 | 38 |
| PHASE DIFFERENCE π/2 | | FIRST FREQUENCY 100kHz | | | SECOND FREQUENCY 150kHz | | | EVALUATION RESULT 80 POINTS (+1) | | |

# FIG. 38A

# FIG. 38B

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 30 | 31 | 32 | 41 | 42 | 40 | 35 | 33 | 30 |
| | 5kHz | 31 | 33 | 36 | 42 | 44 | 48 | 51 | 36 | 31 |
| | 7.5kHz | 32 | 36 | 47 | 56 | 59 | 57 | 53 | 41 | 38 |
| | 10kHz | 41 | 42 | 56 | 61 | 73 | 72 | 67 | 62 | 49 |
| | 50kHz | 42 | 44 | 59 | 73 | 80 | 78 | 74 | 54 | 44 |
| | 100kHz | 40 | 48 | 57 | 72 | 78 | 79 | 68 | 55 | 48 |
| | 150kHz | 35 | 51 | 53 | 67 | 74 | 68 | 72 | 55 | 45 |
| | 175kHz | 33 | 36 | 41 | 62 | 54 | 55 | 55 | 47 | 41 |
| | 200kHz | 30 | 31 | 38 | 49 | 44 | 48 | 45 | 41 | 35 |

| PHASE DIFFERENCE $\pi/2$ | FIRST FREQUENCY 100kHz | SECOND FREQUENCY 150kHz | EVALUATION RESULT 69 POINTS (+1) |
|---|---|---|---|

# FIG. 39A

# FIG. 39B

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 31 | 33 | 35 | 32 | 41 | 46 | 45 | 35 | 33 |
| | 5kHz | 33 | 42 | 46 | 45 | 58 | 55 | 56 | 40 | 38 |
| | 7.5kHz | 35 | 46 | 48 | 62 | 59 | 61 | 63 | 53 | 42 |
| | 10kHz | 32 | 45 | 62 | 68 | 65 | 72 | 78 | 60 | 49 |
| | 50kHz | 41 | 58 | 59 | 65 | 82 | 78 | 75 | 58 | 46 |
| | 100kHz | 46 | 55 | 61 | 72 | 78 | 83 | 78 | 60 | 51 |
| | 150kHz | 45 | 56 | 63 | 78 | 75 | 78 | 75 | 62 | 51 |
| | 175kHz | 35 | 40 | 53 | 60 | 58 | 60 | 62 | 57 | 42 |
| | 200kHz | 33 | 38 | 42 | 49 | 46 | 51 | 51 | 42 | 38 |

| PHASE DIFFERENCE π/2 | FIRST FREQUENCY 100kHz | SECOND FREQUENCY 150kHz | EVALUATION RESULT 79 POINTS (+1) |
|---|---|---|---|

# FIG. 40A

# FIG. 40B

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 31 | 36 | 42 | 47 | 51 | 49 | 50 | 38 | 34 |
| | 5kHz | 36 | 39 | 47 | 49 | 55 | 52 | 51 | 41 | 36 |
| | 7.5kHz | 42 | 47 | 48 | 57 | 68 | 71 | 61 | 48 | 40 |
| | 10kHz | 47 | 49 | 57 | 73 | 82 | 78 | 74 | 57 | 41 |
| | 50kHz | 51 | 55 | 68 | 82 | 88 | 91 | 79 | 63 | 50 |
| | 100kHz | 49 | 52 | 71 | 78 | 91 | 90 | 78 | 63 | 52 |
| | 150kHz | 50 | 51 | 61 | 74 | 79 | 78 | 81 | 61 | 53 |
| | 175kHz | 38 | 41 | 48 | 57 | 63 | 63 | 61 | 45 | 42 |
| | 200kHz | 34 | 36 | 40 | 41 | 50 | 52 | 53 | 42 | 36 |

| PHASE DIFFERENCE π/2 | FIRST FREQUENCY 100kHz | SECOND FREQUENCY 150kHz | EVALUATION RESULT 79 POINTS (+1) |
|---|---|---|---|

# FIG. 41A

2301

2361

FREEZING CONTROLLER

2302

2351

# FIG. 41B

| PHASE DIFFERENCE 0 | | FIRST FREQUENCY | | | | | | | | |
|---|---|---|---|---|---|---|---|---|---|---|
| | | 0kHz | 5kHz | 7.5kHz | 10kHz | 50kHz | 100kHz | 150kHz | 175kHz | 200kHz |
| SECOND FREQUENCY | 0kHz | 18 | 21 | 25 | 28 | 22 | 24 | 19 | 20 | 19 |
| | 5kHz | 21 | 27 | 36 | 38 | 44 | 41 | 38 | 41 | 24 |
| | 7.5kHz | 25 | 36 | 41 | 48 | 61 | 53 | 52 | 44 | 23 |
| | 10kHz | 28 | 38 | 48 | 64 | 75 | 74 | 67 | 60 | 49 |
| | 50kHz | 22 | 44 | 61 | 75 | 81 | 78 | 82 | 58 | 51 |
| | 100kHz | 24 | 41 | 53 | 74 | 78 | 86 | 81 | 55 | 49 |
| | 150kHz | 19 | 38 | 52 | 67 | 82 | 81 | 74 | 58 | 41 |
| | 175kHz | 20 | 41 | 44 | 60 | 58 | 55 | 58 | 47 | 37 |
| | 200kHz | 19 | 24 | 23 | 49 | 51 | 49 | 41 | 37 | 26 |

| PHASE DIFFERENCE π/2 | FIRST FREQUENCY 100kHz | SECOND FREQUENCY 150kHz | EVALUATION RESULT 82 POINTS (+1) |
|---|---|---|---|

# FIG. 42

# FIG. 43

(a)

(b)

EP 3 627 967 B1

# FIG. 44

# FIG. 45

(a)

(b)

EP 3 627 967 B1

## FIG. 46

109

# FIG. 47

# FIG. 48

(a)

# EP 3 627 967 B1

## REFERENCES CITED IN THE DESCRIPTION

### Patent documents cited in the description

- JP 2016129672 A
- JP 4637051 B
- JP 2017100354 A
- JP 2017126102 A
- JP 2017153591 A